# FASCICULE DE BREVET EUROPEEN

(11) **EP 0 755 960 B1**
(45) Date de publication et mention de la délivrance du brevet: **27.11.2002**
(21) Numéro de dépôt: 96420251.9
(22) Date de dépôt: 25.07.1996
(51) Int. Cl.: C08G 77/385, C08G 77/382

(54) **Polyorganosiloxanes perfluorés polyfonctionnels et leurs procédés d'obtention**
Polyfunktionelle perfluorierte Polyorganosiloxane und Verfahren zu deren Herstellung
Polyfunctional perfluorinated polyorganosiloxanes and processes for their preparation

(30) Priorité: 25.07.1995 FR 9509268
(43) Date de publication de la demande: 29.01.1997
(73) Titulaire: RHODIA CHIMIE, 92408 Courbevoie Cédex (FR)
(72) Inventeur: Jost, Philippe, 69440 Taluyers (FR); Karrer, Philippe, 68200 Mulhouse-Bourtzwiller (FR); Mignani, Gérard, 69008 Lyon (FR); Olier, Philippe, 69007 Lyon (FR)
(74) Mandataire: Fleurance, Raphael

(56) Documents cités:
- EP-A- 0 246 913
- DE-A- 4 240 274
- FR-A- 2 483 437
- US-A- 5 233 071

## Description

Le domaine de l'invention est celui des polyorganosiloxanes (POS) (per)-halogénés issus d'une réaction d'hydrosilylation d'oléfines (per)-halogénées (e g. des α-oléfines), réaction que l'on peut également présenter comme étant l'addition d'un composé silicié hydrogéné sur un réactif halogéné présentant une ou plusieurs insaturation(s) ethylénique(s) ou alcynylique(s).

Sans que cela ne soit limitatif, l'halogène plus particulièrement visé est le fluor.

La présente invention concerne ainsi des (poly)organosiloxanes cycliques ou non halogénés - de préférence fluorés -, présentant au moins un atome de silicium substitué par au moins un radical halogéné **Rf** (e.g. fluoré).

La présente invention concerne également un procédé de préparation de tels composés.

Le rôle des halogènes et en particulier du fluor et de la liaison carbone/fluor, dans l'apport de propriétés spécifiques à des systèmes polymères organiques, est une notion bien connue en chimie des polymères.

On sait notamment que la fluoration et plus précisément l'introduction de motifs perfluorés dans les polymères, amène
- une modification des énergies de surface dans le sens de l'abaissement,
- une amélioration de la stabilité thermique et chimique,
- de même que des propriétés d'organophobie et d'oléophobie.

Depuis les années 1970, ce type de fonctionnalisation par halogénation, et en particulier par perfluoration, est appliqué à des polymères silicones, en particulier du type polyorganosiloxane cyclique ou non.

On dispose ainsi d'huiles silicones greffées par des motifs fluorés, qui trouvent des applications dans le domaine textile à titre d'agent anti-tâches ou anti-salissures ou qui peuvent être utilisées comme lubrifiant, comme agent anti-adhérent spécifique vis-à-vis de certains adhésifs (silicones à fort pouvoir adhésif), comme agent anti-gras, ou bien encore comme anti-mousse. Les fluides silicones fluorés peuvent être également formulés avec différents épaississants pour former des mastics ou tous autres matériaux d'étanchéification et/ou de jointage.

Sous forme réticulée, ces silicones fluorés peuvent être mis sous forme de diverses pièces techniques par moulage ou par extrusion.

Pour plus de détails sur ces silicones fluorés, on peut se référer à l'Article de OGDEN R. PIERCE intitulé "Fluorosilicons" - 1970 - John Wiley & Sons Inc. pages 1 à 15.

Une première stratégie de synthèse industrielle connue de silicones à motifs perfluorés, consiste essentiellement à "hydrosilyler" un dihalogénohydrogéno-organosilane, tel que le MeHSiCl₂ (Me = méthyle), par un composé insaturé porteur d'un motif perfluoré et de formule générale : CH₂=CH―**Rf** (**Rf** = motif perfluoré). L'addition du silane sur cette oléfine conduit à un dihalogénoorganosilane perfluoré, qui peut être hydrolysé de façon à produire un silicone fonctionnalisé, lequel peut être par exemple un tétramère cyclique. Il est possible de soumettre ce dernier à une redistribution pour obtenir un polyorganosiloxane (POS) linéaire perfluoré. Les réactions d'hydrosilylation qui interviennent dans ce genre de synthèse et qui mettent en oeuvre diverses combinaisons d'hybrides silicones et d'oléfines perfluorées, sont connues comme étant catalysés par des composés métalliques sélectionnés et en particulier certains métaux du groupe VIII tel que le platine. Des complexes Pt/Sn ont ainsi été employés à titre de catalyseur d'hydrosilylation - Cf. brevet **US N° 4 089 882** (SHINETSU). Cette stratégie de synthèse apparaît comme étant relativement complexe et donc coûteuse.

Dans un souci de simplification industrielle, il a été proposé une seconde stratégie de synthèse fondée sur l'hydrosilylation directe d'un silicone à motif SiH à l'aide d'oléfine α- fluorée e.g. du type CH₂=CH―**Rf,** ce motif perfluoré **Rf** étant rattaché directement au CH oléfinique par un atome de carbone porteur d'au moins un atome de fluor. Là encore divers catalyseurs métalliques du groupe VIII, en particulier à base de platine, sont utilisés dans le cadre de cette réaction d'hydrosilylation. Il s'est avéré cependant que ces catalyseurs ne permettaient pas d'atteindre des rendements très élévés. En particulier, les catalyseurs d'hydrosilylation industrielle classiques à base de platine (par exemple du type KARSTEDT) ne sont pas très efficaces. En outre, il a pu être constaté que d'importantes quantités de sous-produit sont générés et ce, bien évidemment, au détriment de la perfluoration des silicones. Dans ces POS perfluorés connus, le radical **Rf** est relié directement au Si de la chaîne silicone. En d'autres termes, la rotule correspond dans ce cas, à : -CH₂-CH₂-(CH₂)-ₘ avec m = 0.

Dans le brevet **US N° 5 233 071,** ce sont ces rotules qui sont mises en oeuvre. Elles proviennent de l'hydrosilylation d'α-oléfines. Mais pour pallier aux carences des catalyseurs d'hydrosilylation utilisés antérieurement, le procédé décrit dans ce brevet fait appel à des complexes organométalliques à base de cobalt [(Co₂CO₈, Co₂ CO₆) (PR₃)₃ avec R = alkyle, aryle]. Une telle proposition technique est apparue comme n'étant pas satisfaisante car les durées de réaction obtenues sont de l'ordre de quelques jours et il est indispensable d'utiliser une quantité importante de catalyseur (1-2 %), ce qui est particulièrement pénalisant pour l'économie du procédé.

Un inconvénient non négligeable de ces complexes à base de cobalt est qu'ils catalysent d'autres réactions que l'hydrosilylation. En particulier, ils peuvent participer à des processus de polymérisation par rupture de cycles époxy. Ce manque de spécificité est particulièrement gênant. En outre, ces catalyseurs ne sont pas industriels.

Le brevet **US N° 5 348 769** divulgue des polyorganosiloxanes linéaires ou cycliques, comprenant des motifs siloxyles **D** substitués par un premier motif fonctionnel perfluoré de formule -R³ Z**Rf** ainsi que d'autres motifs siloxyles **D,** porteurs d'un deuxième type de motif fonctionnel du type étherhydroxyle ou alkylhydroxyle. La rotule ou le pont reliant Si à **Rf** du premier motif fonctionnel perfluoré, est constitué notamment par : -(CH₂)ₓ Z avec x = 2,3 ou 4 et Z = NHCO, NHSO₂, O₂C, O₃S, OCH₂CH₃, NHCH₂CH₂ ou CH₂CHOHCH₂. Le catalyseur mis en oeuvre est, de préférence, l'acide chloroplatinique. Une telle technique n'est pas des plus simples, car elle nécessite la préparation préalable du réactif oléfinique perfluoroalkylé. Ceci allonge notablement les durées de synthèse et par suite cela augmente le coût de revient du procédé.

Hormis ces rotules dont les précurseurs sont des α-oléfines perfluoroalkylées de formule CH₂ = CH - **Rf,** la littérature technique antérieure décrit également des ponts dont les précurseurs oléfiniques sont du type CH₂=CH- 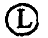 -Rf ; la liaison chimique entre 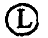 et **Rf** étant une liaison ester. Cette dernière résulte de la réaction d'une fonction carboxylique avec un alcool perhalogéné, de préférence perfluoré. Et généralement, ladite fonction carboxylique est le produit de l'hydrolyse d'un anhydride d'acide.

C'est ainsi que la demande de brevet PCT **WO 94/12561** divulgue des POS greffés par des motifs fluorés uniquement en position α et ω aux extrémités des chaînes silicones. Ces POS α-ω alkylesterperfluorés ne présentent pas des propriétés optimales, en ce qui concerne l'abaissement de tension de surface ainsi que l'oléophobie et l'hydrophobie.

La demande de brevet européen **N° 0 640 644** décrit quant à elle, des dérivés silicones perfluorés (**Rf**), utilisables dans des formulations cosmétiques. Ces dérivés silicones perfluorés sont caractérisés par des motifs siloxyles D, porteurs de greffons perfluorés de trois types différents, à savoir : 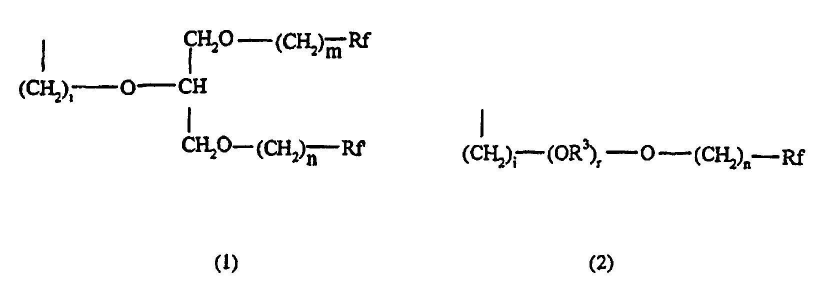 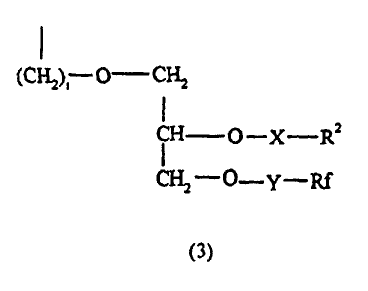
avec R², R³ = alkyle, e.g. CH₃ ;
2 ≤ i ≤ 16, e.g. i = 3 ; 1 ≤ m,n ≤ 6 ; ≤ p ≤ 200 ; 0 ≤ r ≤50 ;
le nombre de motifs siloxyles D ainsi greffés étant compris entre 1 et 200 ;
X, Y = simple liaison, -CO-, alkylène en C₁-C₆ ;

Ces greffons perfluorés (**1**) à (**3**) ont en commun la présence de liaisons étheroxydes au sein de la rotule reliant le radical perfluoré **Rf** au silicium. Ces liaisons éthers constituent autant de points de rupture possible par attaque chimique, sous certaines conditions.

Il s'agit là d'un inconvénient majeur pour ces POS perfluorés connus, car il est clair que dans certaines applications, le caractère labile des fonctions perfluorés n'est pas admissible.

Il ressort de cette revue de l'art antérieur qu'il n'existe pas de POS halogénés - de préférence (per)fluorés-, chimiquement stables, et comprenant d'une part des greffons latéraux fluorés résultant de l'hydrosilylation d'oléfines perfluorées par des SiH et présentant des rotules alkyles et/ou alkylesters, à l'exclusion des éthers, et, d'autre part, d'autres motifs fonctionnels non perfluorés aptes à leur conférer des propriétés physiques et chimiques diverses et variées, ce qui leur offre des débouchés dans de nombreuses applications.

De plus, l'art antérieur divulgue encore moins de tels POS susceptibles d'être obtenus d'une manière simple, économique et donc parfaitement industrielle.

Dans ces circonstances, l'un des objectifs essentiels de la présente invention est de pallier cette carence en de tels POS halogénés - de préférence (per)fluorés -, et mieux encore de fournir de nouveaux POS perfluorés possédant un premier type de greffons fonctionnels non perfluorés et un deuxième type de greffons perfluorés bifides présentant chacun une ou deux chaînes perfluorées parallèles, lesdits POS étant ainsi dotés d'un caractère cristallin, les rendant particulièrement adaptés à l'application anti-salissures.

Un autre objectif essentiel de l'invention est de fournir un procédé de préparation de POS halogénés - de préférence (per)fluorés - ce procédé étant du type de ceux dans lesquels on fait réagir au moins une oléfine halogénée (e.g.fluoré) et au moins un précurseur oléfinique d'une fonctionnalité différente des greffons fluorés ou susceptible de l'être avec un POS comportant au moins un motif SiH et en présence d'une quantité efficace de catalyseur selon un mécanisme d'hydrosilylation ;
ledit procédé se devant de mettre en oeuvre des produits de départ disponibles ou aisément préparables et se devant également de reposer sur une méthodologie simple à mettre en oeuvre, ne nécessitant pas d'équipements sophistiqués et permettant d'atteindre de hautes performances de rendement et de pureté en POS perfluorés finaux.

Un autre objectif essentiel de l'invention est d'offrir un procédé de perhalogénation (perfluoration) du type de celui sus-mentionné, qui soit caractérisé par une excellente cinétique d'hydrosilylation et par un fort taux de conversion des motifs SiH en motifs Si**RoRf** avec **Ro** = pont divalent et **Rf** = motif perfluoré.

Un autre objectif essentiel de la présente invention est de mettre à disposition un procédé de perhalogénation - de préférence (per)fluoration - de POS porteurs de SiH, qui permettent de recourir à des catalyseurs d'hydrosilylation traditionnels, simples à manipuler et peu onéreux, par exemple de nature platinique (KARSTEDT), et ce, sans sacrifier aux impératifs d'efficacité optimale, de rendement, de pureté des produits finaux, et de spécificité.

Un autre objectif essentiel de l'invention est que le susdit procédé permette d'obtenir de manière simple et économique des POS (e.g. huile silicone) perfluorés qui soient au moins difonctionnels.

Ces objectifs, parmi d'autres, sont atteints par la présente invention qui concerne principalement de nouveaux POS perfluorés, ainsi qu'un nouveau procédé de perhalogénation - de préférence perfluoration - par hydrosilylation de POS porteurs de SiH, ledit procédé étant l'un de ceux permettant d'obtenir les nouveaux POS précités.

La présente invention a donc, tout d'abord, pour objet des polyorganosiloxanes (POS) (per)fluorés, de formules générales (**I**) et (**I'**) suivantes : 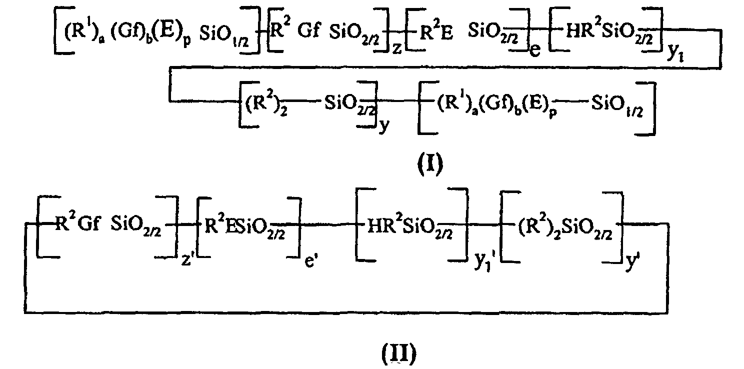 dans lesquelles :
- a + b + p = 3 ; a = 2, 3 ; b, p = 0, 1 ;
   z étant compris entre 0 et 200, de préférence entre 1 et 90,
   y₁ étant compris entre 0 et 10, de préférence entre 0 et 5,
   y étant compris entre 0 et 50, de préférence 0 et 25,
   e étant compris entre 1 et 200, de préférence entre 1 et 90,
   **avec les conditions** selon lesquelles :
   Δ si z ≠ 0, alors 5 ≤ z + y₁ + y + e ≤ 200, de préférence 10 ≤ z + y₁ + y + e ≤ 100 et [z/(z + y + y₁ + e + 2)]. 100 ≥ 3, de préférence 5,
   Δ si z = 0, alors 5 ≤ y + y₁ + e ≤ 100, b étant ≠ de 0 dans au moins l'un des motifs siloxyles terminaux M monovalents,
   Δ si e ≠ 0, alors 5 ≤ z + y₁ + y + e ≤ 200, de préférence 10 ≤ z + y₁ + y + e ≤ 100 et [z/(z + y + y₁ + e + 2)]. 100 ≥ 3, de préférence 5,
   Δ et si e = 0, alors 5 ≤ y + y₁ + z ≤ 100, p étant ≠ 0 dans au moins l'un des motifs M,
- 1 ≤ z' ≤ 9 ; de préférence 1 ≤ z' ≤ 4,5 ;
- 0 ≤ y'₁ ≤ 0,5 ; de préférence 0 ≤ y'₁ ≤ 0,25 ;
- 0 ≤ y' ≤ 5 ; de préférence 0 ≤ y' ≤ 0,5 ;
- chaque radical R¹, R², d'une part, est identique ou différent de ses semblables de même exposant et de l'autre radical d'exposant différent et, d'autre part, représente un groupement (cyclo)alkyle linéaire ou ramifié en C₁-C₁₂, - de préférence C₁-C₆ -, un aryle, un aralkyle, un alkylaryle, ces groupements étant éventuellement substitués,
- **Gf** est un reste monovalent fonctionnel éventuellement (per)fluoré, de nature identique ou différente dans les z ou z' motifs siloxyles D et/ou les deux motifs siloxyles M où il est présent et répondant à la formule moyenne ci-après : 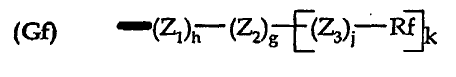
   Δ avec h = 0,1 ; g = 0,1 ;j = 0,1 et k = 1 ou 2 ;
   Δ **avec la condition** selon laquelle au moins un reste **Gf** est présent dans ledit POS (I) ou (II), de préférence, les restes **Gf** sont présents au moins à hauteur de 60 % molaire ;
   Δ Z₁ étant un radical divalent de formule : 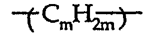 avec m ≥ 2 ;
   Δ Z₂ étant un radical mono, di ou trivalent de formule :
      . α. 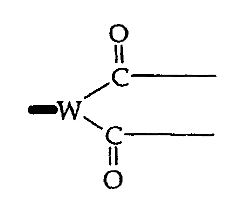
      . l'une ou les deux valences libres du (ou des) carbonyle(s) étant reliées à -Z₃Rf et, dans le cas où l'une seulement des susdites valences libres est reliée à -Z₃Rf, alors l'autre est reliée à un hydroxyle,
      . β. 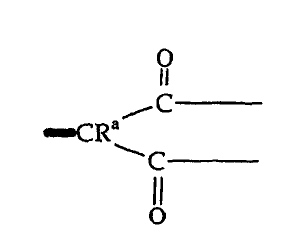 au moins l'une des valences libres des carbonyles étant reliée à -Z₃-Rf, et, dans le cas où l'une seulement de ces valences libres est reliée à -Z₃-Rf, alors l'autre est reliée à un alcoxyle en C₁-C₆, linéaire ou ramifié.
      . R^{a} = H, aryle ou alkyle inférieur linéaire ou ramifié en C₁-C₆, de préférence CH₃ ;
      . γ. 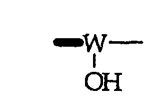
      . δ. 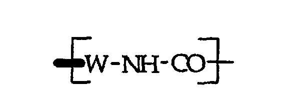
      . ε. 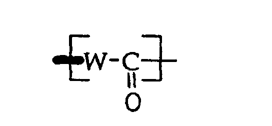
      . η. 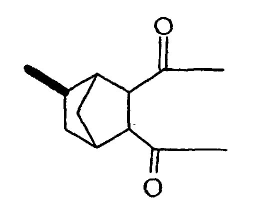
         . h = 0 dans **Gf**,
         . l'une ou les deux valences libres du (ou des) carbonyle(s) étant reliées à -Z₃-Rf et, dans le cas où l'une seulement des susdites valences libres est reliée à -Z₃Rf, alors l'autre est reliée à un hydroxyle ou à un alcoxyle en C₁-C₆ linéaire ou ramifié,
      . θ. 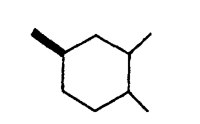
      . l'une et/ou l'autre des deux valences libres différentes de la valence **―**, étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ;
      . λ. 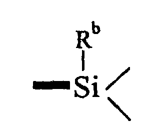
      . l'une et/ou l'autre des deux valences libres différentes de la valence 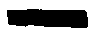 , étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ;
      . R^{b} = H ou alkyle inférieur en C₁-C₆ linéaire ou ramifié ; le méthyle étant préféré,
         → W représentant un radical hydrocarboné cyclique ou non, en particulier aliphatique et/ou alcényle et/ou alcynyle et/ou aromatique, W étant, en outre exempt de liaison étheroxyde - O - ;
   Δ Z₃ est un radical divalent de formule : 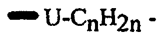
      - avec n ≥ 1 et U = O, S, NH, NHSO₂, de préférence O ;
   Δ et Rf étant un radical perfluoré, et plus préférentiellement encore un radical perfluoroalkyle linéaire ou ramifié répondant à l'une des formules suivantes :
      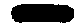 C_{q}F_{2q} - CF₃ avec q ≥ 0,
      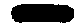 C_{q}F_{2q} - H avec q ≥ 1 ;
      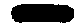 NR^{rf}SO₂ Cq F₂q - CF₃ avec q ≥ 0 et R^{rf} = H, aryle, ou alkyle inférieur en C₁-C₆ linéaire ou ramifié (de préférence CH₃);
      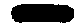 NR^{rf}SO₂ Cq F₂q - H avec q ≥ 1 et R^{rf} tel que défini supra ;
- E est un reste fonctionnel monovalent, différent de **Gf** ci-dessus défini, de nature identique ou différente dans les e ou e' motifs siloxyles D et/ou les deux motifs siloxyles M où il est présent et choisi, de préférence, parmi les groupements présentant au moins l'une des fonctionnalités suivantes E₁ à E₁₃ :
   Δ E₁ = 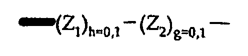 dans laquelle :
      * Z₁ répond à la même définition que celle donnée supra pour la définition de **Gf**, avec m ≥ 2,
      * Z₂ correspond à :
         . αe. 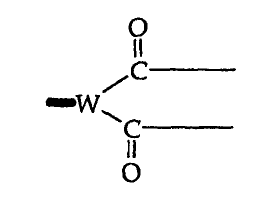 avec au moins l'une des valences libres d'un carbonyle liée à un OH, ou bien encore ces deux valences libres sont toutes deux reliées à un même atome d'oxygène,
         . βe. 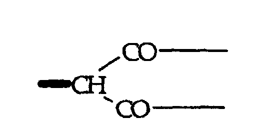 avec les deux valences libres des carbonyles liées chacune à un alcoxyle en C₁-C₆, linéaire ou ramifié,
         . γe. 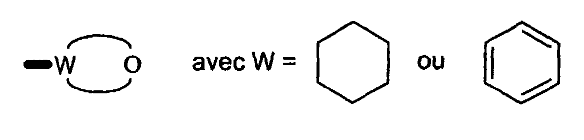
         . δe. 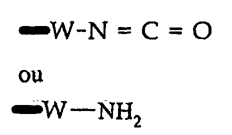
         . εe. 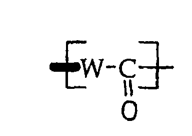 la valence libre du carbonyle étant reliée à un alcoxyle en C₁-C₆, linéaire ou ramifié, ou bien encore à un OH,
         . ηe. 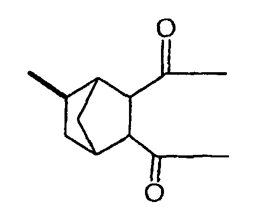 avec au moins l'une des valences libres d'un carbonyle liée à un OH à un alcoxyle en C₁-C₆ linéaire ou ramifié, ou bien encore ces deux valences libres étant toutes deux reliées à un même atome d'oxygène ;
         . θe. 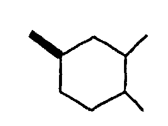
            . l'une et/ou l'autre des deux valences libres différentes de la valence 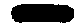 , étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ;
         . λe. 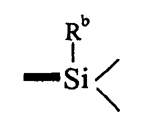
         . R^{b} = H ou alkyle inférieur en C₁-C₆ linéaire ou ramifié ; le méthyle étant préféré,
      * Z₁, Z₂ étant identiques ou différents à leurs correspondants intervenant dans **Gf** et décrits ci-dessus,
      * W étant tel que défini ci-dessus pour **Gf** ;
   Δ E₂ = amine ; E₃ = alcoxyle ; E₆ = hydroxy ; E₇ = trialcoxysilyl ; E₈ = amide ; E₉ = ester ; E₁₀ = phénol ; E₁₁ = arylalcoxy ; E₁₂ = aryloxy, E₁₃ = étherhydroxy.

La Demanderesse a eu le mérite de produire ces nouveaux POS (per) fluorés - grâce à la sélection judicieuse, d'une part, de différentes espèces de greffons **Gf** perfluorés par Rf et, d'autre part, d'au moins une deuxième fonctionnalité portée par des greffons latéraux E appartenant à une ou plusieurs espèces différentes entre elles, mais surtout différentes de **Gf**, du fait de leur défaut de restes perfluorés.

Conformément à l'invention, les espèces de greffons **Gf** à prendre en considération sont notamment :
- celles à rotule alkylène (̵CₘH₂ₘ)̵ avec m ≥ 2 ;
- celles à rotule alkylène (CₘH₂ₘ)ₘ₊₂ (m ≥ 0), prolongée par un radical hydrocarboné W di ou trivalent, exempt d'éther -O- et présentant un ou plusieurs restes perfluorés Rf ;
- celles à rotule alkylène (CmH₂ₘ)ₘ (m > 2) prolongée, soit par W, ω-hydroxylé et alcoxylé par un radical dont l'extrémité libre = Rf, soit par W alcoxylé par deux radicaux porteurs de Rf ;
- celle à rotule alkylène ―(CₘH₂ₘ)― (m > 0) prolongée par un appartenant à la famille générale des radicaux W, di ou trivalent, et relié ou s'inscrivant dans une unité cyclique dont la ou les valence(s) libre(s) différente(s) de celle reliée au Si, assure(nt) la liaison avec l'(ou les) éventuel(s) reste(s) Z₃Rf et/ou avec des substituants alkyles, alcoxyles ou hydroxyles ;
- celle à rotule alkylène -(CₘH₂ₘ)- (m > 0), prolongée par un reste silyle trivalent dans lequel les valences libres différentes de celle reliée au Si, assure(nt) la liaison avec l'(ou les) éventuel(s) reste(s) Z₃Rf et/ou avec des substituants alkyles ou alcoxyles ou hydroxyles ;
- et enfin celles à rotule exempte de radical alkylène divalent (h = 0) mais présentant un radical W directement branché sur le Si et porteuse, par ailleurs, d'au moins un radical Rf.

Tous ces greffons perfluorés par Rf ont l'avantage d'être chimiquement stables.

Un autre avantage majeur des greffons selon l'invention est qu'ils peuvent être obtenus à l'aide de catalyseurs industriels, par exemple ceux à base de platine tel que le catalyseur de KARSTEDT. Outre le fait qu'ils sont utilisés en faible quantité, ces catalyseurs sont intrinsèquement économiques. Ils contribuent ainsi à diminuer le coût de revient des nouveaux composés siliciés perfluorés selon l'invention.

Ce coût est d'autant plus faible que la structure de rotule permet d'accéder à des cinétiques d'hydrosilylation rapides, à de hauts rendements et à de hauts taux de conversion des motifs SiH en motifs SiGf.

En pratique, le reste monovalent Rf correspond à -C_{q}F_{2q}-CF₃, avec q compris entre 2 et 20, de préférence entre 5 et 12 et, plus préférentiellement encore, entre 7 et 10. En pratique, on peut aussi mettre en oeuvre e.g. des mélanges de Rf dont les q = 7, 8 et 9.

Selon une disposition avantageuse de l'invention, les polyorganosiloxanes fluorés qu'elle concerne, comprennent un ou plusieurs greffons Gf dans lesquels :
h = 0 ou 1 g = 1 avec Z₂ comprenant un groupement W correspondant à un radical mono ou polycyclique saturé, insaturé ou aromatique, substitué ou non, et choisi de préférence parmi les cycles suivants :

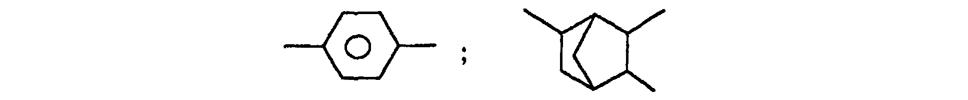

L'une des caractéristiques essentielles des POS de l'invention est donc d'être porteurs d'un ou plusieurs restes fonctionnels E de nature différente et greffés, de préférence, sur des motifs siloxyles D, lesdits restes E étant, par exemple, sélectionnés parmi les groupements suivants :
- un groupement E₁ époxyfonctionnel, de préférence, choisi parmi les groupements suivants : 3-glycidoxypropyl, 4-éthanediyle(1,2-époxycyclohexyl);
- et/ou un groupement E₁ isocyanate, de préférence sélectionné parmi les groupements suivants : 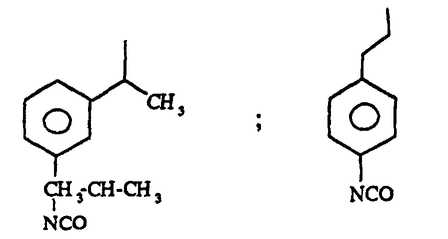
- et/ou un groupement E₂ aminofonctionnel, de préférence sélectionné :
   - soit parmi les groupements suivants :

      NH₂―(CH₂)₂―NH―(CH₂)₃― ; NH₂―(CH₂)₃― ;
   - soit parmi les fonctions amines, secondaires ou tertiaires, comprises dans une chaîne hydrocarbonée cyclique (hals), de formule : 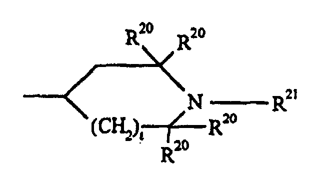
   dans laquelle :
   ◇ les radicaux R²⁰, identiques ou différents entre eux, sont choisis parmi les radicaux alkyles, linéaires ou ramifiés, ayant de 1 à 3 atomes de carbone, phényle et benzyle,
   ◇ R²¹ est choisi parmi un atome d'hydrogène, les radicaux alkyles linéaires ou ramifiés, ayant de 1 à 12 atomes de carbone, les radicaux alkylcarbonyles où le reste alkyle est un reste linéaire ou ramifié ayant de 1 à 8 atomes de carbone, les radicaux phényle et benzyle et un radical O;
   ◇ t est un nombre choisi parmi 0 et 1 ;
   ◇ les radicaux R²⁰ préférés étant des méthyles, le radical R²¹ étant un atome d'hydrogène ou un radical méthyle et t étant avantageusement un nombre égal à 1.
   ◇ et/ou un groupement E6 hydroxyfonctionnel, de préférence sélectionné parmi les groupements suivants : 3-hydroxypropyl, 3-(2-hydroxyéthoxy)propyl.

Ces autres fonctionnalités E₁ à E₁₃, e.g. différentes des greffons **Gf** perfluorés, offrent la possibilité de construire des silicones perfluorés doués d'autres fonctionnalités, aussi multiples que variées. Ceci est particulièrement intéressant dans la perspective d'adapter spécifiquement chaque POS à une application déterminée.

Il est clair que, compte tenu de leur réactivité chimique, les greffons E peuvent être, dans certains cas, des précurseurs de groupements pendants perfluorés, notamment de type **Gf**. Ce sont alors des supports de branchements de restes Rf ou en d'autres termes des précurseurs potentiels de rotules d'accrochage de Rf (prérotules Rf) : e.g. anhydrides, carboxyles, alcools, isocyanates...
Mais les possibilités de substitutions ne se limitent pas, bien entendu, aux groupes perfluorés. On peut envisager la fixation de tout groupement réactif (réticulation) sur les greffons E.

Selon une modalité préférée de l'invention, les POS sont linéaires et répondent à la formule moyenne (**I.1**) suivante : 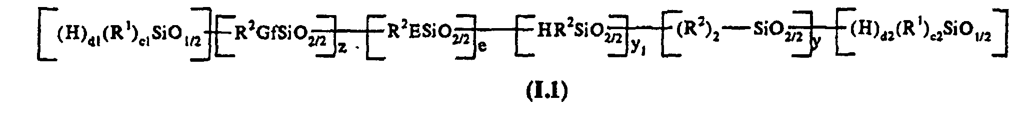 dans laquelle :
- Gf correspond à la définition donnée supra avec h = g = 1 ou h = 1 et g = 0,
- E = E₁ à E₁₃,
- R¹, R² sont tels que définis supra, de préférence méthyle, propyle ou butyle ;
- c₁ + d₁ = 3 et, de préférence c₁ = 2, d₁ = 1 ;
- c₂ + d₂ = 3 et, de préférence c₂ = 2, d₂ = 1 ;
- 1 z ≤ 90, de préférence 1 ≤ z ≤ 50,
- 1 ≤ e ≤ 100, de préférence 1 ≤ e ≤ 60,
- 0 ≤ y₁ ≤ 10, de préférence 0 ≤ y₁ ≤ 5,
- 0 ≤ y ≤ 50, de préférence 0 ≤ y ≤ 25.

De manière plus préférée encore, le POS (**I**) selon l'invention sont des polymères linéaires perfluorés de formule (**I.1.1**) suivante : 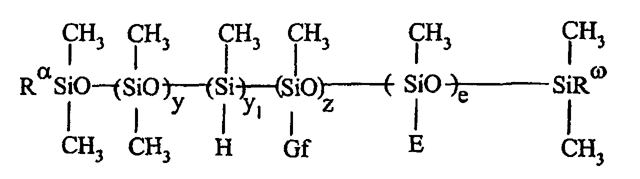 avec Gf et E tels que définis dans la revendication 1, y, y₁, z et e tels que définis dans la revendication 2 et R^{α}, R^{ω} identiques ou différents et représentant : H ou alkyle en C₁-C₆.

Selon une variante de l'invention, les POS (I) sont des polymères plus courts, voire des oligomères répondant à la formule **(I.1.2)** suivante : 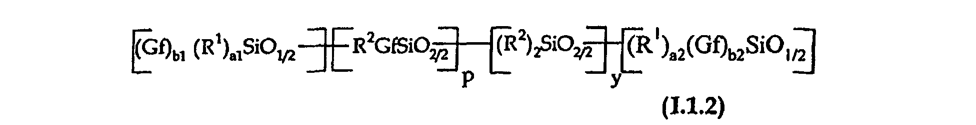 dans laquelle :
+ **Gf** est tel que défini supra,
+ R¹ identique ou différent de ses semblables de même exposant = R¹ tel que défini dans la revendication 1
   ou bien encore correspond à une fonctionnalité (E) telle que définie dans la revendication 1, de préférence un radical époxyfonctionnel ;
+ R² identique ou différent de ses semblables de même exposant et répondant à la même définition que celle donnée supra ;
+ a¹ + b¹ = a² + b² = 3 ;
+ a₁, a₂ = 2 ou 3 ; b₁, b₂ = 0 ou 1 ;
+ 10 ≤ y ≤ 100, de préférence 0 ≤ y ≤ 10 ;
+ 0 ≤ p ≤ 50, de préférence 0 ≤ p ≤ 5 ;
+ si p = 0, alors 5 ≤ y ≤ 100 et b₁ et/ou b₂ ≠ 0 ;

→ la formule dans laquelle R¹ = CH₃, b₁ = 1 et b₂ = 0, 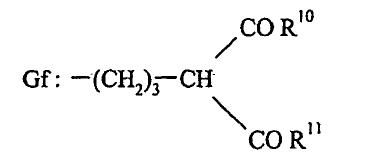 avec R¹⁰, R¹¹ = ou ≠ et représentant OH, alcoxyle C₁-C₆ ou Z₃Rf selon la revendication 1, l'un au moins des radicaux R¹⁰, R¹¹ = Z₃Rf, p = 0, et y = 0 ou 1,
→ et la formule dans laquelle R¹ = CH₃, b₁ = b₂ = 0, 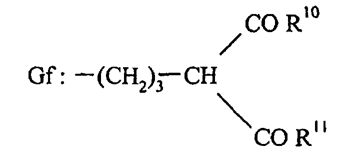 y = 0 et p = 1 à 10 de préférence 1 ;
→ étant particulièrement préférées.

Ces POS **(I.1.2.)** sont, par exemple, les oligomères suivants :
- 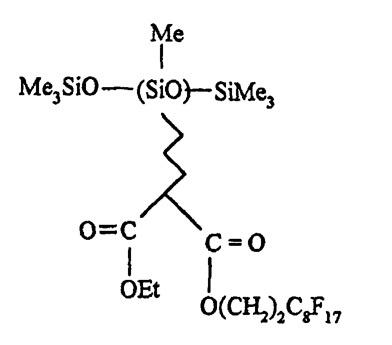
- 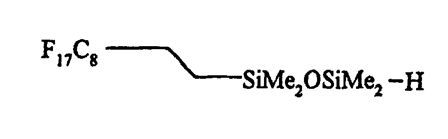
- 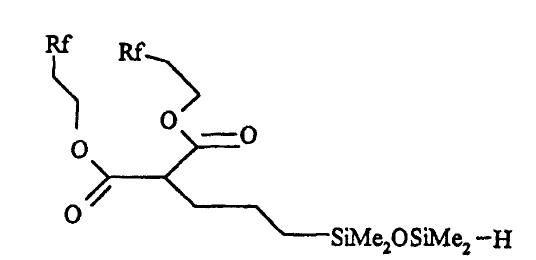
- 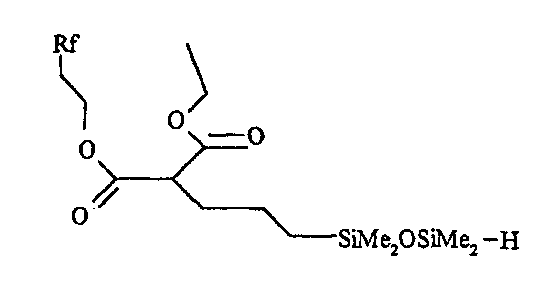
- 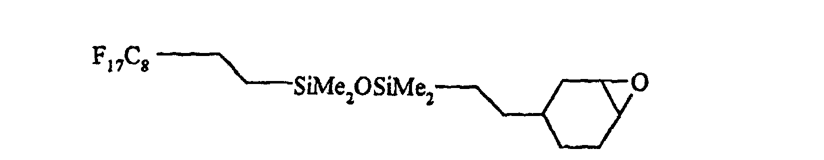
- 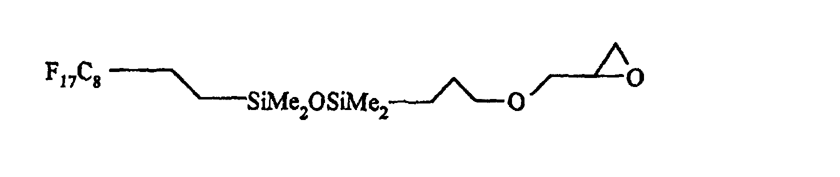
- 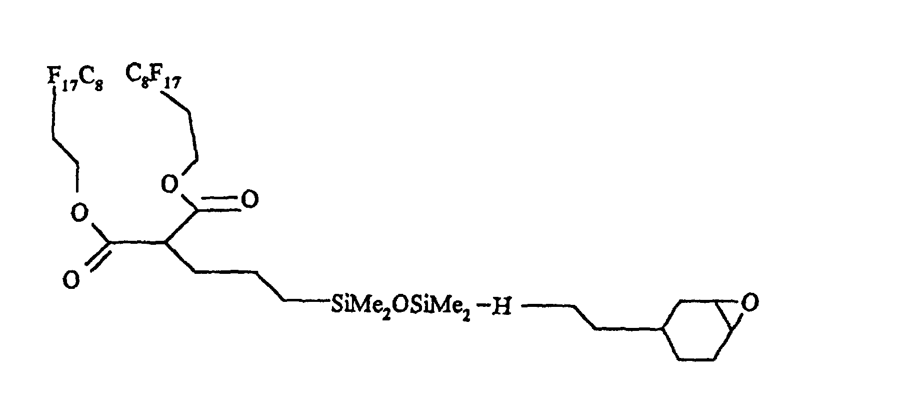
- 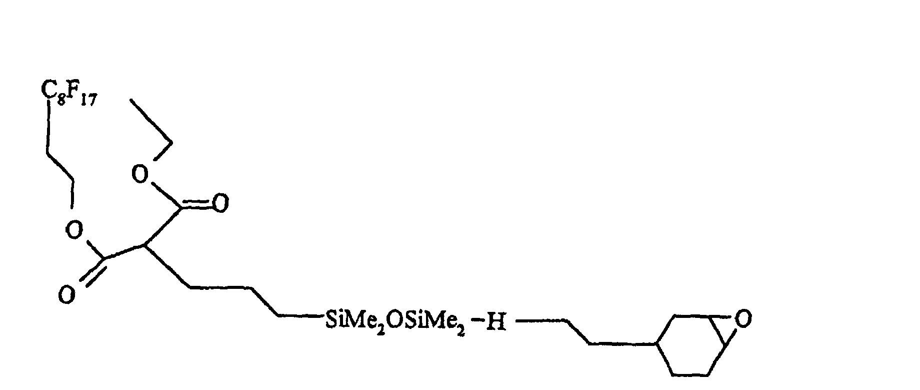
-

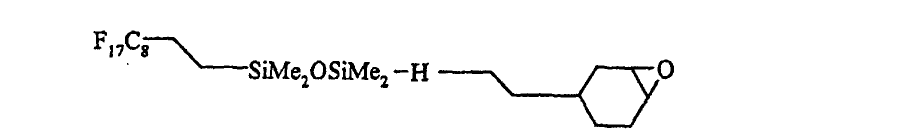

Avantageusement, **Gf** est choisi dans la liste de groupements suivants :
. a. 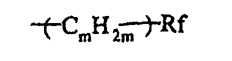 avec m ≥ 2, h = 1, g = 0, j = 0, k = 1 ;
. b. 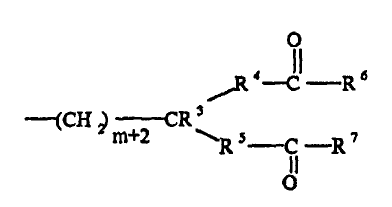 avec :
   - h = 1, m ≥ 0, g = 1, j = 0 ou 1, k ou 1,
   - R³ = H, alkyle en C₁-C₆,
   - R⁴, R⁵ = identiques ou différents entre eux et correspondant à -(CH₂)-_{u≥0},
   - R⁶, R⁷ = identiques ou différents entre eux représentant Z_{3 -} Rf avec Z₃ = -O-(CH₂)-ₛ, s étant compris entre 0 et 10, l'un au moins de ces deux radicaux R⁶, R⁷ correspondant à Z₃-Rf ;
. c. 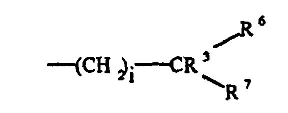 dans laquelle :
   - h = 1, m ≥ 0, g = 1, j = 0 ou 1, k = 1 et i = 2 à 10,
   - R³, R⁶, R⁷ sont tels que définis supra ;
. d. 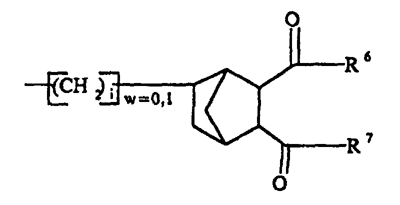 avec :
   - h = 0 ou 1, m ≥ 0, g = 1, i = 2 à 10, j = 1, k = 1,
   - R⁶, R⁷ tels que définis ci-dessus ;
. e. 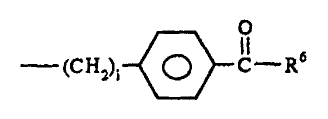 avec :
   - h = 1, m ≥ 0, g = 1, i = 2 à 10, j = 0 ou 1, k = 1,
   - R⁶, tel que défini supra,

- .f. et leurs mélanges.

Conformément à l'invention, en envisage un sous-groupe de greffons **Gf** particuliers, dénommés "greffons bifides", que l'on privilégie tout spécialement, compte-tenu des caractéristiques remarquables qu'ils sont suceptibles de conférer aux POS sur lesquels ils sont greffés. L'invention concerne donc également des POS du type de ceux définis supra et caractérisés en ce qu'ils comprennent au moins une espèce (I) et/ou (II) substituée par au moins un reste **Gf** perfluoré, choisi dans le sous-groupe de radicaux suivants :
→ **(i)** 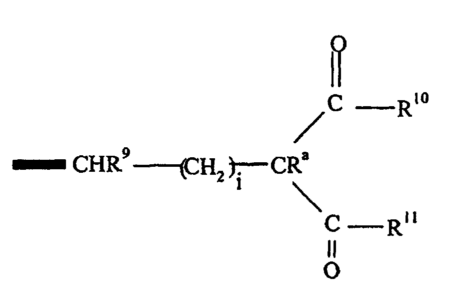 avec
   o R^{a}, R⁹ indépendamment = H ou alkyle inférieur C₁-C₆ linéaire ou ramifié, de préférence CH₃ ;
   o R¹⁰, R¹¹ indépendamment = OH, alcoxyle C₁-C₆ linéaire ou ramifié, ou Z₃-Rf ; l'un au moins des radicaux R¹⁰, R¹¹ représentant -Z₃Rf ;
   o i = 0 à 10, de préférence 0 à 3, et plus préférentiellement encore i = 1 ;
→ **(ii)** 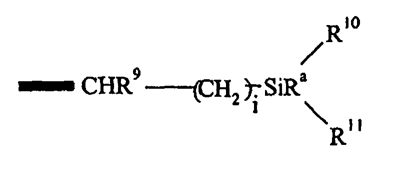 avec R⁹, R^{a}, R¹⁰, R¹¹ et i tels que définis supra ;
→ **(iii)** 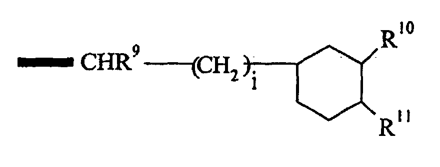 avec R⁹, R¹⁰, R¹¹ et **i** tels que définis supra ; le cycle hexyle pouvant être éventuellement substitué.
→ et les mélanges des susdits radicaux.

A ce stade de l'exposé, il convient de s'attarder quelque peu sur cette espèce particulièrement intéressante de composés POS selon l'invention, que sont les POS perfluorés, porteurs de greffons **Gf** bifides tels que définis supra. Plus précisément, on s'interesse ici aux **Gf** bifides dont les deux pattes sont constituées chacune d'un radical perfluoré Z₃Rf. Ces greffons **Gf** bifides bisperfluorés sont cristallins et procurent notamment une certaine cristallinité aux POS qu'ils substituent. Cela optimise les propriétés hydrofugeantes de ces derniers, qui se trouvent ainsi très bien adaptés comme produit actif dans des compositions antisalissures, entre autres.

Ces greffons **Gf** bifides bifluorés peuvent être associés, notamment, à des Gf bifides monoperfluorés et/ou non perfluorés.

Les POS de cette espèce sont caractérisés en ce qu'ils comprennent au moins une espèce (I) et/ou (II) substitué par :
o au moins un reste **Gf** perfluoré, répondant à la formule (**i**), (**ii**) ou : (**iii**) supra, les radicaux R¹⁰ et R¹¹ de la formule considérée correspondant à Z₃Rf, de préférence à : 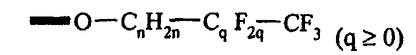 ou 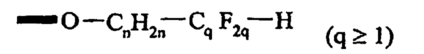
o et éventuellement par au moins un reste **Gf(i), (ii)** ou **(iii)** dans lequel l'un des radicaux R¹⁰, R¹¹ est Z₃Rf,
et l'autre de ces radicaux R¹⁰, R¹¹ est différent de Z₃Rf et correspond avantageusement à OH, alcoxyle C₁-C₆ linéaire ou ramifié.

Les taux de substitution des POS de cette espèce par des **Gf** bifides biperfluorés et/ou monoperfluorés et/ou non-perfluorés, sont parfaitement maîtrisables par l'homme du métier, lors de la synthèse. Ce sont les applications visées, pour les POS greffés, qui déterminent les réglages convenables de ces taux de substitution.
Au sein de cette espèce, les Gf bifides à rotule alkylmalonyle (i) sont plus spécialement retenus en pratique.

Par analogie aux greffons **Gf** bifides décrits ci-dessus, les greffons E peuvent être construits sur la même structure. Il en résulte qu'une autre caractéristique avantageuse des POS selon l'invention, peut être que ceux-ci comprennent au moins une espèce (**I**) et/ou (**II**) substituée par au moins un reste E choisi dans le sous-groupe de radicaux E (**i**_{**e**}), (**ii**_{**e**}), et (**iii**_{**e**}) correspondant aux radicaux **Gf** (**i**), (**ii**) et (**iii**) respectivement tels que définis ci-avant, **à la différence près** que R¹⁰, R¹¹ sont = ou ≠ et correspondent seulement à : OH, alcoxyle en C₁-C₆ linéaire ou ramifié.

Tous ces greffons **Gf**, et **E** confèrent de la nouveauté et un grand intérêt technique aux POS, auxquels ils se rattachent.

Compte tenu des précisions données ci-dessus quant aux POS selon l'invention et à leurs greffons **Gf** et **E** on peut en déduire que les POS préférés selon l'invention sont e.g. des poly(diméthyl-méthylperfluoroalkyl)siloxanes ou des poly(méthylalkyl, méthylperfluoro-alkyl)siloxanes avec le premier groupement alkyl = (propyle, butyle, pentyle, hexyle...).

Certains composés POS perfluorés linéaires de formule moyenne (**I.1**) (**I.1.1**) et (**I.1.2**) ont naturellement leurs correspondants cycliques de formule moyenne (**II.1**) ; mais, dans ce cas, la somme des z' + y'₁ + y' + e' est inférieure ou égale à 10, de préférence à 5.

Selon une disposition facultative mais néanmoins avantageuse de l'invention, les POS comportent, par molécule :
- au moins un motif siloxyle T et en outre des motifs siloxyles T = -[R⁸ SiO_{3/2}] avec R⁸ répondant à la même définition que celle de R¹, R², Gf ou E, telle que données supra,
- et éventuellement des motifs siloxyles Q = [SiO_{4/2}].

S'agissant des caractéristiques fonctionnelles des produits selon l'invention, il faut souligner le fait que les polyorganosiloxanes fluorés mono ou polyfonctionnels décrits supra ont des notables propriétés d'abaissement de tension de surface et d'oléo-et/ou- d'hydrophobie, entre autres. Ces propriétés peuvent être ajustées en contrôlant les proportions de motifs D greffés ou non, présents dans les POS fluorés. Cela correspond aux proportions molaires z, z', y₁, y₁', y, y', e, e' données par les formules ci-dessus définies.

Il est à noter que des valeurs de m = 1 ou 2 dans Z₁ de **Gf** sont les garanties d'une bonne tenue thermique pour les POS fluorés considérés. Cette propriété peut notamment être intéressante dans le cadre d'une application des POS fluorés à titre lubrifiant.

Il est également intéressant d'observer que, dans le cas où les POS fluorés comprennent une fonctionnalité E₄ aminée sur un motif D ou éventuellement T, cela n'est pas sans avoir de répercussions positives sur le coefficient de frottement de l'huile concernée. Il s'agit là encore d'un avantage exploitable en lubrification.

Selon une variante de l'invention, la ou les fonctionnalités E peuvent éventuellement être portées par des motifs M ou T.

Les POS fluorés selon l'invention peuvent se présenter sous forme d'huile plus ou moins visqueuse mais également sous forme de résines Q et/ou de résines résultant de la réticulation de chaines POS linéaires ou cycliques, par l'intermédiaire de fonctionnalités réticulantes que ces résines peuvent présenter.

Un autre objet de l'invention est constitué par un procédé de préparation de POS (per)fluorés cycliques ou linéaires, caractérisé en ce qu'il consiste essentiellement à faire réagir :
A) au moins une huile polyalkylhydrogénosiloxane - de préférence polyméthylhydrogéno-siloxane -,
B) avec au moins une oléfine (per)fluorée, précurseur de **Gf** et de formule (Gfₚ) :

   Z₁ₚRf

   dans laquelle :
   - Z₁ₚ = précurseur oléfinique de Z₁,
   - Rf tel que défini supra,
C) et/ou avec au moins une oléfine (per)fluorée, de formule :

   Z₁ₚZ₂ₚ

   dans laquelle :
   - Z₁ₚ = précurseur oléfinique de Z₁,
   - Z₂ₚ = précurseur oléfinique de Z₂,
D) en présence d'une quantité efficace de catalyseur métallique d'hydrosilylation, de préférence à base de platine ;
   le produit réactionnel A + C étant, éventuellement, mis en présence d'un réactif du type Z₃ₚRf avec Z₃ₚ = précurseur de Z₃ et Rf tel que défini supra, de telle sorte que l'on obtienne des greffons **Gf**= -Z₁Rf et/ou = -Z₁Z₂Z₃Rf ;
E) et enfin avec un réactif Eₚ formé par un précurseur oléfinique de E, Eₚ étant apte à être hydrosilylé par les ≡ SiH du POS en présence de D.

Les radicaux précurseurs des radicaux présents dans les POS finaux sont identifiés par l'indice "p" accolé à (aux) indice(s) déjà indiqués.

Selon une variante, le précurseur Ep est du type : Z₁ₚZ₂ₚ, avec Z₁ₚ précurseur oléfinique de Z₁ et Z₂ₚ précurseur de Z₂ ; Z₁, Z₂, Z₁ₚ, Z₂ₚ étant identiques ou différents à leurs correspondants intervenant dans Gf et décrits ci-dessus.
Dans ce mode de mise en oeuvre, on met en présence les radicaux -Z₁Z₂ₚ greffés sur le POS avec au moins un composé réactif porteur d'un groupement présentant au moins une fonctionnalité E, de façon à produire des greffons : -Z₁Z₂E.

Dans le cas où l'on a affaire à des Z₂ₚ du type anhydride, il est envisageable de soumettre au moins une partie de ces fonctions anhydrides, à une hydrolyse de manière à générer des extrémités carboxyliques libres, puis à une estérification d'au moins une partie desdites extrémités carboxyliques à l'aide de réactifs du type Z₃ₚ - Rf, Z₃ₚ étant un précurseur hydrogéné de Z₃, tel que défini supra, de même que Rf. Les extrémités carboxyliques libres restantes font partie des greffons E. Au lieu ou en plus des réactifs Z₃ₚ-Rf, il est possible d'employer au moins un composé réactif porteur d'un groupe présentant au moins une fonctionnalité E.

Selon une autre variante, on procède par préconstruction d'un radical précurseur global oléfinique Gfp et/ou Eₚ, que l'on fixe ensuite sur les POS.

En d'autres termes, cette variante consiste, essentiellement, à faire réagir :
A) au moins une huile polyalkylhydrogénosiloxane - de préférence polyméthylhydrogénosiloxane -,
F) avec au moins une oléfine (per)fluorée, précurseur de **Gf** et de formule (Gfₚ) : 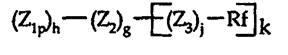 dans laquelle :
   - Z₁ₚ est le précurseur oléfinique du radical Z₁, tel que défini supra ;
   - Z₂, Z₃, Rf, h, g, j et k sont également définis supra,
   - avec la condition selon laquelle si h = 0, alors g = 1 et Z₂ devient un précurseur oléfinique Z₂ₚ ;
G) et/ou avec au moins un précurseur oléfinique Eₚ de E ;
D) en présence d'une quantité efficace de catalyseur métallique d'hydrosilylation, de préférence à base de platine.

De préférence, le précurseur Gfₚ de **Gf** répond à au moins l'une des formules suivantes :
**(i**_{**p**}**)** 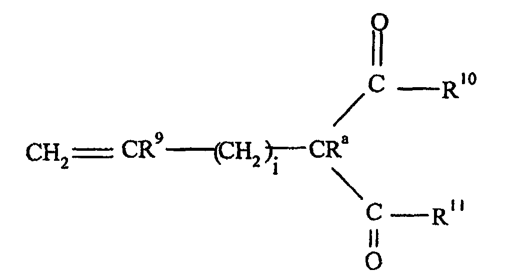 avec R^{a}, R⁹ indépendamment = H ou alkyle inférieur C₁-C₆ linéaire ou ramifié, de préférence CH₃ ;
   R¹⁰, R¹¹ indépendamment = OH, alcoxyle C₁-C₆ linéaire ou ramifié, ou Z₃-Rf ;
   i = 0 à 10, de préférence 0 à 3, et plus préférentiellement encore i = 1 ;
**(ii**_{**p**}**)** 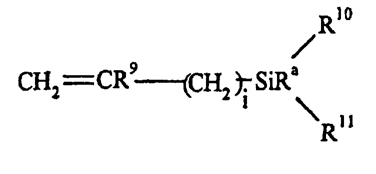 avec R⁹, R^{a}, R¹⁰, R¹¹ et i tels que définis supra ;
**(iii**_{**p**}**)** 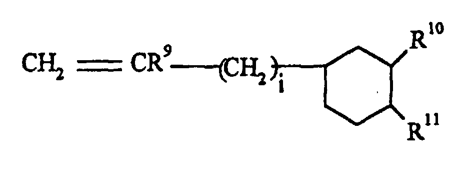 avec R⁹, R¹⁰, R¹¹ et i tels que définis supra ; le cycle hexyle pouvant être éventuellement substitué.

Ces précurseurs oléfiniques Gfₚ des greffons **Gf** bifides présentent un ou deux groupements R¹⁰, R¹¹ perfluorés (R¹⁰ et/ou R¹¹ = Z₃Rf) et sont obtenus par mise en réaction selon un mécanisme de transestérification :
→ d'au moins un alcool constitué par le radical Z₃Rf hydrogéné, i.e. : H-Z₃Rf, soit H-O-CₙH₂ₙ(X)_{x = 0 ou 1} Rf selon la revendication 1 ;
→ avec des produits de départ formés par des composés de formule (**i**_{**p**}), (**ii**_{**p**}) ou **(iii**_{**p**}**)** tels que définis dans la revendication 11 et dans lesquels au moins l'un des radicaux R¹⁰, R¹¹ est un alcoxyle linéaire ou ramifié en C₁-C₆.

S'agissant des précurseurs oléfiniques Ep des greffons E bifides, chacun d'eux répond de préférence à au moins l'une des formules (**iep**) (**iiep**) et (**iiiep**) correspond respectivement aux formules (**ip**), (**iip**) et (**iiip**) donnés dans la revendication 13 pour Gfp, à la différence près que R¹⁰, R¹¹ = ou ≠ et correspondent seulement à OH, alcoxyle C₁-C₆ linéaire ou ramifié.

La présente invention a également pour objet des nouveaux synthons (intermédiaires réactionnels) du procédé ci-dessus décrit). Chaque synthon étant caractérisé en ce qu'il répond à au moins l'une des formules suivantes :
**(i**_{**p**}**)** 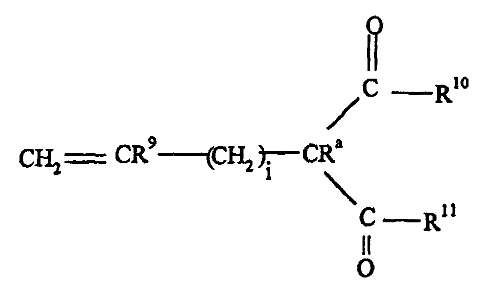 avec R^{a}, R⁹ indépendamment = H ou alkyle inférieur C₁-C₆ linéaire ou ramifié, de préférence CH₃ ;
   au moins l'un des radicaux R¹⁰, R¹¹ correspond à un alcoxyle linéaire ou ramifié en C₁-C₆, le méthoxyle et l'éthoxyle et le propyle étant préférés ;
**(ii**_{**p**}**)** 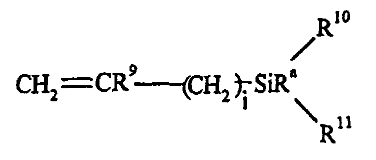 avec R⁹, R^{a}, R¹⁰, R¹¹ et i tels que définis supra ;
**(iii**_{**p**}**)** 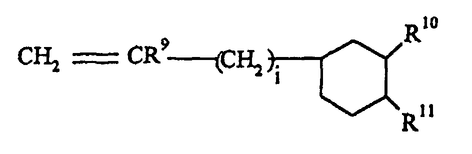 avec R⁹, R¹⁰, R¹¹ et i tels que définis supra ; le cycle hexyle pouvant être éventuellement substitué.

L'un des avantages majeurs découlant de l'utilisation de ce type de composés insaturés perfluorés ou non (Z₁ₚ, Z₂ₚ, Gfₚ, Eₚ) tient à la possibilité de mettre en oeuvre un catalyseur industriel sélectionné parmi les composés à base de Ni, Pd ou Pt de préférence à base de Pt. Cela peut être, par exemple, un catalyseur de KARSTEDT, avantageusement employé en faible quantité e.g. de l'ordre de 10 à 50 ppm par rapport au POS considéré avant hydrosilylation (huile Si-H).

La méthodologie déterminée par le procédé selon l'invention est particulièrement simple. La cinétique d'hydrosilylation est rapide. Le rendement et le taux de conversion des SiH sont particulièrement élevés. C'est un procédé performant et économique.

Selon une modalité préférée de l'invention, le POS à motifs SiH, est progressivement mis en présence de ou des oléfine(s) Gfₚ halogénée(s) et des précurseurs oléfiniques Eₚ des greffons E. Le catalyseur est contenu dans l'un et/ou l'autre de ces trois constituants POS, Gfp et Eₚ du milieu réactionnel.

En pratique, l'hydrosilylation se déroule en autant de phases qu'il existe de réactifs oléfiniques différents.

Le milieu réactionnel est mis sous agitation et porté à une température comprise entre 50 et 150 °C. La réaction se déroule à pression atmosphérique et sur généralement une durée de plusieurs heures. Le taux de transformation des motifs SiH est supérieur à 99 % en nombre.

S'agissant des autres fonctionnalités E décrites ci-dessus, et qui peuvent être portées par les siliciums du POS selon l'invention, leur greffage peut intervenir avant, pendant ou après le greffage des restes alkylènes perfluorés par Rf.

Parmi les POS susceptibles d'être utilisés comme produits de départ du procédé selon l'invention, on peut citer à titre d'exemples :
* les POS linéaires tels que les polyméthylhydrogénosiloxanes notamment ceux du type:
   . Me₃ SiO (SiMeHO)_{S} Si Me₃, avec s = 10 à 100, de préférence 50,
   . ou Me₃SiO(SiMeHO)ₛ₁ (SiMe₂O)ₛ₂ Si Me_{3,} avec s₁ = 10 à 100, et s₂ = 0 à 50,
* les POS cycliques, tels que le tétra méthyltétracyclosiloxane D'4.

A titre d'exemples de POS aptes à être perfluorés, grâce au procédé selon l'invention, on peut citer e.g. :

Me₃ SiO (SiMe₂O)-₈(SiHMeO)-₄ Si Me₃

Me₃ SiO (SiMeHO)-₅₀ SiMe₃

Il a déjà été indiqué supra que les POS **(I)** ou **(II)** au moins bifonctionnels substitués par des greffons Gf et E peuvent se présenter sous forme d'huiles. Selon une variante de présentation, les susdits POS peuvent être émulsifiés avec de l'eau. Ainsi, la présente invention a également pour objet une dispersion aqueuse caractérisée en ce qu'elle contient :
- au moins un POS tel que défini supra ou obtenus par le procédé tel que défini supra ;
- de l'eau ;
- et au moins un tensioactif.

Les huiles de l'invention peuvent donc être mises en émulsion sans ajout de solvant pour l'application.
De plus, les performances en terme d'oléophobie et d'hydrophobie peuvent être améliorées par l'ajout de tensioactifs choisis.
Les Fluoro silicones selon l'invention peuvent être associés à des fluoropolymères classiques à squelette acrylate, dont le procédé de synthèse conduit naturellement à une émulsion.

D'autres composés à caractère ionique comme des sels de copolymères styrène/anhydride maléique peuvent être utilisés en addition aux POS fluorés de l'invention.

Dans les cas où les POS fluorés comprennent des fonctions **E** spécifiques salifiables, cela permet d'assurer la mise en émulsion, grâce à la salification partielle ou complète par une base (-fonctions COOH-) ou la quaternisation de fonctions amines.

Dans d'autres cas, il est nécessaire de formuler une émulsion. Des solvants divers (alcool, cétone, solvants fluorés, acétate d'éthyle...) sont alors utilisés pour une mise en solution initiale du produit.

Les tensioactifs utilisés pour l'émulsification sont ioniques ou non ioniques avec une balance hydrophile/hydrophobe élevée. Ils sont généralement choisis parmi les composés suivants :
alcools gras éthoxylés
alkyls phénols éthoxylés
sels d'alkylamines éthoxylés
polyalcools éthoxylés
sel d'alkyle ammonium...

Selon un autre de ces aspects, l'invention concerne l'application des composés siliciés perfluorés *per se* tels que décrits ci-dessus ou ceux obtenus par le procédé de perhalogénation divulgué supra, à titre de :
- lubrifiant
- agent abaisseur de tension de surface,
- agent anti-salissures,
- agent anti-adhérent,
- agent anti-mousse,
- agent oléophobe et/ou hydrophobe,
- matières premières pour la réalisation d'élastomères résistant aux agressions chimiques et aux solvants,
- matières premières pour la préparation de film et/ou revêtement doué d'au moins l'une des propriétés sus-mentionnées.

Eu égard aux propriétés particulières des greffons **Gf** bifides perfluorés (mono mais surtout bis-perfluorés), la présente invention vise également une composition antisalissure caractérisée en ce qu'elle comprend :
- au moins un POS tels que défini supra ou obtenus par le procédé tel que défini supra ;
- et/ou au moins une émulsion telle que définie supra
- le ou les susdits POS mis en oeuvre étant de préférence des POS porteurs :
   * de greffons **Gf** bifides bifonctionnalisés par des radicaux perfluorés, tels que définis dans la revendication 5,
   * d'autres greffons E fonctionnalisés par d'autres fonctions que les fonctions bi ou monoperfluorées telles que définies supra
   * et éventuellement de greffons **Gf** bifides monofonctionnalisés par des radicaux perfluorés, eux-aussi définis supra.

A titre illustratif, on peut indiquer que pour des applications des POS perfluorés en tant qu'agents anti-salissures dans le textile, on peut avoir par exemple :
* E =

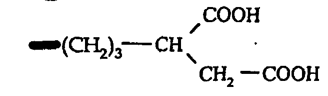

Des POS perfluorés utilisables en tant qu'agents anti-adhérents papier ou autres supports dont notamment la pierre (anti-graffitis), sont, par exemple, ceux dans lesquels on trouve :
* E= 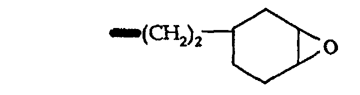
* ou E =

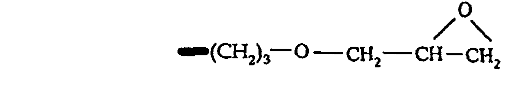

### EXEMPLES

### EXEMPLE I : Synthèse d'huiles silicones perfluorées grâce à des motifs Rf comprenant deux types de rotules Gf : Gf₁ = alkylène et Gf₂ = alkylcarboxyle et comportant, également des greffons E.

### I.1. Synthèse

Cette synthèse s'opère en 2 phases :
- Phase 1 - préparation de l'huile POS greffée par des motifs perfluorés **Gf**_{**1**} et par des motifs E anhydrides d'acide.
- Phase 2 - estérification des fonctions anhydrides de l'huile de la phase 1.

### Phase 1

Dans un réacteur tétracol de 250 ml muni d'une agitation mécanique centrale, d'un thermomètre, d'un réfrigérant vertical à boules et d'un septum, on introduit :
- 90,8 ml de toluène sec (séché sur tamis moléculaire).

Le milieu est mis sous agitation, inerté à l'azote et porté à une température de 90°C.

On introduit alors à travers le septum.
- 4,8 µl d'une solution dans le divinylrétraméthyldisiloxane d'un complexe du platine à 11 % en poids de platine ligandé par du divinyltétraméthyldisiloxane (catalyseur de KARSTEDT).

On coule ensuite progressivement et simultanément sur une période de 90 minutes
- 17,21 g (0,273 mole de fonction Si-H) d'une huile polyméthylhydrogénosiloxane de structure (CH₃)₃SiO-(SiOCH₃H)₅₀-Si(CH₃)₃ à 1585 méqSi-H/100 g d'huile (RHODORSIL® H68 de RHONE POULENC) et
- 50,1 g (0,139 mol) de 3-perfluorohexyl 1-propène.

24 heures après le début de la réaction le taux de transformation des fonctions SiH n'étant que de 44 % (pour un maximum de 50) on rajoute
- 3,2 µl de la même solution de platine de KARSTEDT.

2 h 30 après ce rajout le taux de transformation des fonctions Si-H est de 49,5 %. On coule ensuite sur une période de 90 minutes
- 25,13 g (0,179 mol) d'anhydride succinique allylé.

A deux reprises (43 et 50 heures après le début de la première coulée) on ajoute
- 2 x 3,2 %l de la même solution de platine de KARSTEDT.

72 heures après le début de la première coulée le taux de transformation des fonctions Si-H est de 99 %. On procède alors à une dévolatilisation pour éliminer le solvant les excès de réactifs en chauffant jusqu'à 120 °C sous vide (0,01 mbar). On obtient 86,8 g d'une huile de structure :

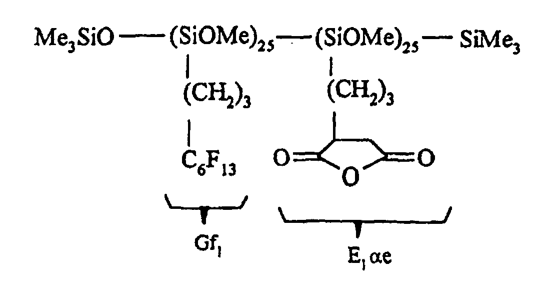

### Phase 2 :

Dans un réacteur tétracol de 50 ml muni d'une agitation mécanique centrale, d'un thermomètre, d'un réfrigérant vertical à boules et d'un septum on introduit :
- 7,03 g de l'huile décrite dans l'exemple 1) partiellement hydrolysée et de structure : 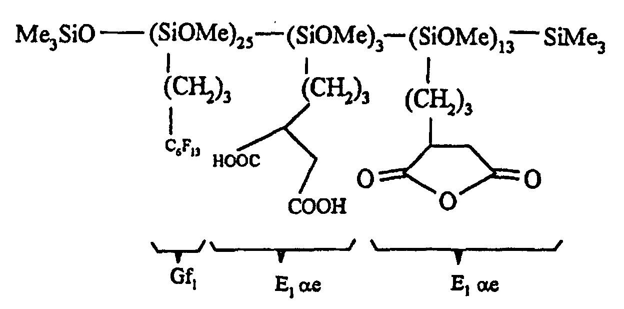
- 5,24 g (0,0113 mol) de 1-perfluorooctyl 2-hydroxy éthane
- 12,6 g de 1,1,2-trifluorotrichloethane

Le milieu est mis sous agitation, inerté à l'azote puis on introduit
- 0,15 g de pyridine à travers le septum et on porte la température du milieu à 50 °C.

8 heures plus tard on effectue une dévolatilisation pour éliminer le solvant et l'excès d'alcool non réagit en chauffant jusqu'à 110 °C sous vide. On obtient alors 10.35 g d'huile de structure

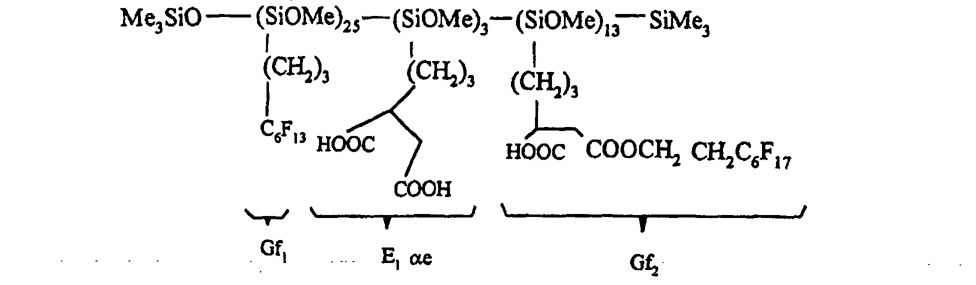

Un spectre Infra-Rouge effectué sur cette huile montre qu'il y a disparition totale des fonctions anhydrides (plus de bande à 1780 et 1860 cm-1). Les analyses RMN confirment la structure de cette huile silicone fonctionnalisée.

### I.2. Application de l'huile POS bi-fonctionnelle obtenue en I.1

### * test de résistance aux graisses

La résistance aux graisses de l'huile de l'exemple I.1 est évaluée sur un tapis en polyamide-6 (PA.G) traité par cette huile par le test de l'AATCC (American Association of Textile Chemist and Colorist) n° 118-1983 qui consiste à déposer des gouttes de liquides standards (au maximum huit) de polarité décroissante sur le tapis traité et à mesurer la durée pendant laquelle la goutte reste en surface avant de pénetrer dans le tapis (et notée t par la suite). A chaque liquide correspond un numéro et on attribue à l'huile perfluorée une cotation qui correspond au numéro le plus élevé du liquide qui reste au moins 30 secondes sur la surface du tapis.

### * Traitement du tapis :

L'huile KP 307 est déposée, à différentes quantités, sur un tapis en polyamide-6 à partir d'une solution dans le 1,1,2-trifluoro trichloroéthane ; le tapis est d'abord mis 14 heures dans une étuve à 30 °C puis est placé dans un four pendant 6 minutes à 80 °C et 4 minutes à 140° C.

### * Résultats :

**TABLEAU 1**

| quantité de fluor/PA 6 (ppm) | t avec liquide n° 1 (secondes) | t avec liquide n° 2 (secondes) | t avec liquide n° 3 (secondes) | t avec liquide n° 4 (secondes) | t avec liquide n° 5 (secondes) |
|---|---|---|---|---|---|
| 700 | > 50 | > 50 | 1 | 1 | 1 |
| 1400 | > 50 | > 50 | 39 | 1 | 1 |
| 2800 | > 50 | > 50 | > 50 | 36 | 1 |
| 4200 | > 50 | > 50 | > 50 | 17 | 2 |
| 5600 | > 50 | > 50 | > 50 | > 50 | 7 |
| 7000 | > 50 | > 50 | > 50 | > 50 | 7 |

Voici la composition des liquides standards de cotation utilisés :
liquide 1 : NUJOL (paraffine liquide)
liquide 2 : NUJOL/n-hexadécane 65/35 en volume à 21 °C
liquide 3 : n-hexadécane
liquide 4 : n-tétradécane
liquide 5 : n-dodécane

Ainsi à l'huile de I.1 correspond une cotation de 2 à 700 ppm de fluor, de 3 à 1400 et à 4200 ppm de fluor et de 4 à 2800, 5600 et 7000 ppm de fluor.

### EXEMPLE II : SYNTHESE D'UNE HUILE SILICONE PERFLUOREE BIFONCTIONNELLE Gf₁ ET E₁γe.

Dans un réacteur tétracol de 1 000 ml muni d'une agitation mécanique centrale, d'un thermomètre, d'un réfrigérant vertical à boules et d'un septum on introduit :
- 262,5 g d'un mélange de perfluorohexylisopentyl 1- et 2-ène (C₆F₁₃CH₂CH₂C(CH₃)=CH₂ et C₆F₁₃CH₂CH=C(CH₃)₂) dans une proportion de 20 et 80 % respectivement, soit 0,135 et 0,541 mol respectivement,
- 7,75 g d'un polyméthylhydrogénosiloxane (soit 0,122 mol de fonctions Si-H) dont les caractéristiques sont les suivantes :
   * Mn = 3160 g,
   * 1,585 éq Si-H pour 100 g,
   * structure moyenne :

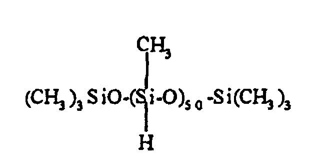

Le milieu est mis sous agitation, inerté à l'azote et porté à une température de 100 °C. On introduit alors par le septum :
- 13 µl (soit 100 ppm/masse totale de l'huile Si-H) d'une solution dans le divinyltétraméthyldisiloxane d'un complexe du platine à 11,9 % en poids de platine ligandé par du divinyltétraméthyldisiloxane (catalyseur de Karstedt) ;
   30 minutes plus tard, lorsque le taux de transformation des Si-H introduit est de 79 %, on coule simultanément et en 80 minutes :
- 262,5 g d'un mélange de perfluorohexylisopentyl 1- et 2-ène (C₆F₁₃CH₂CH₂C(CH₃)=CH₂ et C₆F₁₃CH₂CH=C(CH₃)₂) dans une proportion de 20 et 80 % respectivement, soit 0,135 et 0,541 mol respectivement ;
- 7,75 g du même polyméthylhydrogénosiloxane (soit 0,122 mol de fonctions Si-H). 3h15 minutes après le début de la réaction, lorsque le taux de transformation de la totalité des Si-H introduits est de 76 %, on introduit :
- 13 µl de catalyseur de Karstedt.
   22h après le début de la réaction, lorsque le taux de transformation de la totalité des Si-H introduits est de 88,6 %, on introduit à travers le septum :
- 7 g (soit 0,056 mol ou 2 éq/Si-H restant) de vinylcyclohéxène,
- et 6,5 µl de catalyseur de Karstedt.
   12h après ces derniers rajouts le TT des fonctions Si-H est de 99,9 %, on effectue une dévolatilisation sous vide (110 °C sous 1 mm Hg pendant 2h) pour éliminer le perfluorohexylisopentyl 2-ène et les excès de perfluorohexylisopentyl 1-ène vinylcyclohéxène et on obtient 90 g d'huile de structure :

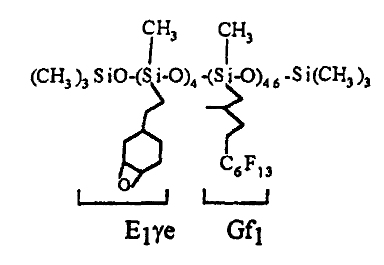

### EXEMPLE III : SYNTHESE D'UNE AUTRE HUILE SILICONE PERFLUOREE BIFONCTIONNELLE Gf₁ ET E₁γe.

Dans un réacteur tétracol de 100 ml muni d'une agitation mécanique centrale, d'un thermomètre, d'un réfrigérant vertical à boules et d'un septum, on introduit :
- 17,3 g de perfluorohexylbutylène C₆F₁₃CH₂CH₂CH=CH₂ (soit 0,0462 mol),
- et 5,7 g de vinylcyclohéxène (soit 0,0462 mol).

Le milieu est mis sous agitation, inerté à l'azote et porté à une température de 100 °C. On introduit alors, par le septum :
- 17 µl (soit 50 ppm/masse de l'huile Si-H) d'une solution dans le divinyltétraméthyldisiloxane d'un complexe du platine à 11,9 % en poids de platine ligandé par du divinyltétraméthyldisiloxane (catalyseur de Karstedt).

Puis on introduit, sur une période de 80 minutes :
- 40 g (soit 0,084 éq Si-H) d'une huile poly(diméthyl, méthylhydrogénosiloxane) dont les caractéristiques sont les suivantes :
   * Mn = 3 750 g,
   * 0,21 éq Si-H pour 100 g d'huile,
   * structure moyenne :

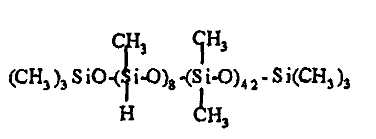

En fin d'introduction, le taux de transformation des fonctions Si-H est de 98,6 % et passe à 99,9 % 40 minutes plus tard. On effectue une dévolatilisation sous vide (100 °C sous 1 mm Hg pendant 1 h 30) pour éliminer les excès des deux réactifs et on obtient 59,1 g d'huile de structure : 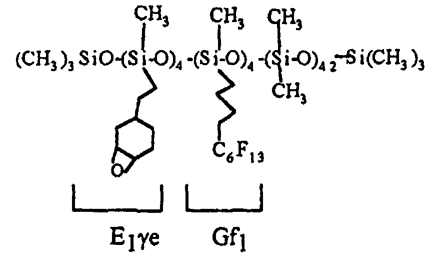 et titrant 0,065 éq époxy pour 100 g d'huile (dosage à l'acide perchlorique).

### EXEMPLE IV : SYNTHESE D'UNE HUILE SILICONE PERFLUOREE BIFONCTIONNELLE Gf₁ET E₁αe.

Dans un réacteur tricol de 50 ml muni d'une agitation mécanique centrale, d'un thermomètre et d'un réfrigérant vertical à boules, on introduit :
- 7,36 g de perfluorooctyléthylène C₈F₁₇CH=CH₂ soit 0,0165 mol,
- et 30 g (soit 0,033 éq Si-H) d'une huile poly(diméthyl, méthylhydrogénosiloxane) dont les caractéristiques sont les suivantes :
   * Mn = 3 806 g,
   * 0,11 éq Si-H pour 100 g d'huile,
   * structure moyenne :

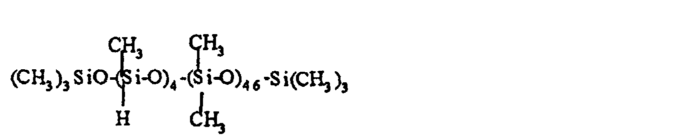

Le milieu est mis sous agitation, inerté à l'azote et laissé à température ambiante. On introduit alors :
- 0,075 g de dicobaltoctocarbonyl stabilisé à l'hexane (soit 0,25 % massique / à l'huile Si-H).

L'hexothermie de la réaction fait augmenter la température de 10 °C pendant une courte période. 10 heures après le début de la réaction le taux de transformation des fonctions Si-H a atteint 48,5 %.

Le milieu est alors transvasé dans une ampoule à décanter et on effectue trois lavages avec 3 x 30 ml de méthanol. Le méthanol encore contenu dans la phase silicone est éliminé par dévolatilisation sous vide à 80 °C pendant 2h.

On introduit alors dans un ballon de 50 ml muni d'une agitation mécanique centrale, d'un thermomètre et d'un réfrigérant vertical à boules :
- 25,23 g (soit 0,01 éq Si-H) de l'huile partiellement greffée titrant 0,037 éq Si-H pour 100 g,
- et 1,54 g (soit 0,011 mol) d'anhydride succinique allylé.

Le milieu est mis sous agitation, inerté à l'azote et porté à une température de 100 °C. On introduit alors par le septum :
- 10,6 µl (soit 50 ppm/masse de l'huile Si-H) d'une solution dans le divinyltétraméthyldisiloxane d'un complexe du platine à 11,9 % en poids de platine ligandé par du divinyltétraméthyldisiloxane (catalyseur de Karstedt).
   10 heures après l'ajout de platine le taux de transformation des fonctions Si-H est de 71,5 % ; on ajoute alors :
- 10,6 µl de catalyseur de Karstedt.
   24 heures plus tard le taux de transformation des fonctions Si-H est de 97 % ; on effectue alors une dévolatilisation sous vide pour éliminer l'excès d'anhydride succinique allylé et on obtient 26,51 g d'huile de structure :

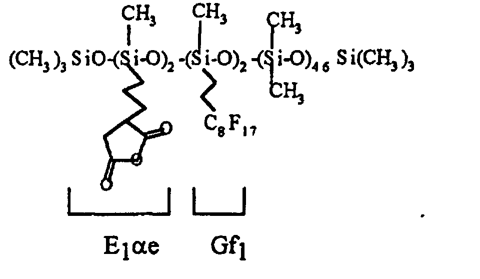

### EXEMPLE V : SYNTHESE D'UNE HUILE SILICONE PERFLUOREE BIFONCTIONNELLE Gf₁ ET E₆

Dans un réacteur tétracol de 100 ml muni d'une agitation mécanique centrale, d'un thermomètre, d'un réfrigérant vertical à boules et d'un septum, on introduit :
- 10 g de toluène.

Le milieu est mis sous agitation, inerté à l'azote et porté à une température de 85 °C. On introduit :
- 2 µl (soit 40 ppm/masse de l'huile Si-H) d'une solution dans le divinyltétraméthyldisiloxane d'un complexe du platine à 11,9 % en poids de platine ligandé par du divinyltétraméthyldisiloxane (catalyseur de Karstedt).

On introduit alors, simultanément, sur une période de 1 h par le septum, d'une part :
- 20 g de perfluorooctylpropylène C₈F₁₇CH₂CH=CH₂ (soit 0,0435 mol), et, d'autre part :

- 5,18 g d'un polyméthylhydrogénosiloxane (soit 0,081 mol de fonctions Si-H) dont les caractéristiques sont les suivantes :
   * Mn = 3 160 g,
   * 1,585 éq Si-H pour 100 g,
   * structure moyenne : 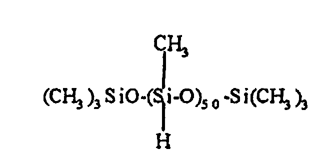
   2 h 40 minutes plus tard, lorsque le taux de transformation des fonctions Si-H est de 54 %, on introduit, sur une période de 30 minutes :
- 8,27 g de 1-alllyl, 3-méthyl, 5-t butyl phénol (soit 0,0405 mol).
   11 h plus tard, le taux de transformation des fonctions Si-H est total et on effectue une dévolatilisation sous vide (2h à 70 °C sous 1 mbar) pour éliminer le toluène et l'excès de perfluorooctylpropylène et obtenir 31.71 g d'huile de structure :

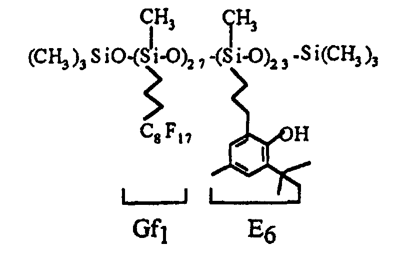

### EXEMPLE VI : SYNTHESE D'UNE HUILE BIFONCTIONNELLE SILICONE PERFLUOREE Gf₁ ET E₁₃·

Dans un réacteur tricol de 100 ml muni d'une agitation mécanique centrale, d'un thermomètre et d'un réfrigérant vertical à boules on introduit :
- 30 g de toluène.

Le milieu est mis sous agitation, inerté à l'azote, porté à une température de 90°C puis on introduit :
- 2,1 µl (soit 20 ppm/masse de l'huile Si-H) d'une solution dans le divinyltétraméthyldisiloxane d'un complexe du platine à 9,5 % en poids de platine ligandé par du divinyltétraméthyldisiloxane (catalyseur de Karstedt).

On coule alors simultanément sur une période de 1h 30 minutes, d'une part :
- 28,4 g de perfluorooctylpropylène (soit 0,0789 mol), et, d'autre part :
- 9,74 g d'un polyméthylhydrogénosiloxane (soit 0,154 mol de fonctions Si-H) dont les caractéristiques sont les suivantes :
   * Mn = 3 160 g,
   * 1,585 éq Si-H pour 100 g,
   * structure moyenne : 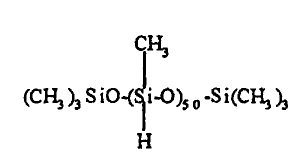
   4 h 40 minutes après le début de la réaction le taux de transformation des fonctions Si-H est de 32 % ; on rajoute alors :
- 2 µl de catalyseur de Karstedt.
   1 h 50 minutes après ce rajout le TT des fonctions Si-H étant de 48,7 %, on coule en 25 minutes :
- 10,2 g d'allyloxyéthanol (soit 0,1 mol).
   1h après la fin de cette 2° coulée le TT des Si-H est de 87,7 %, on rajoute alors :
- 4 µl de catalyseur de Karstedt.
   14h plus tard, le TT des Si-H étant de 96,5 %, on effectue une dévolatilisation sous vide (75 °C pendant 1 h sous 5 mm Hg) pour éliminer le toluène et on obtient 34,3 g d'une huile de structure :

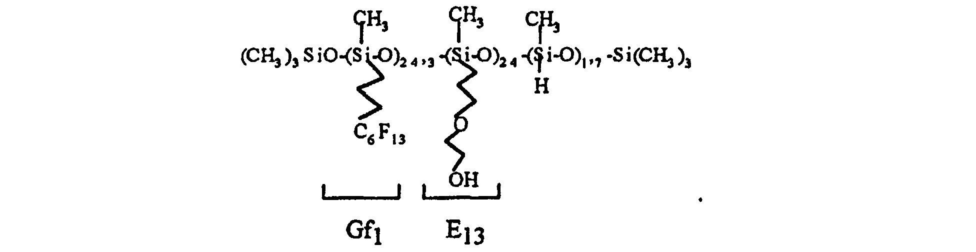

### EXEMPLE VII : SYNTHESE D'UNE HUILE SILICONE GREFFEE TRIFONCTIONNELLE Gf₁, E₁γe, E₃.

Dans un réacteur tricol de 100 ml, muni d'une agitation mécanique centrale, d'un thermomètre et d'un réfrigérant vertical à boules on introduit :
- 12,3 g de perfluorooctyléthylène C₈F₁₇CH=CH₂ soit 0,0275 mol,
- et 50 g (soit 0,055 éq Si-H) d'une huile poly(diméthyl, méthylhydrogénosiloxane) dont les caractéristiques sont les suivantes :
   * Mn = 3 806 g,
   * 0,11 éq Si-H pour 100 g d'huile,
   * structure moyenne :

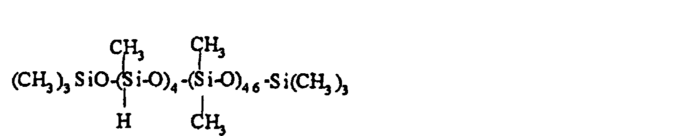

Le milieu est mis sous agitation, inerté à l'azote et chauffé à 50 °C. On introduit alors :
- 0,049 g de dicobaltoctocarbonyl stabilisé à l'hexane (soit 0,1 % massique / à l'huile Si-H).
   10 h 30 minutes après le début de la réaction, le taux de transformation des fonctions Si-H a atteint 34 % ; on rajoute alors :
- 0,049 g de dicobaltoctocarbonyl stabilisé à l'hexane.
   1h plus tard le TT des Si-H atteint 48,5 %. Le milieu est alors transvasé dans une ampoule à décanter et on effectue trois lavages avec 3 x 50 ml de méthanol. L'huile restante, partiellement émulsionnée par du méthanol, est solubulisée dans du 1,1,1-trifluoro trichloroéthane, puis l'ensemble est dévolatilisé à 90 °C sous pression atmosphérique.

On introduit alors, dans un ballon tricol de 50 ml muni d'une agitation mécanique centrale, d'un thermomètre et d'un réfrigérant vertical à boules :
- 53,3 g (soit 0,017 éq Si-H) de l'huile partiellement greffée titrant 0,032 éq Si-H/100 g,
- 5 µl d'une solution dans le divinyltétraméthyldisiloxane d'un complexe du platine à 10,0 % en poids de platine ligandé par du divinyltétraméthyldisiloxane (catalyseur de Karstedt),
- et 6 g de vinylcyclohéxène (soit 0,0484 mol).

On porte la température du milieu à 70 °C et 1 h 30 minutes plus tard le TT en fonctions Si-H est total. On effectue alors une dévolatilisation sous vide (135 °C pendant 2 h sous 6 mbar) pour éliminer les excès de perfluorooctyléthylène et de vinylcyclohéxène et on obtient 49,67 g d'huile de structure : 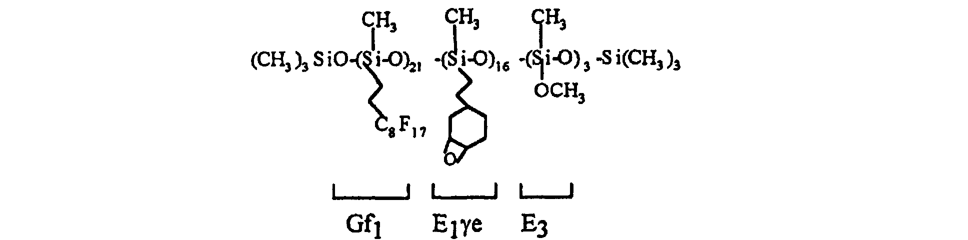 titrant 0,0359 éq époxy pour 100 g d'huile (dosage à l'acide perchlorique).

### EXEMPLE VIII : SYNTHESE D'UNE AUTRE HUILE SILICONE TRIFONCTIONNELLE Gf₁, E₁γe, E₃.

Dans un réacteur tétracol de 1 000 ml muni d'une agitation mécanique centrale, d'un thermomètre, d'un réfrigérant vertical à boules et d'une ampoule de coulée, on introduit :
- 271,6 g de perfluorooctyléthylène C₈F₁₇CH=CH₂, soit 0,609 mol,
- et 400 g (soit 1,16 éq Si-H) d'une huile poly(diméthyl, méthylhydrogénosiloxane) dont les caractéristiques sont les suivantes :
   * Mn = 6 200 g,
   * 0,29 éq Si-H pour 100 g d'huile,
   * structure moyenne :

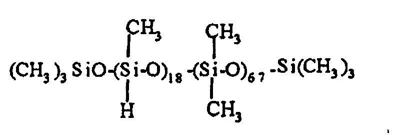

Le milieu est mis sous agitation, inerté à l'azote et on chauffe à 50 °C. On introduit alors :
- 0,7944 g de dicobaltoctocarbonyl stabilisé à l'hexane (soit 0,2 % massique / à l'huile Si-H).
   8 h 15 minutes après le début de la réaction le taux de transformation des fonctions Si-H a atteint 30,4 % ; on rajoute alors :
- 0,3972 g de dicobaltoctocarbonyl stabilisé à l'hexane (soit en tout 0,3 % massique/ à l'huile Si-H).
   1 h plus tard le TT des Si-H atteint 49,7 %. Le milieu est alors transvasé dans une ampoule à décanter et on effectue quatre lavages avec 4 x 175 g de méthanol. L'huile restante, partiellement émulsionnée par du méthanol, est dévolatilisé à 90 °C sous 6 mm Hg pendant 45 minutes.

On introduit alors, dans un ballon tétracol de 1000 ml muni d'une agitation mécanique centrale, d'un thermomètre et d'un réfrigérant vertical à boules :
- 597,1 g (soit 0,211 éq Si-H) de l'huile partiellement greffée titrant 0,0353 éq Si-H/100 g,
- 30 µl d'une solution dans le divinyltétraméthyldisiloxane d'un complexe du platine à 9,5 % en poids de platine ligandé par du divinyltétraméthyldisiloxane (catalyseur de Karstedt),
- et 30,4 g de vinylcyclohéxène (soit 0,245 mol).

On porte la température du milieu à 80 °C et 1 h plus tard le TT en fonctions Si-H est de 94,4 % l. On rajoute alors :
- 30 µl de catalyseur de Karstedt.
   8 h plus tard le taux de transformation des fonctions Si-H est total. On effectue alors une dévolatilisation sous vide (135 °C pendant 2 h sous 6 mbar) pour éliminer les excès de perfluorooctyléthylène et de vinylcyclohéxène et on obtient 591,6 g d'huile de structure : 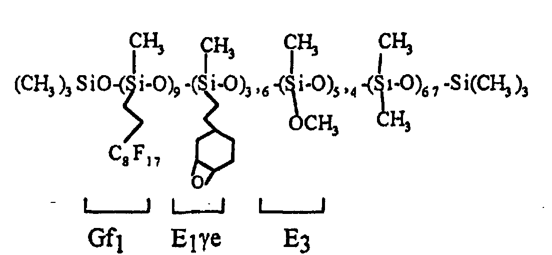 titrant 0,0213 éq époxy pour 100 g d'huile (dosage à l'acide perchlorique).

### EXEMPLE IX : SYNTHESE DE POS MONOMERES MONO ET BIS-PERFLUOROALKYLES = PRECURSEURS Gfp de GREFFONS Gf ET E BIFIDES :

### Réaction :

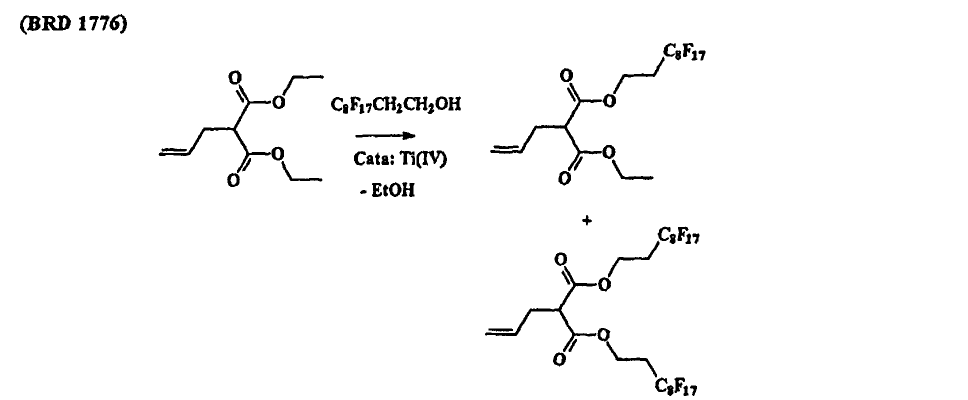

Dans un réacteur de 51 on introduit sous azote 2018 g (10,09 mole) d'allyldiéthylmalonate, 2340g (5,04 mole) de l'alcool C₈F₁₇CH₂CH₂OH, 3,8 g (0,016 mole) de Ti(OEt)₄ et 1000 g de toluène sec. On porte à 95°C dans la masse réactionnelle la réaction se déroule sous vide partiel (∼ 500 mm d'Hg) pour favoriser l'élimination de l'éthanol. Après 5 h de réaction on rajoute de nouveau 7,3 g (0,032 moles) de Ti(OEt)₄. On laisse réagir 120 h. Une analyse par chromatographie gazeuse indique que le taux de transformation de l'alcool perfluoré est de 100%. On rajoute 60g d'alumine neutre (50-200 µm) et on filtre sur carton. On dévolatilise les légers sous vide pompe (5 mm d'Hg, 3h40).

On réalise ensuite une distillation sous vide qui permet de séparer les deux monomères mono et bis-perfluoroalkyles.

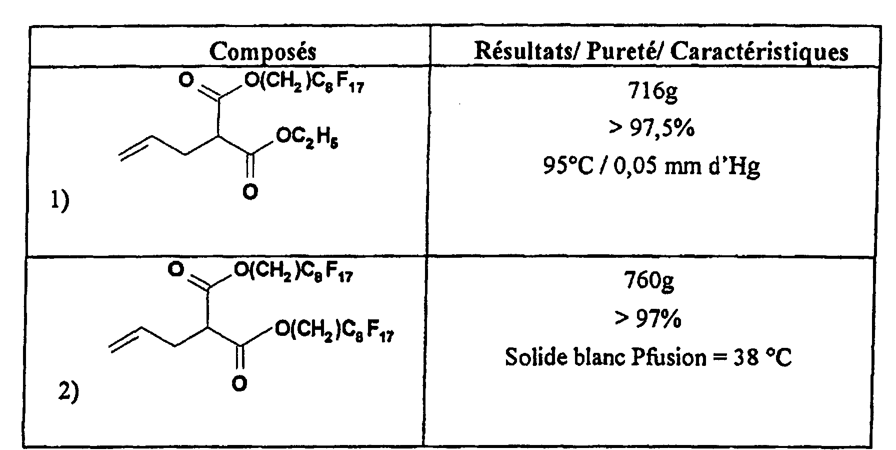

Les analyses IR et RMN confirment la structure de ces deux monomères.

### EXEMPLE X : SYNTHESE DE POS SUBSTITUES PAR DES GREFFONS Gf (β) BIFIDES BI-PERFLUORES ET PAR DES FONCTIONS E1 βe = PREROTULE Gf :

Dans un réacteur de 1000 ml sous azote, on introduit 217,3 g de toluène sec que l'on porte à 98°C. On rajoute ensuite 2,2 µl de catalyseur de KARSTEDT (11,5% en poids de Pt). On coule simultanément 24,6g d'une huile silicone à motifs Si-H de structure Me₃SiO(SiMe₂O)₂₅(SiMeHO)₇₀SiMe₃ (Titre Si-H: 11,27 mole Si-H /kg soit 0,277 mole Si-H) et 230,2g (0,222 mole) du monomère bis-perfluoroalkyle fondu (∼ 70°C) décrit dans l'exemple N°1. Durée de la coulée 2h15. On laisse réagir à 98°C durant 21h40mn. Le taux de transformation des motifs Si-H est de 79,3%. On rajoute ensuite 50,6g (0,361 mole) de l'allyle de l'anhydride succinique et 2,2 µl du catalyseur de KARSTEDT. On laisse réagir à 98°C durant 50h. Le taux de transformation des motifs Si-H est quasiment complet. La masse réactionnelle est hétérogène. On laisse décanter à 25°C et on obtient une séparation nette en deux phases. On filtre sur BUCHNER et on lave au toluène. On obtient un solide blanc. On rajoute de l'eau (∼ 100 ml) et on laisse réagir 17h à 25°C. On rajoute du toluène pour éliminer les monomères libres. On décante, on soutire la phase toluènique et le solide est ensuite filtré et séché sous vide à 25°C sous 5 mm d'Hg. On récupère 465 g d'un solide blanc. Les analyses IR et RMN confirment la structure de cette huile silicone. Le point de fusion est voisin de 65°C et l'analyse élémentaire en fluor donne une teneur de 53.8 %.

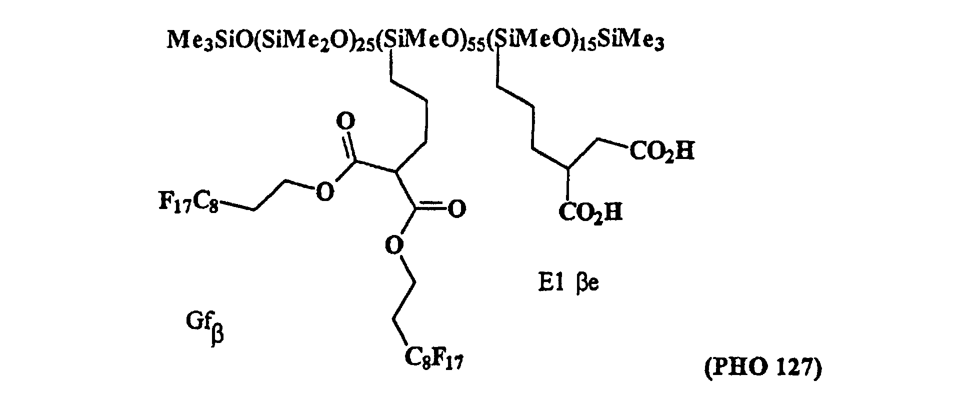

### EXEMPLE XI : SYNTHESE DE POS SUBSTITUES PAR DES GREFFONS Gf BIFIDES MONO PERFLUORES ET PAR DES FONCTIONS E1 βe = PREROTULE Gf :

Dans un réacteur de 1000 ml sous azote, on introduit 145,2g de toluène sec et on porte le milieu à 94°C. On rajoute 5 µl de catalyseur de KARSTEDT (11,5% de Pt). On coule ensuite un mélange constitué de 578,5g (0,936 mole) du monomère mono perfluoré décrit dans l'exemple VIII et 105,6g d'une huile silicone à motifs Si-H de structure Me₃SiO(SiMe₂O)₂₅(SiMeHO)₇₀SiMe₃ (Titre Si-H: 11,27 mole Si-H /kg soit 1,19 mole Si-H). La durée de coulée est de 2h. On laisse réagir à 94°C durant 28h30. Le taux de transformation est de 53%. On rajoute alors 5µl de catalyseur de KARSTEDT (11,5% de Pt) et on laisse réagir au total 69h30. Le taux de transformation des motifs Si-H est de 73%. On introduit ensuite 96,2g (0,925 mole) de l'allyle de l'anhydride succinique. On laisse réagir 128h. Le taux de transformation des motifs si-H est de 96,5%. On rajoute environ 100 ml d'eau et on laisse agité 15h à 25°C. On laisse décanter. La phase organique est dévolatilisée (5h à 120°C sous 2 mm bars) et on récupère 1330g d'une huile visqueuse. Les analyses IR et RMN confirment la structure de cette huile silicone et l'analyse élémentaire en fluor donne une teneur de 41 %.

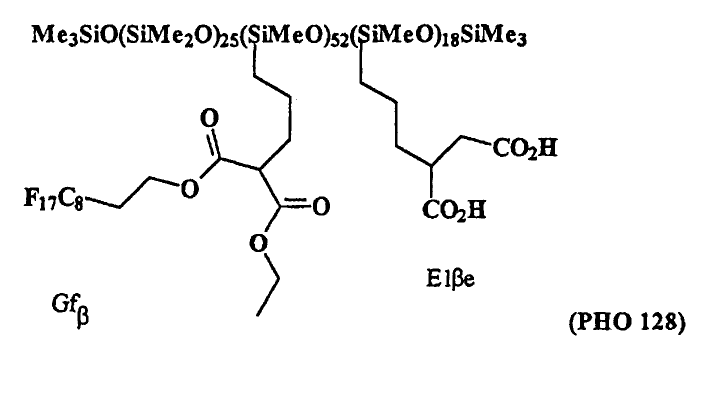

### EXEMPLE XII : SYNTHESE DE POS SUBSTITUES PAR DES GREFFONS Gf BIFIDES MONO PERFLUORES ET PAR DES FONCTIONS E1 βe = PREROTULE Gf:

Dans un réacteur de 1000 ml sous azote, on introduit 775g de toluène sec et 0,2944g de PtCl₂(PhCN)₂ (Solution catalytique : 0,0169 g de catalyseur dans 1,8429 g de
CH₂Cl₂) dans le CH₂Cl₂. On porte à 80°C et on coule en 2h une solution de 134,9g (1,5209 equi. de motifs Si-H) d'une huile silicone de structure Me₃SiO(SiMe₂O)₂₅(SiMeHO)₇₅
SiMe₃. On laisse réagir à 80°C durant 24h en rajoutant deux fois 0,15g de la solution catalytique de Pt. Le taux de transformation des motifs Si-H est de 69,79%. On rajoute ensuite à 80°C, 106g de l'allyle de l'anhydride succinique et 59 µl d'une solution de catalyseur de KARSTEDT (Titre en Pt: 11,5%). On laisse réagir 24h. Le taux de transformation est de 96%. On dévolatilise la masse réactionnelle (120°C, 5 mm d'Hg). L'huile obtenue est lavée 6 fois par 250 ml d'eau. On dévolatilise de nouveau et on obtient 852,5g d'une huile visqueuse. Les analyses IR et RMN confirment la structure de cette huile silicone.

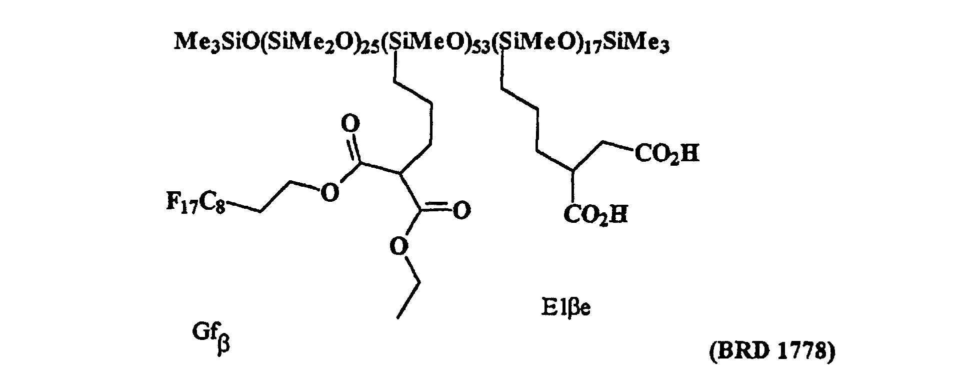

### EXEMPLE XIII : SYNTHESE DE POS SUBSTITUES PAR DES GREFFONS Gf (β) BIFIDES BI-PERFLUORES ET PAR DES FONCTIONS E1 βe = PREROTULE Gf

Dans un réacteur de 5l, on introduit sous azote 50g de toluène et 12,5 mg de Pt sous la forme du catalyseur de KARSTEDT. On porte la masse réactionnelle à 85°C et on coule un mélange constitué de 400g de toluène sec, 874,94 g (0,864 mole) du monomère bis-perfluoroalkyle décrit dans l'exemple N°1 et 625,06g d'une huile silicone à motifs Si-H de structure: Me₃SiO(SiMe₂O)₂₀₀(SiMeHO)₄₅SiMe₃ (1,55 mole de motifs Si-H). La durée de coulée est de 3h. On laisse réagir 4h à cette température. Le taux de transformation des motifs Si-H est de 55%. On récupère 1901g d'une huile limpide.

Dans un réacteur de 2000 ml on introduit 95,6g (0,682 mole) d'allyle de l'anhydride succinique et 0,165 3g d'une solution de catalyseur de KARSTEDT (11,5% Pt). On porte la masse réactionnelle à 105°C et on coule 950,6g de l'huile silicone à motifs Si-H précédente (3,412 mole de motifs Si-H). On laisse réagir à cette température durant 4h. Le taux de transformation des motifs si-H est de 96,3%. On rajoute ensuite 500 ml d'eau. On laisse réagir 7h à reflux. On refroidir et on dévolatilise sous 3 mm d'Hg à 110°C durant 4h. On récupère 781,6g d'une huile visqueuse. Les analyses IR et RMN confirment la structure de cette huile silicone.

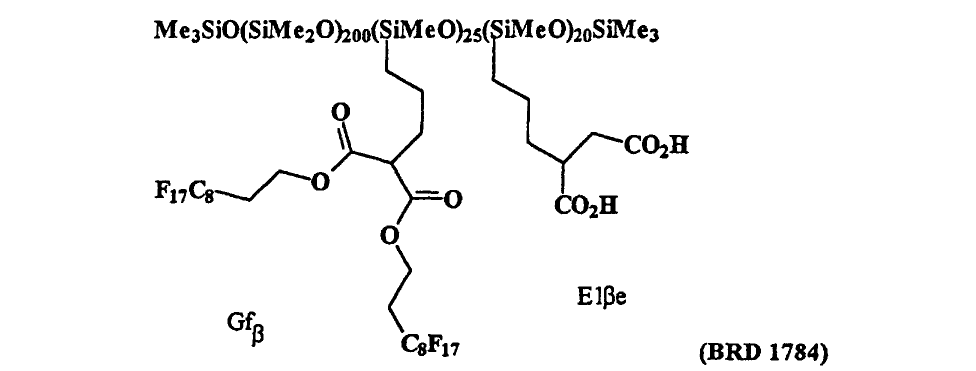

### EXEMPLE XIV : SYNTHESE DE POS SUBSTITUES PAR DES GREFFONS Gf (β) BIFIDES BI-PERFLUORES ET PAR DES FONCTIONS E2 (hals) = PREROTULE Gf :

Dans un réacteur de 2000 ml sous azote, on introduit 93,01g (0,442 mole) d'allyloxy-HALS et 0,1651g d'une solution de catalyseur de KARSTEDT (11,5% de Pt). On porte à 95-98°C. On coule ensuite en 2h 949,6g de l'huile silicone à motifs Si-H de l'exemple 6, fonctionnalisée à 55 % par le monomère à motif bis-perfluroalkyle décrit dans l'exemple N°1. On laisse réagir 2h à 100°C. Le taux de transformation des motifs Si-H est complet. On laisse refroidir et on ajoute 50 ml de toluène. On dévolatilise durant 5h à 110-140°C sous 2-5 mm d'Hg. On récupère 755,5g d'un liquide très visqueux. Les analyses IR et RMN confirment la structure de cette huile silicone.

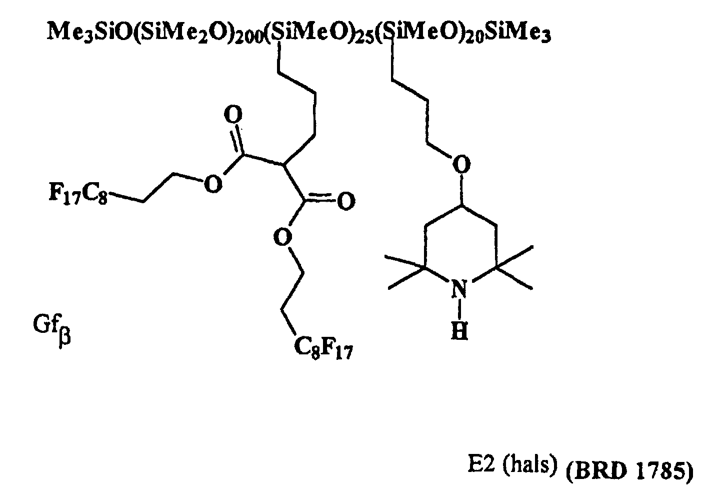

### EXEMPLE XV: SYNTHESE DE POS SUBSTITUES PAR DES GREFFONS Gf (β) BIFIDES BI-PERFLUORES ET PAR DES FONCTIONS E2 (hals) = PREROTULE Gf :

Dans un réacteur de 250 ml sous azote on introduit 5g de toluène sec et 1,2 mg de Pt sous la forme de catalyseur de KARSTEDT (11,45% de Pt). On porte à 95°C la masse réactionnelle et on coule en 1h un mélange constitué de 20,24g (0,02 mole) du monomère à motif bis-perrfluoroalkyle décrit dans l'exemple N°1 et 69,15g d'une huile silicone à motifs Si-H de structure suivante: Me₃SiO(SiMe₂₃O)₂₂₀(SiMeHO)₂₅SiMe₃ (0,1 mole de motifs Si-H ). On rajoute 25 g de toluène et on laisse réagir à cette température durant 1h10. Le taux de transformation des motifs SiH est de 25,8 %.

Dans un réacteur de 2000 ml sous azote, on introduit 18,99 g (0,0963 mole) d'allyloxy-HALS et 20,76 mg d'une solution de catalyseur de KARSTEDT (11,5% de Pt). On porte à 98°C. On coule ensuite en 1 h 119,39 g (0,0715 ; moles SiH) de l'huile silicone à motifs Si-H fonctionnalisée à 25,8 % par le monomère à motif bis-perfluoroalkyle décrit dans l'exemple N° 1. On laisse réagir 1 h à 100°C. Le taux de transformation des Si-H est complet. On laisse refroidir. On dévolatilise durant 6 h à 140° C sous 3 mn d'Hg. On récupère 86,1 g d'un liquide très visqueux. Les analyses IR et RMN confirment la structure de cette huile silicone.

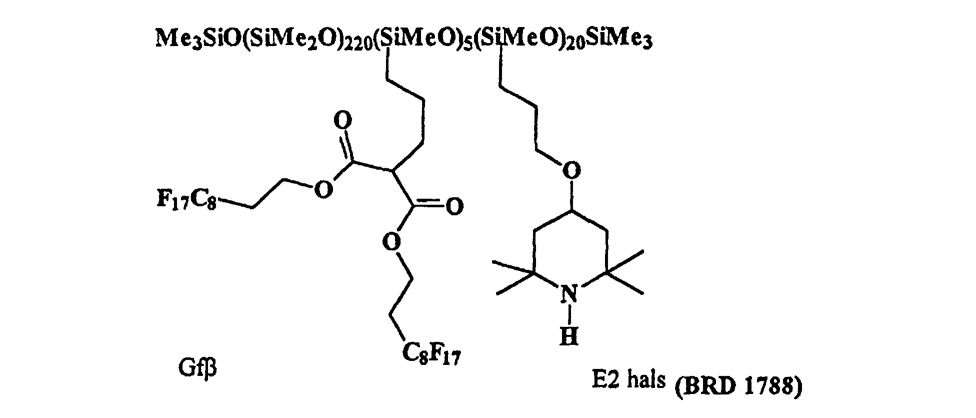

### EXEMPLE XVI: SYNTHESE DE POS SUBSTITUES PAR DES GREFFONS Gf (β) BIFIDES BI-PERFLUORES ET PAR DES FONCTIONS E3 (hals) = PREROTULE Gf

Dans un réacteur de 250 ml sous azote on introduit 120g du monomère 2 à motif bis-perfluoroalkyle décrit dans l'exemple IX et 3,5 µl d'une solution de catalyseur de KARSTEDT (11,5% de Pt). La masse réactionnelle est portée à 90°C. On introduit ensuite en 1h30mn une huile silicone à motifs Si-H de structure Me₃SiO(SiMeHO)₁₅(SiMeOETO)₃₅ SiMe₃ (0,105 mole de motifs Si-H). On laisse réagir 46h à 90°C. Le taux de transformation des motifs Si-H est de 96,4%. On dévolatilise durant 2h à 200°C sous 3 mm d'Hg. On récupère 127,6 g d'une huile limpide visqueuse. Les analyses IR et RMN confirment la structure de cette huile silicone.

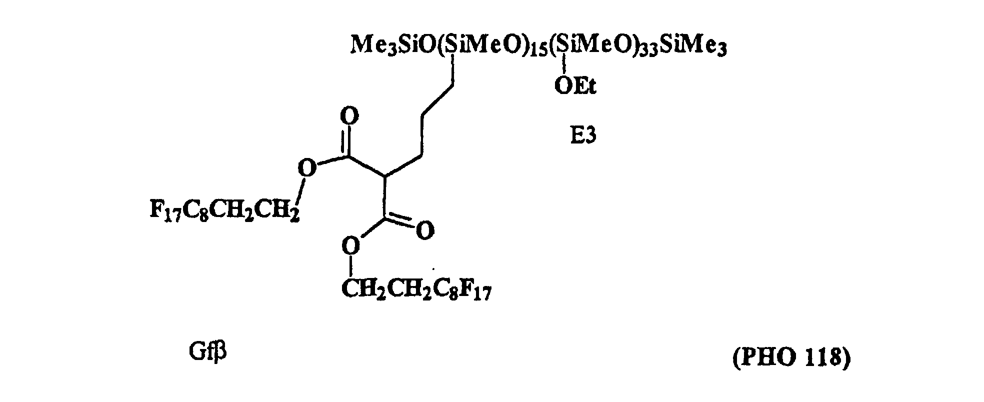

### EXEMPLE XVII : DETERMINATION DU TAUX DE CRISTALLINITE:

Le tableau 1 suivant rassemble le taux de cristallinité mesuré par RX sur certains monomères et silicones fonctionnalisées.

Ces résultats mettent en évidence l'organisation résultant de la structure particulière du monomère 2 à motifs bis-perfluoroalkyles décrit dans l'exemple IX.

L'analyse Thermique différentielle réalisée sur les mêmes produits met également en évidence un pic de cristallisation.

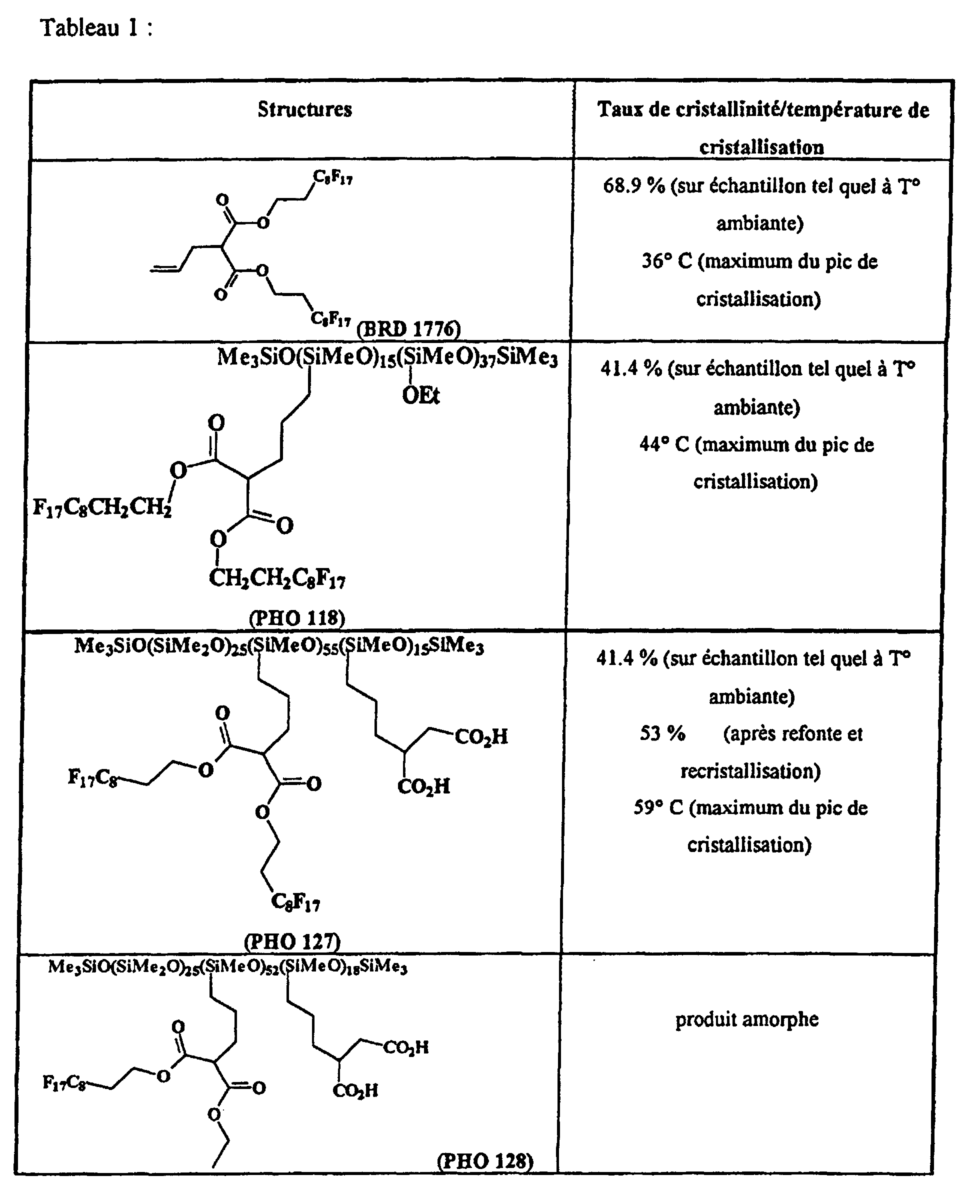

### EXEMPLE XVIII : SYNTHESE - MISE EN EMULSION ET APPLICATION DE POS à GREFFONS Gf BIFIDES MONO-PERFLUORES ET A GREFFONS E (βe) :

### XVIII.1. Les huiles de structures suivantes ont été synthétisées en suivant le protocole opératoire tel que mis en oeuvre aux exemples IX, X, XI et XII supra.

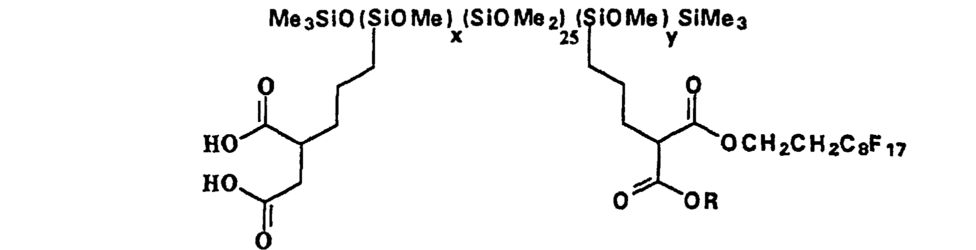

**Tableau 2**

| Echantillons | **x** | **y** | **R** |
|---|---|---|---|
| **PHO 105** | 15 | 55 | C₂H₅ |
| **PHO 107** | 55 | 15 | C₂H₅ |
| **PHO 127** | 15 | 55 | CH₂CH₂C₈F₁₇ |
| **PHO 128** | 15 | 55 | C₂H₅ |

### XVIII.2. Mise en émulsion

### PHO 105

On mélange les ingrédients suivants :

| | |
|---|---|
| PHO 105 : | 6g |
| AD33 : | 0,5 g |
| GENAPOL X080 : | 0,1 g |
| Alcool gras C₁₃ OEt. | |

Alcool gras C₁₃ OEt.

On ajoute progressivement de l'eau et on mélange manuellement. On rajoute ensuite 7 g H₂O et on émulsifie à l'aide d'un mélangeur SILVERSTON.

On obtient une émulsion blanche (extrait sec = 46,3 %, granulométrie moyenne = 7.965 µm).

### PHO 107

On mélange les ingrédients suivants :

| | |
|---|---|
| PHO 100 : | 2,5 g |
| AD33 : | 0,5 g |
| Butyldigol : | 0,25 g |
| BRIJ 72 : | 0,5 g |

On ajoute progressivement de l'eau et on mélange manuellement. On rajoute ensuite 10 gH₂O et on émulsifie à l'aide d'un mélangeur SILVERSON.

On obtient une émulsion marron clair (extrait sec = 31 %).

### XVIII.3. Outre les POS fluorés selon l'invention, on teste également des polyacrylates perfluorés commerciaux : le FC 396 de 3 M et l'AG 850 d'ASAHI. Les caractéristiques des produits testés sont données dans le tableau 3 ci-après.

**Tableau n°3 :**

| Caractéristiques globales des huiles synthétisées et de produits commerciaux | | | | | |
|---|---|---|---|---|---|
| | **x** | **y** | **R** | **Mn (calculée)** | **%fluor** |
| **PHO 100** | 0 | 70 | C₂H₅ | 49500 | 45.7∗ |
| **PHO 105** | 15 | 55 | C₂H₅ | 42500 | 41.7∗ |
| **PHO 107** | 55 | 15 | C₂H₅ | 24200 | 20.0∗ |
| **PHO 127** | 15 | 55 | CH₂CH₂C₈F₁₇ | 65600 | 54.1∗/53.8∗∗ |
| **PHO 128** | 15 | 55 | C₂H₅ | 42500 | 41.7∗/41.1∗∗ |
| **FC 396** | polyacrylate | perfluoré | chaine C₈F₁₇ | | 17∗∗ |
| **AG 850** | polyacrylate | perfluoré | chaine C₈F₁₇ | | 13∗∗ |

| | | | | | |
|---|---|---|---|---|---|
| ∗ calculé | | | | | |
| ∗∗ dosé | | | | | |

### XVIII.4. Application

Deux séries de tests sont effectuées :

### - application en solvant

Dépôt de 700 ppm de fluor (imprégnation d'un rond de tapis polyamide PA de 15 g) à partir de solutions diluées à 1% dans trichlorotrifluoroéthane. Ces POS fluorés mis en oeuvre sont : PHO 105, 107, 127, 128. Le FC 396 et l'AG 850 sont également employés en solution.

Séchage 6 minutes à 80° C puis traitement thermique 4 minutes à 140° C.

### - application en émulsion

Dépôt de 700 ppm de fluor (pistolage d'un rond de tapis PA de 15 g) à partir des émulsions précédemment décrites : PHO 105 et PHO 107. On teste également le FC 396 et l'AG 850 en émulsion.

Séchage 6 minutes à 80° C puis traitement thermique 4 minutes à 140° C.

On évalue les propriétés d'hydrophobie et d'oléophobie par la pénétration ou non de liquides de tension superficielles décroissante (sur trois gouttes de liquide).

On attribue le numéro correspondant au liquide de plus faible tension superficielle qui ne pénètre pas au bout de 30 secondes pour le test d'oléophobie et de 3 minutes pour le test d'hydrophobie.

**Tableau 4**

| indice d'hydrophobie | composition IPA/H₂O |
|---|---|
| 0 | 0/100 |
| 1 | 10/90 |
| 2 | 20/80 |
| 3 | 30/70 |
| 4 | 40/60 |
| 5 | 50/50 |
| 6 | 60/40 |
| 7 | 70/30 |
| 8 | 80/20 |
| 9 | 90/10 |
| 10 | 100/0 |

**Tableau 5**

| indice d'oléophobie | composition |
|---|---|
| 1 | Nujol |
| 2 | Nujol (65)/n-hexadécane (35) |
| 3 | n-hexadécane |
| 4 | n-tétradécane |
| 5 | n-dodécane |
| 6 | n-décane |
| 7 | n-octane |
| 8 | n-heptane |

Les compositions sont données en volume à 20° C.

### Résultats

**Tableau 6**

| | indice d'oléophobie | indice d'hydrophobie |
|---|---|---|
| FC 396 (émulsion) | 4 | 4 |
| FC 396 (solvant) | 4 | 3 |
| AG 850 (émulsion) | 5 | 3 |
| AG 850 (solvant) | 5 | 2 |
| PHO 105 (émulsion) | 5 | 2 |
| PHO 105 (solvant) | 4 | 1 |
| PHO 107 (solvant) | 4 | 1 |
| PHO 107 (émulsion) | 4 | 1 |
| PHO 127 (solvant) | 6 | 3 |
| PHO 128 (solvant) | 4 | 1 |

### XVIII.5 Etude Physico-chimique

### 5.1. Mouillage des dépôts

La transcription de la valeur d'usage "antisalissure" en terme de propriétés physico-chimiques peut se résumer au comportement du dépôt vis à vis de liquides (mouillage) et à sa tenue dans le temps au contact avec un liquide.

### 5.2. Méthodologie de l'étude

L'étude physico-chimique simple mise en place est la suivante :

### 1* Dépôt du polymère de traitement par tournette à partir de solutions à 0.25 % de polymère. Le FC 396 (Scotchguard), traitement de référence a été également étudié.

Sur cette base, 6 familles d' échantillons sont étudiées - L'échantillon "tel que" ou **initial** et un échantillon **recuit** à 140°C pendant 4 mn. Ces 2 échantillons sont ensuite repris et soumis :
soit à un test de "lessivage" consistant à faire tomber pendant 10 mn des gouttes d'eau tombant d'une hauteur de 1 mètre **(initial et lavé, recuit et lavé)**.
soit à un test de trempage dans de l'eau déminéralisée pendant 30 mn **(initial et trempé, recuit et trempé)**

Ces 2 tests ont évidemment pour but de connaitre la persistance du traitement.

### 2* Mesure de l'angle et de son évolution dans le temps (0 à 60 secondes) en contact avec les liquides de référence (eau et CH₂I₂)

Les expériences ont été faites sur les produits suivants : PHO105, PHO107, PHO127, FC396 et le Témoin polyamide PA66 non traité

### 5.1.2.Résultats

Dans le tableau n°7, on a reporté les angles obtenus au bout de 60 secondes.

**Tableau 7**

| Tableau n°7 : Evolution des angles de liquides tests sur les surfaces traitées ou non | | | | | |
|---|---|---|---|---|---|
| **Echantillons** | **Témoin** | **PHO 105** | **PHO 107** | **PHO 127** | **FC 396** |
| **Initial** | | | | | |
| **H2O** | 50° | 90° | 50° | 115° | 100° |
| **CH2I2** | 30° | 70° | 90° | 90° | 50° |
| **Recuit** | | | | | |
| **H20** | 50° | 90° | 90° | 112° | 110° ou 75° |
| **CH2I2** | 50° | 80° | 90° | 95° | 50° |
| **Initial lavé** | | | | | |
| **H2O** | 100° | | | 105° ou 70° (1 point) | 103° |
| **CH2I2** | 70° | | | 92° ou 45° (1 point) | 45° |
| **Recuit lavé** | | | | | |
| **H2O** | 100° | | | 110° | 110° ou 80° |
| **CH2I2** | 85° | | | 90° | 60° |
| **Initial trempé** | | | | | |
| **H2O** | 95° | | | 112° | 112° |
| **CH2I2** | 80° | | | 90° | 50° |
| **Recuit trempé** | | | | | |
| **H2O** | 95° | | | 116° | 112° |
| **CH2I2** | 70° | | | 95° | 60° ou 90° |

Les conclusions sont les suivantes :
* Le PHO 127 présente une très forte oléophobie et hydrophobie et reste peu sensible au recuit et au lessivage
* De façon générale, les produits POS fluorés selon l'invention (PHO, 105, 107, 127, 128) présentent une meilleure tenue au lessivage que le FC 396.
* Il n'est pas nécessaire de "surdoser" en groupements perfluorés pour obtenir les propriétés d'hydrophobie et d'oléophobie. Le PHO107, pour lequel y = 15, présente des résultats comparables après recuit aux autres Silicones fonctionalisées à groupement monoester perfluoré.

### EXEMPLE XIX SYNTHESE DE NOUVEAUX SILICONES BIFONCTIONNALISES AUX EXTREMITES PAR DES MOTIFS EPOXYDES ET PERFLUOROALKYLES DE FORMULE GENERALE SUIVANTE :

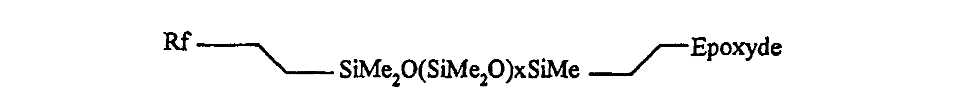

avec de préférence x = 0.

Ce type de silicones bifonctionnalisées aux extrémités par des motifs époxydes pourraient être utiles pour hydrophobiser et oléophobiser des surfaces (bois, papier) ou des matrices de type silicone.

Préparation de : 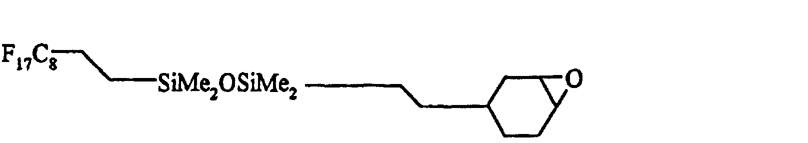
- a - Dans un ballon de 1 l sous azote on introduit : 300 g de Vi-C₈F₁₇ (0,647 mole), 250 g de HSiMe₂OSiMe₂SiH (1,866 mole) et 150 g de M₂. On rajoute ensuite 2g de CO₂CO₈ (2857 ppm / masse totale). On laisse réagir 48 h à 25° C. Une analyse CPG montre que le taux de transformation du Vi-C₈F₁₇ est proche de 100 %. On filtre sur papier et on évapore le M₂ et M'₂ en excès (100 °C/50 mm d'Hg). On distille la masse réactionnelle sous vide pompe et on récupère 289 g d'un liquide incolore (T ébullition : 93° C / 6 mm d'Hg). La pureté est > 98 % (GPC). Les analyses RMN et IR confirment la structure du produit. Taux de Si-H : 1,715 equ/kg (Théo : 1,673 éq / kg). Rendement isolé : 77 %. On obtient : 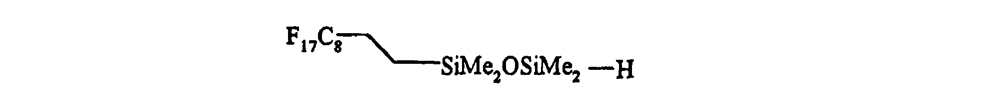
- b - Dans un ballon de 100 ml sous azote on introduit : 23 g de l'époxyde du vinylcyclohexène (0,185 mole), 200 g du produit précédent (GPE 1218) (0,34 mole) et 50 g de toluène sec. On rajoute ensuite 10 ppm de platine / masse totale sous la forme du catalyseur de Karstedt. On porte à 90° C durant 24 h. Le taux de transformation des motifs Si-H est proche de 100 %. On évapore le solvant et le VCMX en excès. On récupère 225 g d'une huile légèrement jaune dont les analyses RMN et IR confirment la structure. La pureté est > 98 %. On obtient le diméthyldisiloxane α-perfluoré et ω-époxydé dont la formule est donnée ci-dessus.

## Revendications

1. Polyorganosiloxanes (POS) (per)fluorés de formules générales (**I**) et (**II**) suivantes : 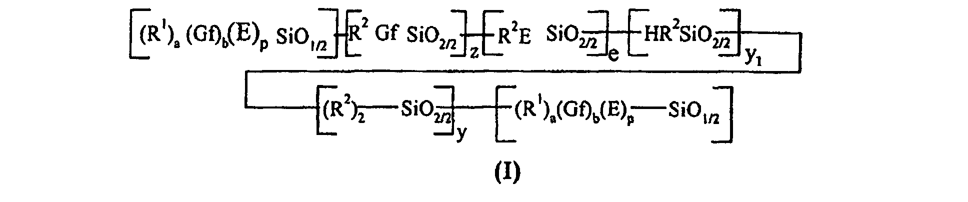 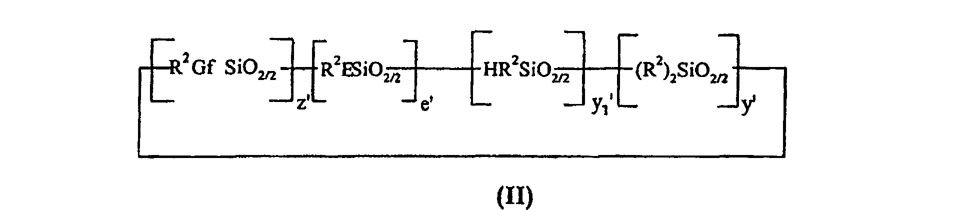 dans lesquelles :
• a + b + p = 3 ; a = 2, 3 ; b, p = 0, 1;
z étant compris entre 0 et 200, de préférence entre 1 et 90,
y₁ étant compris entre 0 et 10, de préférence entre 0 et 5,
y étant compris entre 0 et 50, de préférence 0 et 25,
e étant compris entre 1 et 200, de préférence entre 1 et 90,
**avec les conditions** selon lesquelles :
Δ si z ≠ 0, alors 5 ≤ z + y₁ + y + e ≤ 200, de préférence 10 ≤ z + y₁ + y + e ≤ 100 et [z/(z + y + y₁ + e + 2)]. 100 ≥ 3, de préférence 5,
Δ si z = 0, alors 5 ≤ y + y₁ + e ≤ 100, b étant ≠ de 0 dans au moins l'un des motifs siloxyles terminaux M monovalents,
Δ si e ≠ 0, alors 5 ≤ z + y₁ + y + e ≤ 200, de préférence 10 ≤ z + y₁ + y + e ≤ 100 et [z/(z + y + y₁ + e + 2)]. 100 ≥ 3, de préférence 5,
Δ et si e = 0, alors 5 ≤ y + y₁ + z ≤ 100, p étant ≠ 0 dans au moins l'un des motifs M,
• 1 ≤ z' ≤ 9 ; de préférence 1 ≤ z' ≤ 4,5 ;
• 0 ≤ y'₁ ≤ 0,5 ; de préférence 0 ≤ y'₁ ≤ 0,25 ;
• 0 ≤ y' ≤ 5 ; de préférence 0 ≤ y' ≤ 0,5 ;
• chaque radical R¹, R², d'une part, est identique ou différent de ses semblables de même exposant et de l'autre radical d'exposant différent et, d'autre part, représente un groupement (cyclo)alkyle linéaire ou ramifié en C₁-C₁₂, - de préférence C₁-C₆-, un aryle, un aralkyle, un alkylaryle, ces groupements étant éventuellement substitués,
• **Gf** est un reste monovalent fonctionnel éventuellement (per)fluoré de nature identique ou différente dans les z ou z' motifs siloxyles D et/ou les deux motifs siloxyles M où il est présent et répondant à la formule moyenne ci-après : 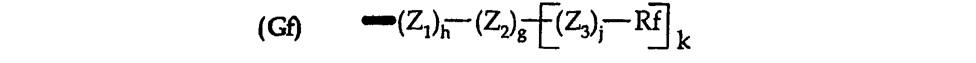
Δ avec h = 0,1 ; g = 0,1 ; j = 0,1 et k = 1 ou 2 ;
Δ **avec la condition** selon laquelle au moins un reste **Gf** est présent dans ledit POS (I) ou (II), de préférence, les restes **Gf** sont présents au moins à hauteur de 60 % molaire ;
Δ Z₁ étant un radical divalent de formule : 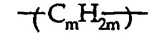 avec m ≥ 2 ;
Δ Z₂ étant un radical mono, di ou trivalent de formule :
. α. 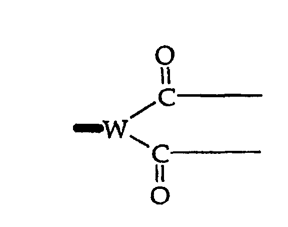
. l'une ou les deux valences libres du (ou des) carbonyle(s) étant reliées à -Z₃Rf et, dans le cas où l'une seulement des susdites valences libres est reliée à -Z₃Rf, alors l'autre est reliée à un hydroxyle,
. β. 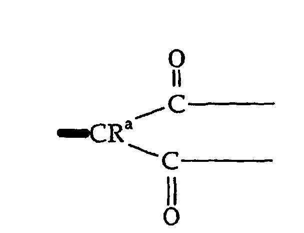 au moins l'une des valences libres des carbonyles étant reliée à -Z₃-Rf, et, dans le cas où l'une seulement de ces valences libres est reliée à -Z₃-Rf, alors l'autre est reliée à un alcoxyle en C₁-C₆, linéaire ou ramifié.
. R^{a} = H, aryle ou alkyle inférieur linéaire ou ramifié en C₁-C₆, de préférence CH₃ ;
. γ. 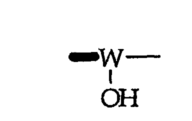
. δ. 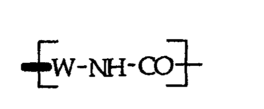
. ε. 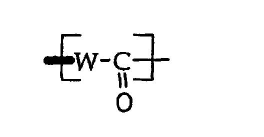
. η. 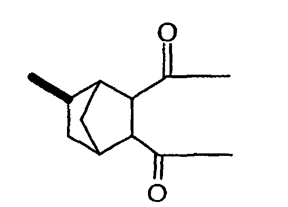
. h = 0 dans **Gf**,
. l'une ou les deux valences libres du (ou des) carbonyle(s) étant reliées à -Z₃-Rf et, dans le cas où l'une seulement des susdites valences libres est reliée à -Z₃Rf, alors l'autre est reliée à un hydroxyle ou à un alcoxyle en C₁-C₆ linéaire ou ramifié,
. θ. 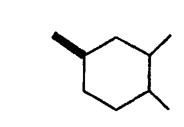
. l'une et/ou l'autre des deux valences libres différentes de la valence 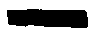 , étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ;
. λ. 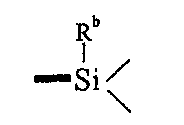
. l'une et/ou l'autre des deux valences libres différentes de la valence 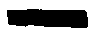 , étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ;
. R^{b} = H ou alkyle inférieur en C₁-C₆ linéaire ou ramifié ; le méthyle étant préféré,
→ W représentant un radical hydrocarboné cyclique ou non, en particulier aliphatique et/ou alcényle et/ou alcynyle et/ou aromatique, W étant, en outre exempt de liaison étheroxyde - O - ;
Δ Z₃ est un radical divalent de formule: 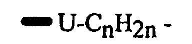
• avec n ≥ 1 et U = O, S, NH, NHSO₂, de préférence O;
Δ et Rf étant un radical perfluoré, et plus préférentiellement encore un radical perfluoroalkyle linéaire ou ramifié répondant à l'une des formules suivantes :
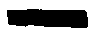 C_{q}F_{2q} - CF₃ avec q ≥ 0,
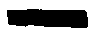 C_{q}F_{2q} - H avec q ≥ 1 ;
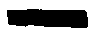 NR^{rf}SO₂ Cq F₂q - CF₃ avec q ≥ 0 et R^{rf} = H, aryle, ou alkyle inférieur en C₁-C₆ linéaire ou ramifié (de préférence CH₃);
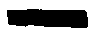 NR^{rf}SO₂ Cq F₂q - H avec q ≥ 1 et R^{rf} tel que défini supra ;
• **E** est un reste fonctionnel monovalent, différent de **Gf** ci-dessus défini, de nature identique ou différente dans les e ou e' motifs siloxyles D et/ou les deux motifs siloxyles M où il est présent et choisi, de préférence, parmi les groupements présentant au moins l'une des fonctionnalités suivantes E₁ à E₁₃ :
Δ E₁ = 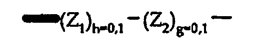 dans laquelle :
* Z₁ répond à la même définition que celle donnée supra pour la définition de **Gf**, avec m ≥ 2,
* Z₂ correspond à :
. αe. 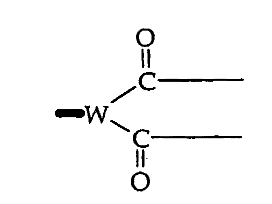 avec au moins l'une des valences libres d'un carbonyle liée à un OH, ou bien encore ces deux valences libres sont toutes deux reliées à un même atome d'oxygène,
. βe. 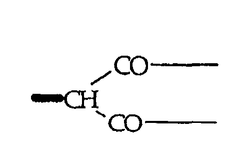 avec les deux valences libres des carbonyles liées chacune à un alcoxyle en C₁-C₆, linéaire ou ramifié,
. γe. 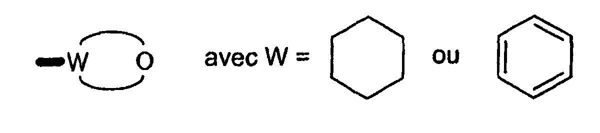
. δe. 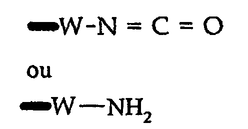
. εe. 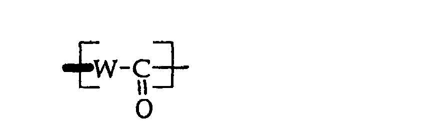 la valence libre du carbonyle étant reliée à un alcoxyle en C₁-C₆, linéaire ou ramifié, ou bien encore à un OH,
. ηe. 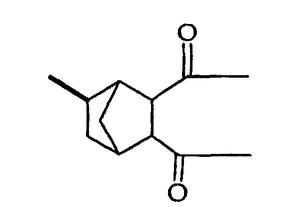 avec au moins l'une des valences libres d'un carbonyle liée à un OH à un alcoxyle en C₁-C₆ linéaire ou ramifié, ou bien encore ces deux valences libres étant toutes deux reliées à un même atome d'oxygène ;
. θe. 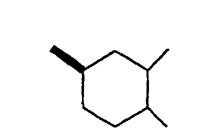
. l'une et/ou l'autre des deux valences libres différentes de la valence 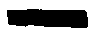 , étant reliée(s) à Z₃-Rf, et dans le cas où l'une seulement de ces deux valences est reliée à -Z₃-Rf alors l'autre est reliée à OH ou à un alcoxyle en C₁-C₆ linéaire ou ramifié ;
. λe. 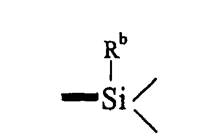
. R^{b}= H ou alkyle inférieur en C₁-C₆ linéaire ou ramifié ; le méthyle étant préféré,
* Z₁, Z₂ étant identiques ou différents à leurs correspondants intervenant dans **Gf** et décrits ci-dessus,
* W étant tel que défini ci-dessus pour **Gf ;**
Δ E₂ = amine ; E₃ = alcoxyle ; E₆ = hydroxy ; E₇ = trialcoxysilyl ; E₈ = amide ; E₉ = ester ; E₁₀ = phénol ; E₁₁ = arylalcoxy ; E₁₂ = aryloxy, E₁₃ = étherhydroxy.

2. POS selon la revendication 1, **caractérisés en ce qu'**ils répondent à la formule moyenne suivante **(I.1):** 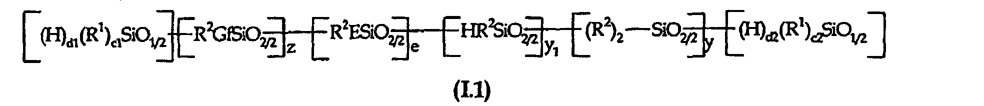 dans laquelle :
• **Gf** correspond à la définition selon la revendication 1 avec h = g = 1 ou h = 1 et g = 0,
• E = E₁ à E₁₃,
• R¹, R², sont tels que définis dans la revendication 1, de préférence méthyle, propyle ou butyle,
• c₁ + d₁ = 3 et, de préférence c₁ = 2, d₁ = 1 ;
• c₂ + d₂ = 3 et, de préférence c₂ = 2, d₂ = 1 ;
• 1 ≤ z ≤ 90, de préférence 1 ≤ z ≤ 50,
• 1 ≤ e ≤ 100, de préférence 1 ≤ e ≤ 60,
• 0 ≤ y₁ ≤ 10, de préférence 0 ≤ y₁ ≤ 5,
• 0 ≤ y ≤ 50, de préférence 0 ≤ y ≤ 25.

3. POS selon la revendication 2, **caractérisés en ce qu'**ils répondent à la formule (**I1.1**) suivante : 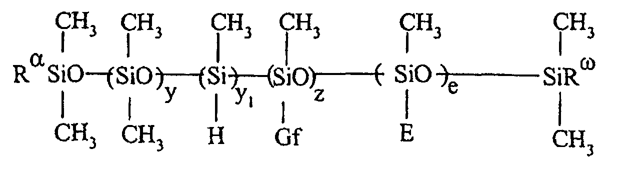 avec Gf et E tels que définis dans la revendication 1, y, y₁, z et e tels que définis dans la revendication 2 et R^{α}, R^{ω} identiques ou différents et représentant : H ou alkyle en C₁-C₆.

4. POS selon la revendication 1, **caractérisés en ce qu'**ils répondent à la formule **(I.1.2.)** suivante : 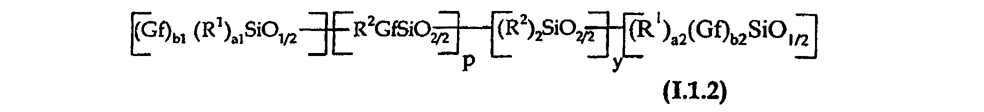 dans laquelle :
+ **Gf** est tel que défini dans la revendication 1
+ R¹ identique ou différent de ses semblables de même exposant = R¹ tel que défini dans la revendication 1
ou bien encore correspond à une fonctionnalité (E) telle que définie dans la revendication 1, de préférence un radical époxyfonctionnel ;
+ R² identique ou différent de ses semblables de même exposant et répondant à la même définition que celle donnée dans la revendication 1 ;
+ a¹ + b¹ = a² + b² = 3 ;
+ a₁, a₂ = 2 ou 3 ; b₁, b₂ = 0 ou 1 ;
+ 10 ≤ y ≤ 100, de préférence 0 ≤ y ≤ 10 ;
+ 0 ≤ p ≤ 50, de préférence 0 ≤ p ≤ 5 ;
+ si p = 0, alors 5 ≤ y ≤ 100 et b₁ et/ou b₂ ≠ 0 ;
→ la formule dans laquelle R¹ = CH₃, b₁ = 1 et b₂ = 0, 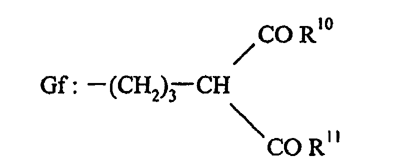 avec R¹⁰, R¹¹ = ou ≠ et représentant OH, alcoxyle C₁-C₆ ou Z₃Rf selon la revendication 1, l'un au moins des radicaux R¹⁰, R¹¹ = Z₃Rf, p = 0, et y = 0 ou 1,
→ et la formule dans laquelle R¹ = CH₃, b₁ = b₂ = 0. 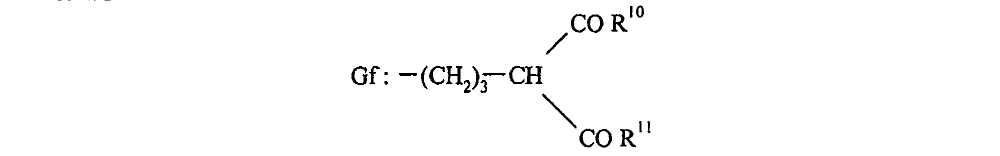 y = 0 et p = 1 à 10 de préférence 1 ;
→ étant particulièrement préférées.

5. POS selon l'une quelconque des revendications 1 à 4, **caractérisés en ce qu'**ils comprennent au moins une espèce (**I**) et/ou (**II**) substituée par au moins un reste **Gf** perfluoré choisi dans le sous-groupe de radicaux suivants :
→ **(i)** 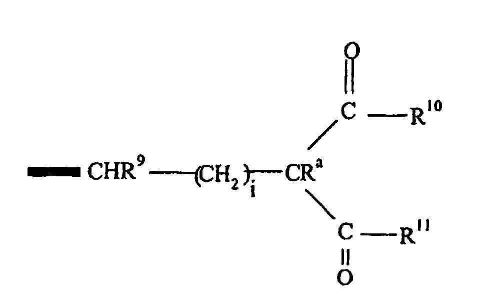 avec
o R^{a}, R⁹ indépendamment = H ou alkyle inférieur C₁-C₆ linéaire ou ramifié, de préférence CH₃ ;
o R¹⁰, R¹¹ indépendamment = OH, alcoxyle C₁-C₆ linéaire ou ramifié, ou Z₃-Rf ; l'un au moins des radicaux R¹⁰, R¹¹ représentant -Z₃Rf;
o i = 0 à 10, de préférence 0 à 3, et plus préférentiellement encore i = 1 ;
→ **(ii)** 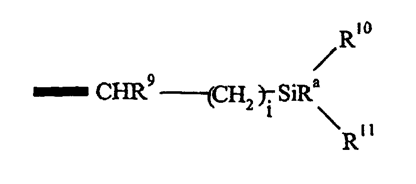 avec R⁹, R^{a}, R¹⁰, R¹¹ et i tels que définis supra ;
→ **(iii)** 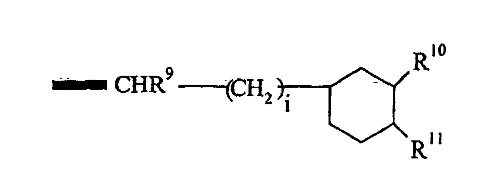 avec R⁹, R¹⁰, R¹¹ et i tels que définis supra ; le cycle hexyle pouvant être éventuellement substitué.
→ et les mélanges des susdits radicaux.

6. POS selon la revendication 5, **caractérisés en ce qu'**ils comprennent au moins une espèce (I) et/ou (II) substitué par :
o au moins un reste **Gf** perfluoré répondant à la formule (**i**), **(ii)** ou **(iii)** selon la revendication 5,
les radicaux R¹⁰ et R¹¹ de la formule considérée correspondant à Z₃Rf, de préférence à : 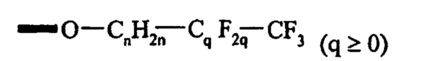 **ou** 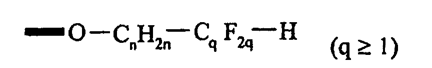
o et éventuellement par au moins un reste **Gf** (**i**), (**ii**) ou (**iii**) dans lequel l'un des radicaux R¹⁰, R¹¹ est Z₃Rf,
et l'autre de ces radicaux R¹⁰, R¹¹ est différent de Z₃Rf et correspond avantageusement à : OH, alcoxyle C₁-C₆ linéaire ou ramifié.

7. POS selon l'une quelconque des revendications 1 à 6, **caractérisés en ce qu'**ils comprennent au moins une espèce (**I**) et/ou (**II**) substituée par au moins un reste **E** choisi dans le sous-groupe de radicaux E (**i**_{**e**}), (**ii**_{**e**}), et (**iii**_{**e**}) correspondant aux radicaux **Gf** (**i**), (**ii**) et (**iii**) respectivement selon la revendication 5, **à la différence près** que R¹⁰, R¹¹ sont = ou ≠ et correspondent seulement à : OH, alcoxyle en C₁-C₆ linéaire ou ramifié.

8. POS selon l'une quelconque des revendications 1 à 7, **caractérisés en ce qu'**ils comprennent, en outre :
• des motifs siloxyles : 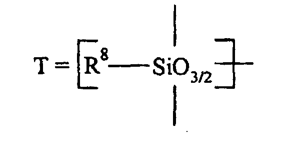 avec les radicaux R⁸ des différents motifs identiques ou différents entre eux et répondant à la même définition que celle de R¹, R², **Gf** ou **E** donnée supra,
• et éventuellement des motifs :

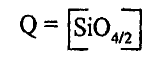

9. Procédé de préparation des POS (per)fluorés selon l'une quelconque des revendications 1 à 8, **caractérisé en ce qu'**il consiste essentiellement à faire réagir :
A) au moins une huile polyalkylhydrogénosiloxane - de préférence polyméthylhydrogénosiloxane -,
B) avec au moins une oléfine (per)fluorée précurseur de Gf et de formule (Gfp):
Z₁ₚRf
dans laquelle :
• Z₁ₚ = précurseur oléfinique de Z₁,
• Rf tel que défini dans la revendication 1,
C) et/ou avec au moins une oléfine (per)fluorée de formule :
Z₁ₚZ₂ₚ
dans laquelle :
• Z₁ₚ = précurseur oléfinique de Z₁,
• Z₂ₚ = précurseur oléfinique de Z₂,
D) en présence d'une quantité efficace de catalyseur métallique d'hydrosilylation, de préférence à base de platine ;
le produit réactionnel A + C étant mis en présence d'un réactif du type Z₃ₚRf avec Z₃ₚ = précurseur de Z₃ et Rf tel que défini supra,
de telle sorte que l'on obtienne des greffons Gf = -Z₁Rf et/ou = -Z₁Z₂ Z₃Rf;
E) et enfin avec un réactif Ep formé par un précurseur oléfinique de E, Ep étant apte à être hydrosilylé par les ≡SiH du POS en présence de D.

10. Procédé selon la revendication 9, **caractérisé :**
• **en ce que** le précurseur Ep est du type : Z₁ₚZ₂ₚ, avec Z₁ₚ précurseur oléfinique de Z₁ et Z₂ₚ précurseur de Z₂ ; Z₁, Z₂, Z₁ₚ, Z₂ₚ étant identiques ou différents à leurs correspondants intervenant dans Gf et décrits ci-dessus,
• et **en ce que** l'on met en présence les radicaux - Z₁Z₂ₚ greffés sur le POS avec au moins un composé réactif porteur d'un groupement présentant au moins une fonctionnalité E, de façon à produire des greffons : -Z₁Z₂ E.

11. Procédé selon la revendication 9 ou 10, **caractérisé :**
• **en ce qu'**au moins une partie des précurseurs Z₂ₚ de Z₂ greffés sur l'huile A) sont des anhydrides d'acide,
• **en ce que** l'on soumet au moins une partie de ces fonctions anhydrides à une hydrolyse, de manière à générer des extrémités carboxyliques libres,
• et **en ce que** l'on estérifie au moins une partie desdites extrémités carboxyliques :
* soit à l'aide de réactifs du type Z₃ₚ-Rf, Z₃ₚ étant un précurseur de Z₃, Z₃ et Rf étant tels que définis dans la revendication 1,
* soit à l'aide d'au moins un composé réactif porteur d'un groupement présentant au moins une fonctionnalité E.

12. Procédé de préparation de POS (per)fluorés cycliques ou linéaires, selon l'une quelconque des revendications 1 à 8, **caractérisé en ce qu'**il consiste, essentiellement, à faire réagir :
A) au moins une huile polyalkylhydrogénosiloxane - de préférence polyméthylhydrogénosiloxane -,
F) avec au moins une oléfine (per)fluorée précurseur de **Gf** et de formule (**Gf**ₚ) : 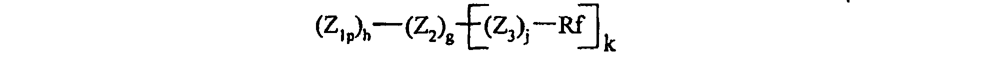 dans laquelle :
• Z₁ₚ est le précurseur oléfinique du radical Z₁, tel que défini supra dans la revendication 1,
• Z₂, Z₃, Rf, h, g, j et k sont également définis dans la revendication 1,
• avec la condition selon laquelle si h = 0, alors g = 1 et Z₂ devient un précurseur oléfinique Z₂ₚ ;
G) et/ou avec au moins un précurseur oléfinique Eₚ de **E** ;
D) en présence d'une quantité efficace de catalyseur métallique d'hydrosilylation, de préférence à base de platine.

13. Procédé selon la revendication 12, **caractérisé en ce que** le précurseur **Gf**_{**p**} de **Gf** répond à au moins l'une des formules suivantes :
**(i**_{**p**}**)** 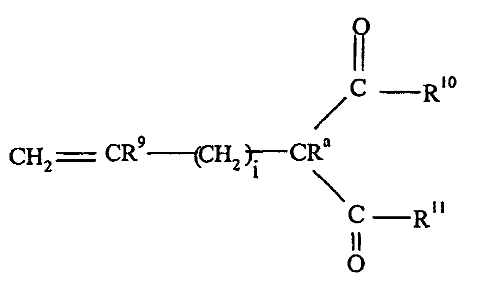
o avec R^{a}, R⁹ indépendamment = H ou alkyle inférieur C₁-C₆ linéaire ou ramifié, de préférence CH₃ ;
o R¹⁰, R¹¹ indépendamment = OH, alcoxyle C₁-C₆ linéaire ou ramifié, ou Z₃-Rf ;
o i = 0 à 10, de préférence 0 à 3, et plus préférentiellement encore i = 1 ;
**(ii**_{**p**}**)** 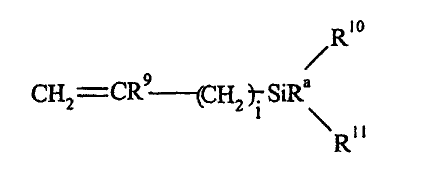 avec R⁹, R^{a}, R¹⁰, R¹¹ et i tels que définis supra ;
**(iii**_{**p**}**)** 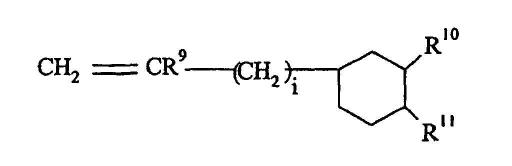 avec R⁹, R¹⁰, R¹¹ et i tels que définis supra ; le cycle hexyle pouvant être éventuellement substitué.

14. Procédé selon la revendication 13, **caractérisé en ce que** les précurseurs **Gf**ₚ des greffons Gf présentant un ou deux groupements R¹⁰, R¹¹ perfluorés (R¹⁰ et/ou R¹¹ = Z₃Rf) et sont obtenus par mise en réaction selon un mécanisme de transestérification :
→ d'au moins un composé à hydrogène mobile constitué par le radical Z₃Rf hydrogéné, i.e. : H-Z₃Rf, selon la revendication 1 ; de préférence un alcool ou un thiol ;
→ avec des produits de départ formés par des composés de formule (**i**_{**p**}), (**ii**_{**p**}) ou (**iii**_{**p**}) tels que définis dans la revendication 11 et dans lesquels au moins l'un des radicaux R¹⁰, R¹¹ est un alcoxyle linéaire ou ramifié en C₁-C₆.

15. Procédé selon l'une quelconque des revendications 9 à 14, **caractérisé en ce que** le précurseur oléfinique Ep du greffon E répond à au moins l'une des formules (**iep**) **(iiep)** et (**iiiep**) correspond respectivement aux formules (**ip**), **(iip)** et **(iiip)** donnés dans la revendication 13 pour Gfp, **à la différence près** que R¹⁰, R¹¹ sont = ou ≠ et correspondent seulement à OH, alcoxyle C₁-C₆ linéaire ou ramifié.

16. Intermédiaire réactionnel (synthon) susceptible d'être mise en oeuvre, notamment dans le procédé selon les revendications 12, 13, 14 ou 15, **caractérisé en ce qu'**il répond à au moins l'une des formules suivantes :
**(i**_{**p**}**)** 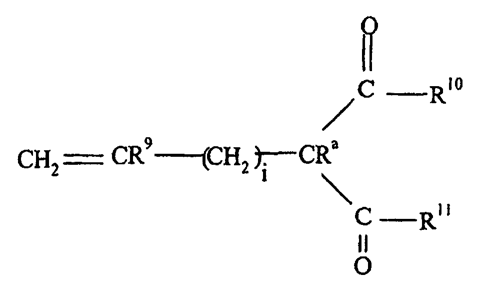 avec
o R^{a}, R⁹ indépendamment = H ou alkyle inférieur C₁-C₆ linéaire ou ramifié, de préférence CH₃ ;
o au moins l'un des radicaux R¹⁰, R¹¹ correspond à un alcoxyle linéaire ou ramifié en C₁-C₆, le méthoxyle et l'éthoxyle et le propyle ;
**(ii**_{**p**}**)** 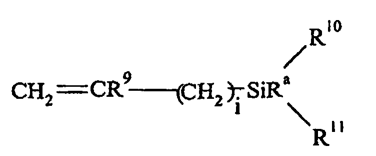 avec R⁹, R^{a}, R¹⁰, R¹¹ et i tels que définis supra ;
**(iii**_{**p**}**)** 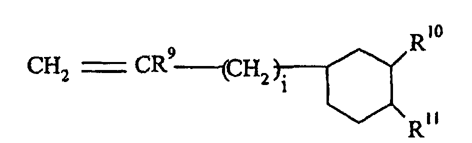 avec R⁹, R¹⁰, R¹¹ et i tels que définis supra ; le cycle hexyle pouvant être éventuellement substitué.

17. Emulsion aqueuse **caractérisée en ce qu'**elle contient :
- au moins un POS selon l'une quelconque des revendications 1 à 8 ou obtenus par le procédé selon l'une quelconque des revendications 9 à 15 ;
- de l'eau ;
- et au moins un tensioactif.

18. Application de POS selon l'une quelconque des revendications 1 à 8 ou obtenus par le procédé selon l'une quelconque des revendications 9 à 15 à titre :
- d'anti-mousse,
- de lubrifiant,
- d'agent anti-adhérent,
- d'agent abaisseur de tension de surface,
- d'agent antisalissures,
- d'agent oléophobe et/ou hydrophobe,
- de matière première pour la réalisation d'élastomères ou de films résistant aux agressions chimiques et aux solvants.

19. Composition antisalissure **caractérisée, en ce qu'**elle comprend :
- au moins un POS selon l'une quelconque des revendications 1 à 8 ou obtenus par le procédé selon l'une quelconque des revendications 9 à 15 ;
- et/ou au moins une émulsion selon la revendication 7
- le ou les susdits POS mis en oeuvre étant de préférence des POS porteurs :
* de greffons **Gf** bifides bifonctionnalisés par des radicaux perfluorés, tels que définis dans la revendication 5,
* d'autres greffons E fonctionnalisés par d'autres fonctions que les fonctions bi ou monoperfluorées, telles que définies dans la revendication 7,
* et éventuellement de greffons **Gf** bifides monofonctionnalisés par des radicaux perfluorés, eux-aussi définis dans la revendication 5.

## Claims

1. Per)fluorinated Polyorganosiloxanes of general formulas (**I**) & (**II**): 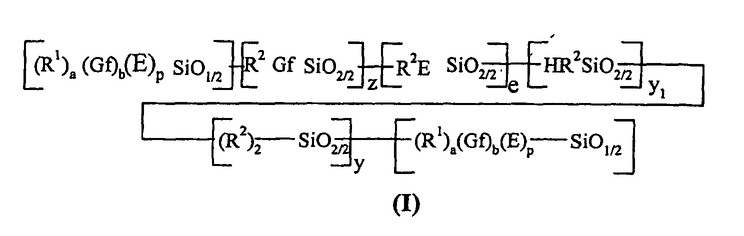 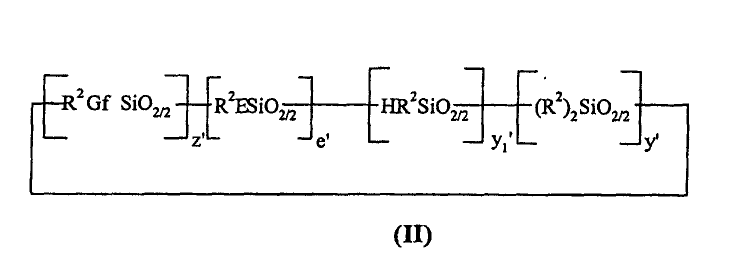 wherein:
• a + b + p = 3 ; a = 2, 3 ; b, p = 0, 1 ;
z is between 0 and 200, preferably between 1 and 90,
y₁ is between 0 and 10, preferably between 0 and 5,
y is between 0 and 50, preferably between 0 and 25,
e is between 1 and 200, preferably between 1 and 90,
with the provisos that:
Δ if z ≠ 0, then 5 ≤ z + y₁ + y + e ≤ 200, preferably 10 ≤ z + y₁ + y + e ≤ 200 and [z/(z + y + y₁ + e + 2)]. 100 ≥ 3, preferably 5,
Δ if z = 0, then 5 ≤ y + y₁ + e ≤ 100, b being ≠ 0 in at least one of the monovalents terminal siloxy units M,
Δ if e ≠ 0, then 5 ≤ z + y₁ + y + e ≤ 200, preferably 10 ≤ z + y₁ + y + e ≤ 100 and [z/(z + y + y₁ + e + 2)]. 100 ≥ 3, preferably 5,
Δ and if e = 0, then 5 ≤ y + y₁ + z ≤ 100, p being ≠ 0 in at least one of the M units,
• 1 ≤ z' ≤ 9 ; preferably 1 ≤ z' ≤ 4,5 ;
• 0 ≤ y'₁ ≤ 0,5 ; preferably 0 ≤ y'₁ ≤ 0,25 ;
• 0 ≤ y' ≤ 5 ; preferably 0 ≤ y' ≤ 0,5 ;
• each radical R¹, R², on the one hand is identical to or different from like radicals of the same exponent and the other radical of different exponent, and on the other hand is a linear or branched C₁-C₁₂, --(cyclo)alkyl--preferably C₁-C₆ --(cyclo)alkyl-- group, an aryl, an aralkyl or an alkylaryl, these groups optionally being substituted;
• **Gf** is an optionally (per)fluorinated functional monovalent radical of identical or different type in the z or z' siloxy units D and/or the two siloxy units M in which it is present, and having the following average formula: 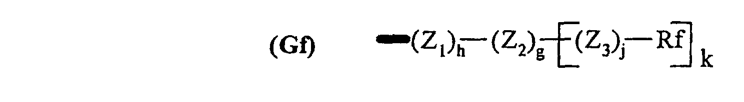
Δ where h = 0 or 1; g = 0 or 1; j = 0 or 1 and k = 1 or 2;
Δ with the proviso that at least one radical **Gf** is present in said POS (I) or (II), the radicals Gf preferably being present to the extent of at least 60 mol %;
Δ Z₁ being a divalent radical of the formula 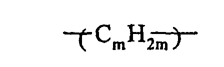 where m ≥ 2 ;
Δ Z₂ being a mono-, di- or tri-valent radical of the formula:
. α. 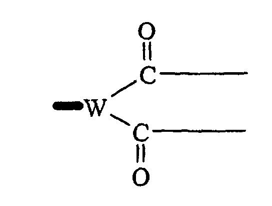
. one or both of the free valences of the carbonyl(s) being joined to -Z₃Rf and, in the case where only one of said free valences is joined to -Z₃Rf, the other then being joined to a hydroxyl;
. β. 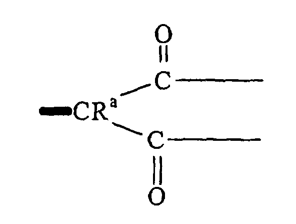 at least one of the free valences of the carbonyls being joined to -Z₃-Rf and, in the case where only one of these free valences is joined to -Z₃-Rf, the other then being joined to a linear or branched C₁-C₆ -alkoxy; and
. R^{a} = H, aryl or linear or branched C₁-C₆ -lower alkyl, preferably CH₃;
. γ. 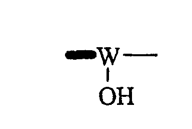
. δ. 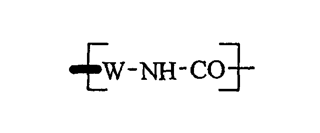
. ε. 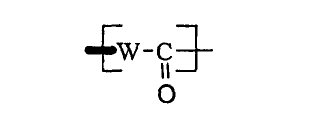
. η. 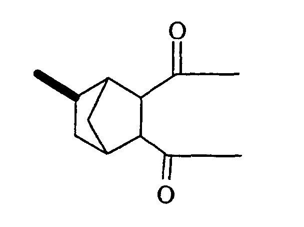
Δ h = 0 in **Gf**;
Δ one or both of the free valences of the carbonyl(s) being joined to -Z₃-Rf and, in the case where only one of said free valences is joined to -Z₃Rf, the other then being joined to a hydroxyl or to a linear or branched C₁-C₆ -alkoxy;
. θ. 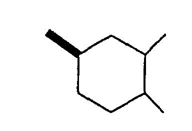
. one or both of the two free valences other than the valence 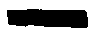 , being joined to Z₃-Rf and, in the case where only one of these two valences is joined to -Z₃-Rf, the other then being joined to OH or to a linear or branched C₁-C₆ -alkoxy; or
. λ. 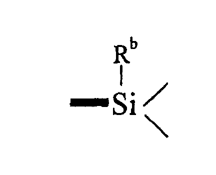
. one or both of the two free valences other than the valence 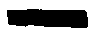 , being joined to Z₃-Rf and, in the case where only one of these two valences is joined to Z₃-Rf, the other then being joined to OH or to a linear or branched C₁-C₆-alkoxy;
. R^{b} = H or linear or branched C₁-C₆ lower alkyl, methyl being preferred;
→ W being a cyclic or non-cyclic hydrocarbon radical, in particular an aliphatic and/or alkenyl and/or alkynyl and/or aromatic radical, and W also being devoid of an ether link -O-;
Δ Z₃ is a divalent radical of the formula 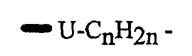 where n ≥ 1 and U = O, S, NH or NHSO₂, preferably O; and
Δ Rf being a perhalogenated--preferably perfluorinated-radical and particularly preferably a linear or branched perfluoroalkyl radical having one of the following formulae:
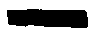 C_{q}F_{2q} - CF₃ with q ≥ 0,
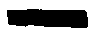 C_{q}F_{2q} - H with q ≥ 1 ;
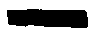 NR^{rf}SO₂ Cq F₂q - CF₃ with q ≥ 0 and R^{rf} = H, aryle, or alkyle ≤ in C₁-C₆ linear or branched (preferably CH₃) ;
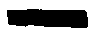 NR^{rf}SO₂ Cq F₂q - H with q ≥ 1 et R^{rf} as defined above ;
E is a monovalent functional radical, other than Gf defined above, of identical or different type in the e or e' siloxy units D and/or the two siloxy units M in which it is present, and preferably chosen from the groups having at least one of the following functional groups E₁ to E₁₃ :
Δ E₁ = 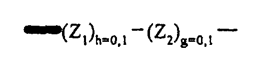 in which:
* Z₁ is defined in the same way as given above for **Gf** where m ≥ 2; and
* Z₂ corresponds to:
. αe. 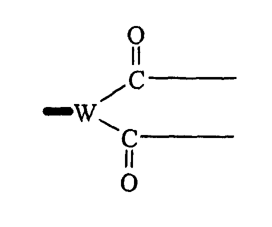 where at least one of the free valences of a carbonyl is bonded to an OH, or else these two free valences are both joined to the same oxygen atom;
. βe. 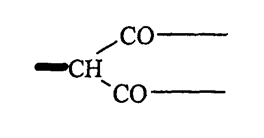 where the two free valences of the carbonyls are each bonded to a linear or branched C₁-C₆ -alkoxy;
. γe. 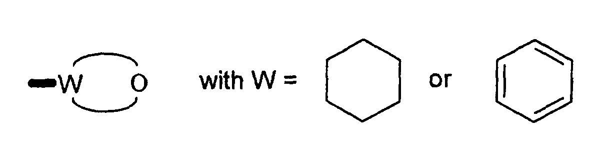
. δe. 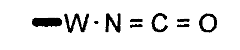 or 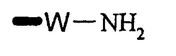
. εe. 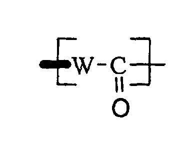 the free valence of the carbonyl being joined to a linear or branched C₁-C⁶ -alkoxy or else to an OH;
. ηe. 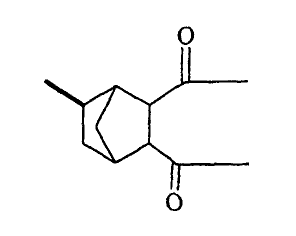 where at least one of the free valences of a carbonyl is bonded to an OH or a linear or branched C₁-C₆ -alkoxy, or else these two free valences are both joined to the same oxygen atom;
. θe. 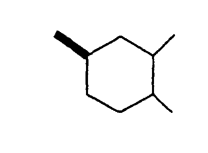 one or both of the two free valences other than the valence 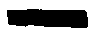 , being joined to Z₃-Rf and, in the case where only one of these two valences is joined to Z₃-Rf, the other then being joined to OH or to a linear or branched C₁-C₆ -alkoxy; or
. λe. 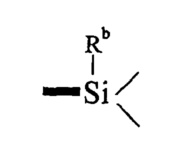
. R^{b} = H or linear or branched C₁-C₆ lower alkyl, methyl being preferred;
* Z₁ and Z₂ being identical to or different from their counterparts present in **Gf** and described above; and
* W being as defined above for **Gf**; and
Δ E₂ = amine; E₃ = alkoxy; E₄ = acyl; E₅ = acyloxy; E₆ = hydroxyl; E₇ = trialkoxysilyl; E₈ = amide; E₉ = ester; E₁₀ = phenol; E₁₁ = arylalkoxy; E₁₂ = aryloxy; E₁₃ = ether-hydroxy.

2. The POS of claim 1, **characterized in that** they have the following average formula (**I.1**): 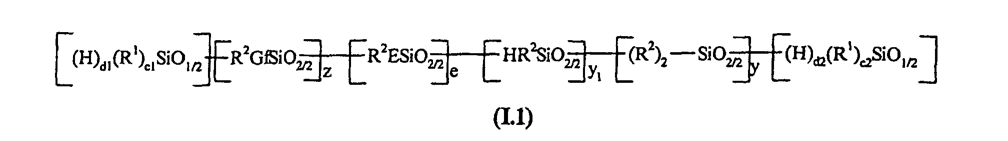 in which:
• **Gf** corresponds to the definition given above where h = g = 1 or h = 1 and g = 0;
• E = E₁ to E₁₃;
• R¹ and R² are as defined above, preferably methyl, propyl or butyl;
• c₁ + d₁ = 3 and preferably c₁ = 2, d₁ = 1;
• C₂ + d₂ = 3 and preferably c₂ = 2, d₂ = 1;
• 1 ≤ z ≤ 90, preferably 1 ≤ z ≤ 50;
• 1 ≤ e ≤ 100, preferably 1 ≤ e ≤ 60;
• 0 ≤ y₁ ≤ 10, preferably 0 ≤ y ≤ y₁ ≤ 5;
• 0 ≤ y ≤ 50, preferably 0 ≤ y₁ ≤ 25.

3. The POS of claim 2, **characterized in that** they have the following average formula (**I.1.1**): 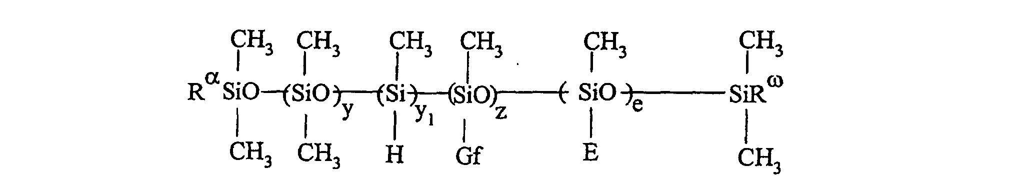 where **Gf** and E are as defined in claim 1, y, y₁, z, e, as defined in claim 2, and R^{α} and R^{ω}, which are identical or different, are H or C₁-C₆ -alkyl.

4. The POS of claim 1, **characterized in that** they have the following average formula (**I.1.2**): 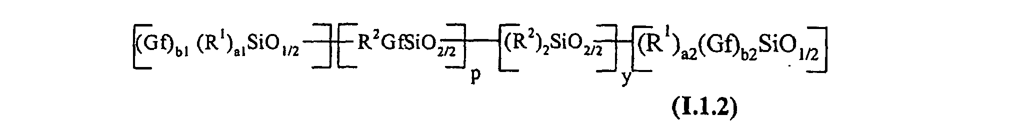 in which:
+ **Gf** is as defined above;
+ R¹, which is identical to or different from like radicals of the same exponent, is R¹ as defined in claim 1,
or else corresponds to a functional group (E) as defined above, preferably an epoxy-functional radical;
+ R², which is identical to or different from like radicals of the same exponent, is defined in the same way as above;
+ a₁ + b₁ = a₂ + b₂ = 3;
+ a₁, a₂ = 2 or 3; b₁, b₂ = 0 or 1;
+ 10 ≤ y ≤ 100, preferably 0 ≤ y ≤ 10;
+ 0 ≤ p ≤ 50, preferably 0 ≤ p ≤ 5;
+ if p = 0, then 5 ≤ y ≤ 100 and b₁ and/or b₂ ≠ 0;
→ the formula in which R¹ = CH₃, b₁ = 1 and b₂ = 0, 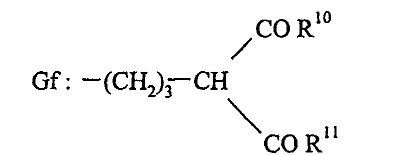 where R¹⁰ and R¹¹ are identical or different and are OH, C₁-C₆ -- alkoxy or Z₃Rf according to claim 1, at least one of the radicals R¹⁰ and R¹¹ being Z₃Rf, p = 0 and y = 0 or 1,
→ and the formula in which R¹ = CH₃, b₁ = b₂= 0, 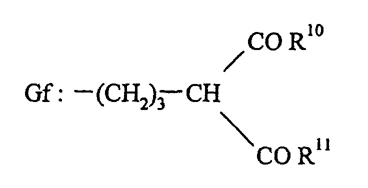 y = 0 and p = 1 to 10, preferably 1,
→ being particularly preferred.

5. The POS according to any of claims 1 to 4 **characterized in that** they comprise at least one species (**I**) and/or (**II**) substituted by at least one perhalogenated--preferably perfluorinated--radical **Gf** selected from the following subgroup of radicals:
**→ (i)** 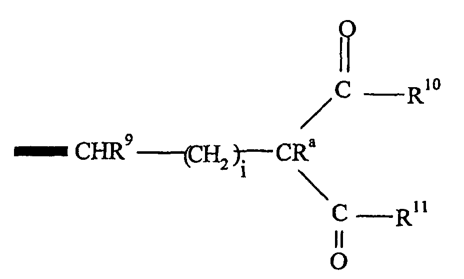
where:
• R^{a} and R⁹ independently are H or linear or branched C₁-C₆ -lower alkyl, preferably CH₃;
• R¹⁰ and R¹¹ independently are OH, linear or branched C¹-C⁶ -alkoxy or Z₃-Rf, at least one of the radicals R¹⁰ and R¹¹ being -Z₃Rf; and
• I = 0 to 10, preferably 0 to 3 and particularly preferably 1; 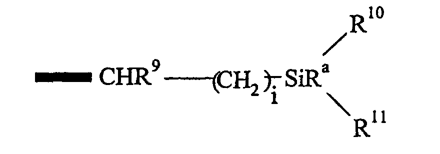 where R⁹, R^{a}, R¹⁰, R¹¹ and i are as defined above; 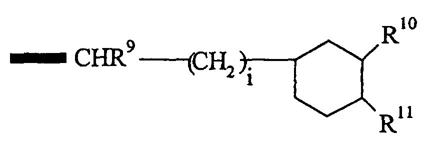 where R⁹, R¹⁰, R¹¹ and i are as defined above, it optionally being possible for the hexyl ring to be substituted;
→ and mixtures of the above-mentioned radicals.

6. The POS according to claim 5 **characterized in that** they comprise at least one species (**I**) and/or (**II**) substituted by :
• at least one perfluorinated radical Gf of formula (**i**), (**ii**) or (**iii**) above, the radicals R¹⁰ and R¹¹ in the formula in question corresponding to Z₃ Rf and preferably to: 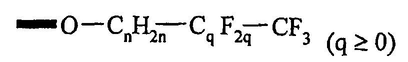 **or** 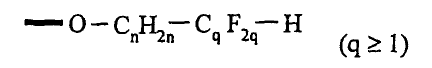
• and optionally at least one radical **Gf** (**i**), **(ii)** or (**iii**) in which one of the radicals R¹⁰ or R¹¹ is Z₃ Rf and the other radical R¹⁰ or R¹¹ is different from Z³Rf and advantageously corresponds to OH or linear or branched C₁-C₆ -alkoxy.

7. The POS according to any of claims 1 to 6 **characterized in that** they comprise at least one species (**I**) and/or (**II**) substituted by at least one radical E selected from the subgroup of radicals E (**i**_{**e**}), (**ii**_{**e**}) and (**iii**_{**e**}) corresponding to the radicals **Gf** (**i**), (**ii**) and (**iii**), respectively, as defined above, the only difference being that R¹⁰ and R¹¹ are identical or different and correspond only to OH and linear or branched C₁-C₆ -alkoxy.

8. The POS according to any of claims 1 to 7**characterized in that** they comprise in addition:
• siloxy units T = 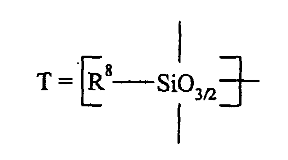 where R⁸ is defined in the same way as R¹, R², **Gf** or E, as given above,
• and optionally siloxy units

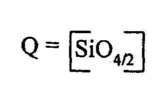

9. Process for the preparation of (per)fluorinated POS according to any of the claims 1 to 8, **characterized in that** it consists essentially in reacting:
A) at least one polyalkylhydrogenosiloxane--preferably polymethylhydrogenosiloxane-- oil
B) with at least one (per)fluorinated olefin which is a precursor of **Gf** and has the formula (Gfp):
Z₁ₚRf
in which:
• Z₁ₚ = olefinic precursor of Z₁ and
• Rf is as defined above,
C) and/or with at least one (per)fluorinated olefin of the formula:
Z₁ₚZ₂ₚ,
in which:
• Z₁ₚ = olefinic precursor of Z₁ and
• Z₂ₚ = olefinic precursor of Z₂,
D) in the presence of an effective amount of a metal hydrosilylation catalyst preferably based on platinum,
the reaction product A + C optionally being brought into contact with a reactant of the type Z₃ₚRf, where Z₃ₚ is a precursor of Z₃ and Rf is as defined above,
to give grafts **Gf** = -Z₁Rf and/or -Z₁Z₂Z₃Rf ;
E) and finally with a reactant E, formed by an olefinic precursor of E, Eₚ being capable of hydrosilylation by the ≡SiH of the POS in the presence of D.

10. Process according to claim 9, **characterized:**
• **in that** the precursor Eₚ is of the type Z₁ₚ, Z₂ₚ, where Z₁ₚ is an olefinic precursor of Z₁ and Z₂ₚ is a precursor of Z₂, and Z₁, Z₂, Z₁ₚ and Z₂ₚ are identical to or different from their counterparts present in Gf and described above,
• and **in that**, the radicals -Z₁Z₂ₚ grafted onto the POS are brought into contact with at least one reactive compound carrying a group having at least one functional group E, so as to produce grafts -Z₁Z₂E.

11. Process according to claim 9 or 10, **characterized :**
• **in that** at least one part of the precursors Z₂ₚ of Z₂ grafted on oil A) are of the anhydride type,
• **in that** at least some of these anhydride groups are hydrolyzed so as to generate free carboxyl ends,
• and **in that** at least some of said carboxyl ends are esterified
* either with reactants of the type Z₃ₚ -Rf, Z₃ₚ being a hydrogenated precursor of Z₃, Z₃ and Rf being as defined in claim 1,
* or with at least one reactive compound carrying a group having at least one functional group E.

12. Process for the preparation of cyclic or linear (per)fluorinated POS according to any of the claims 1 to 8, **characterized in that** it consists essentially in reacting:
A) at least one polyalkylhydrogenosiloxane -preferably polymethylhydrogenosiloxane-oil
F) with at least one halogenated (per)fluorinated olefin which is a precursor of Gf and has the formula (Gfₚ): 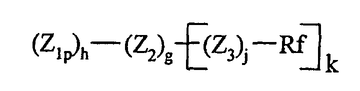 in which:
. Z₁ₚ is the olefinic precursor of the radical Z₁, as defined above, and
. Z₂, Z₃, Rf, h, g, j and k are also as defined above,
. with the proviso that if h = 0, then g = I and Z₂ becomes an olefinic precursor Z₂ₚ,
G) and/or with at least one olefinic precursor Eₚ of E,
D) in the presence of an effective amount of a metal hydrosilylation catalyst preferably based on platinum.

13. Process according claim 12, **characterized in that** the precursor Gfp of **Gf** preferably has at least one of the following formulae:
**(i**_{**p**}**)** 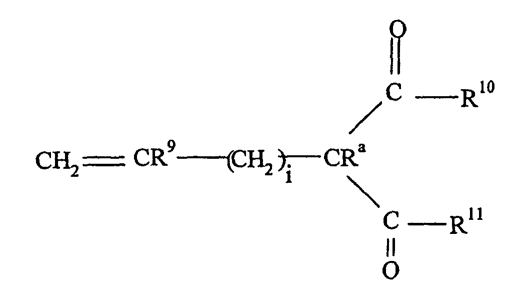
• where R^{a} and R⁹ independently are H or linear or branched C₁-C₆ -lower alkyl, preferably CH₃ ;
• R¹⁰ and R¹¹ independently are OH, linear or branched C₁-C₆ -alkoxy or Z₃-Rf; and
• i = 0 to 10, preferably 0 to 3 and particularly preferably again i = 1 ;
**(ii**_{**p**}**)** 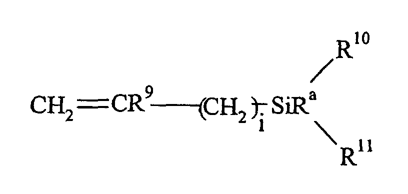 where R⁹, R^{a}, R¹⁰, R¹¹ and i are as defined above; and
**(iii**_{**p**}**)** 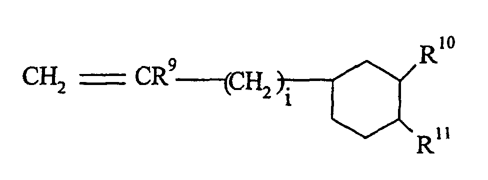 where R⁹, R¹⁰, R¹¹ and i are as defined above, it optionally being possible for the hexyl ring to be substituted.

14. Process according claim 13, **characterized in that** the precursors Gfₚ of the bifid grafts **Gf** have one or two perfluorinated groups R¹⁰, R¹¹ (R¹⁰ and/or R¹¹ = Z³Rf) and are obtained by reacting:
→ at least one alcohol consisting of the hydrogenated radical Z₃Rf, i.e.: H-Z₃Rf according to claim 1; preferably an alcohol or a thiol;
→ with starting materials formed by compounds of formula (**i**_{**p**}), (**ii**_{**p**}) or (**iii**_{**p**}), as defined in claim 11 and in which at least one of the radicals R¹⁰ and R¹¹ is a linear or branched C₁-C₆ -alkoxy, according to a transesterification mechanism.

15. Process according to any of the claims 9 to 14 **characterized in that** the olefinic precursor Eₚ of the bifid graft E has at least one of formulae (**i**ₑₚ), (**ii**ₑₚ) and (**iii**ₑₚ) corresponding respectively to formulae (**i**ₚ), (**ii**ₚ) and (**iii**ₚ) for Gfₚ, the only difference being that R¹⁰ and R¹¹ are identical or different and correspond only to OH or linear or branched C₁-C₆ -alkoxy.

16. Reaction intermediate (synthon) likely to be used notably in the process according to any of the claims 12, 13, 14 or 15, **characterized in that** it has at least one of the following formulae:
**(i**_{**p**}**)** 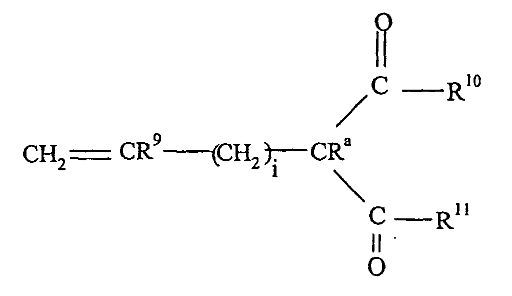 where
• R^{a} and R⁹ independently are H or linear or branched C₁-C₆ -lower alkyl, preferably CH₃ ;
• R¹⁰ and R¹¹ independently are OH, linear or branched C₁-C₆ -alkoxy or Z₃-Rf; and
**(ii**_{**p**}**)** 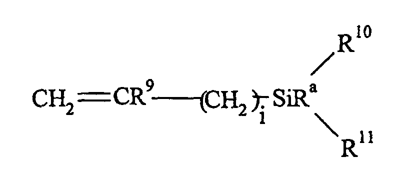 where R⁹, R^{a}, R¹⁰, R¹¹ and i are as defined above; and 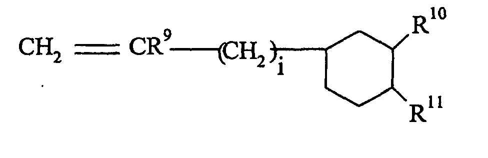 where R⁹, R¹⁰, R¹¹ and i are as defined above, it optionally being possible for the hexyl ring to be substituted.

17. Aqueous emulsion **characterized in that** it contains :
• at least one POS according to any of the claims 1 to 8 or obtained by the process according to any of the claims 9 to 15;
• water; and
• at least one surfactant.

18. Application of the POS according to any of the claims 1 to 8, or obtained by the process according to any of the claims 9 to 15, as:
- lubricants,
- agents for lowering surface tension,
- dirt repellents,
- antiadhesives,
- antifoams,
- oleophobic and/or hydrophobic agents,
- raw materials for the production of elastomers for resisting chemical attack and solvents, and
- raw materials for the preparation of a film and/or coating possessing at least one of the above-mentioned properties.

19. Dirt-repelling composition **characterized in that** it comprises:
• at least one POS according to any of the claims 1 to 8, or obtained by the process according to any of the claims 9 to 15,
• and/or at least one emulsion according to claim 7,
• said POS used preferably carrying:
* bifid grafts **Gf** bifunctionalized by perfluorinated radicals as defined in claim 5,
* other grafts E functionalized by groups other than bis- or monoperfluorinated groups as defined in claim 7,
* and optionally bifid grafts **Gf** monofunctionalized by perfluorinated radicals also as defined in claim 5.

## Patentansprüche

1. (Per)fluorierte Polyorganosiloxane (POS) der folgenden allgemeinen Formeln (I) und (II) 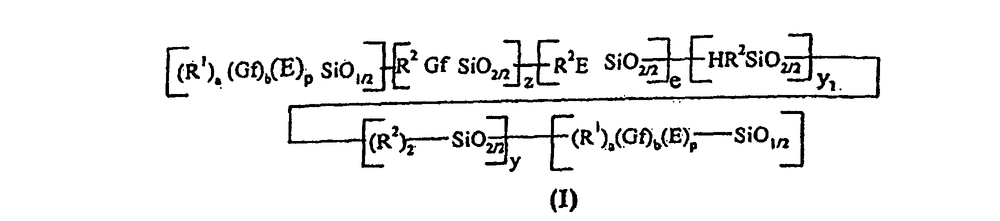 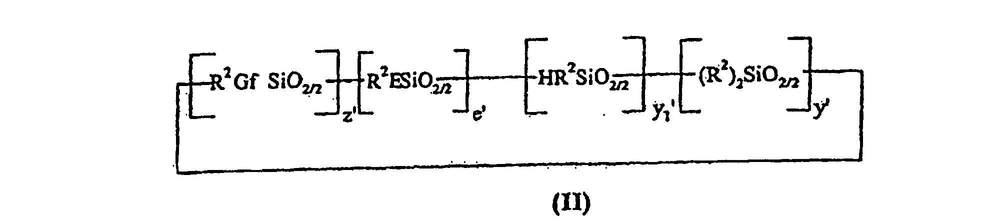 in denen:
• a + b + p = 3; a = 2, 3; b, p = 0,1;
z zwischen 0 und 200 umfasst ist, bevorzugt zwischen 1 und 90,
y₁ zwischen 0 und 10 umfasst ist, bevorzugt zwischen 0 und 5,
y zwischen 0 und 50 umfasst ist, bevorzugt 0 und 25,
e zwischen 1 und 200 umfasst ist, bevorzugt zwischen 1 und 90,
unter den Bedingungen, nach denen:
Δ wenn z ≠ 0, dann 5 ≤ z + y₁ + y + e ≤ 200, bevorzugt 10 ≤ z + y₁ + y + e ≤ 100 und [z/(z + y + y₁ + e + 2)]. 100 ≥ 3, bevorzugt 5,
Δ wenn z = 0, dann 5 ≤ y + y₁ + e ≤ 100, b ist ≠ 0 in mindestens einem der terminalen M monovalenten Siloxylmotive,
Δ wenn e ≠ 0, dann 5 ≤ z + y₁ + y + e ≤ 200, bevorzugt 10 ≤ z + y₁ + y + e ≤ 100 und [z/(z + y + y₁ + e + 2)]. 100 ≥ 3, bevorzugt 5,
Δ und wenn e = 0, dann 5 ≤ y + y₁ + z ≤ 100, p ist ≠ 0 in mindestens einem der M Motive,
• 1 ≤ z' ≤ 9; bevorzugt 1 ≤ z' ≤ 4,5;
• 0 ≤ y'₁ ≤ 0,5; bevorzugt 0 ≤ y'₁ ≤ 0,25;
• 0 ≤ y' ≤ 5; bevorzugt 0 ≤ y' ≤ 0,5;
• jedes Radikal R¹, R² ist einerseits identisch mit oder verschieden von seinen Analoga, des gleichen Exponenten, und dem anderen Radikal mit unterschiedlichem Exponenten, und andererseits, eine lineare oder verzweigte C₁-C₁₂-, bevorzugt C₁-C₆-(Cyclo)alkyl-Gruppe darstellt, ein Aryl, ein Aralkyl, ein Alkylaryl, wobei diese Gruppen gegebenenfalls substituiert sind,
• **Gf** ein monovalenter funktioneller gegebenenfalls (per)fluorierter Rest ist, der von gleicher Art oder verschieden in den z- oder z'-Siloxylmotiven D und/oder den beiden Siloxylmotiven M, in denen er vorhanden ist, und der nachstehenden mittleren Formel entspricht: 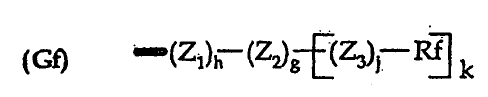
Δ mit h = 0,1; g = 0,1; j = 0,1 und k = 1 oder 2;
Δ unter der Bedingung, nach der mindestens ein **Gf**-Rest in dem POS (I) oder (II) vorhanden ist, bevorzugt sind die **Gf**-Reste mindestens in einer Größenordnung von 60 Mol-% vorhanden;
Δ Z₁ ein divalentes Radikal der Formel 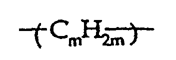 ist, mit m ≥ 2;
Δ Z₂ ein mono-, di- oder trivalentes Radikal der Formel
· α. 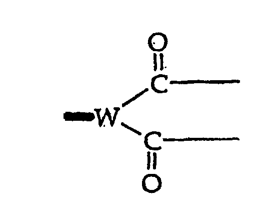 ist, wobei eine oder beide freie Valenzen des Carbonyls (oder der Carbonyle) mit -Z₃Rf verbunden ist/sind, und, im Fall, dass nur eine der oben erwähnten freien Valenzen mit -Z₃Rf verbunden ist, dann ist die andere mit einem Hydroxyl verbunden,
· β. 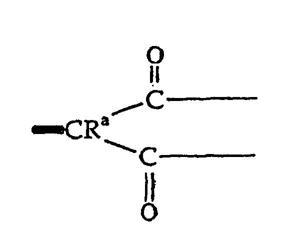 mindestens eine der freien Valenzen der Carbonyle mit -Z₃-Rf verbunden ist, und im Fall, dass nur eine dieser freien Valenzen mit -Z₃-Rf verbunden ist, dann ist die andere mit einem linearen oder verzweigten C₁-C₆-Alkoxyl verbunden.
R^{a} = H, Aryl oder ein verzweigtes oder lineares C₁-C₆- Niederalkyl, bevorzugt CH₃;
· γ. 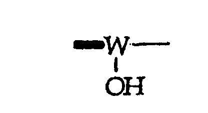
· δ. 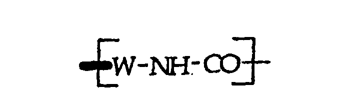
· ε. 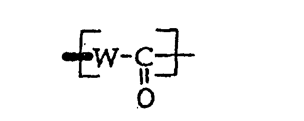
· η. 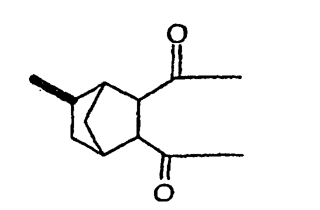
· h = 0 in **Gf**,
· eine oder beide freie Valenzen des Carbonyls (oder der Carbonyle) mit -Z₃-Rf verbunden ist, und im Fall, dass nur eine der obengenannten freien Valenzen mit -Z₃Rf verbunden ist, dann ist die andere mit einem Hydroxyl oder einem linearen oder verzweigten C₁-C₆-Alkoxyl verbunden,
· θ. 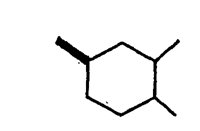
· die eine und/oder die andere der beiden verschiedenen freien Valenzen der Valenz -- mit Z₃-Rf verbunden ist/sind, und im Fall, dass nur eine dieser zwei Valenzen mit -Z₃-Rf verbunden ist, dann ist die andere mit einem OH oder einem linearen oder verzweigten C₁-C₆-Alkoxyl verbunden;
· λ. 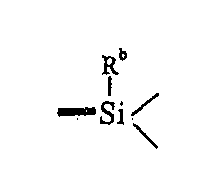
· die eine und/oder die andere der zwei verschiedenen freien Valenzen der Valenz --, mit Z₃-Rf verbunden ist/sind, und in dem Fall, dass nur eine dieser zwei Valenzen mit -Z₃-Rf verbunden ist, dann ist die andere mit -OH oder mit einem linearen oder verzweigten C₁-C₆-Alkoxyl verbunden;
· R^{b} = H oder ein lineares oder verzweigtes C₁-C₆-Niederalkyl; Methyl ist bevorzugt,
→ W stellt ein zyklisches oder nichtzyklisches Kohlenwasserstoffradikal dar, insbesondere ein aliphatisches und/oder Alkenyl und/oder Alkinyl und/oder aromatisch, wobei W außerdem frei von einer Etheroxid-O-Verbindung ist;
Δ Z₃ ein divalentes Radikal der Formel: 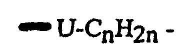 ist,
• wobei n ≥ 1 und U = O, S, NH, NHSO₂, bevorzugt O;
Δ und Rf ein perfluoriertes Radikal ist, und noch mehr bevorzugt ein lineares oder verzweigtes Perfluoralkylradikal entsprechend einer der folgenden Formeln:
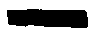 C_{q}F_{2q} - CF₃ mit q ≥ 0,
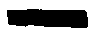 C_{q}F_{2q} - H mit q ≥ 1 ;
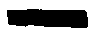 NR^{rf}SO₂ Cq F₂q - CF₃ mit q ≥ 0 u. R^{rf} = H, Aryl oder ein lineares oder verzweigtes C₁ - C₆ -Niederalkyl (bevorzugt CH₃) ;
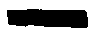 NR^{rf}SO₂ Cq F₂q - H mit q ≥ 1 u. R^{rf} wie oben definiert;
• E ist ein monovalenter funktionaler Rest, der anders als das oben definierte **Gf** ist, von gleicher oder verschiedener Art hinsichtlich der e- oder e'-Siloxylmotive D und/oder der beiden Siloxylmotive M, in denen er vorhanden ist, und bevorzugt aus den Gruppen, die mindestens eine der folgenden Funktionen E₁ bis E₁₃ aufweisen, ausgewählt ist:
Δ E₁ = 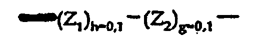 in der:
* Z₁ der gleichen Definition entspricht, die oben für die Definition von Gf gegeben wurde, mit m ≥ 2,
* Z₂ entspricht:
. αe. 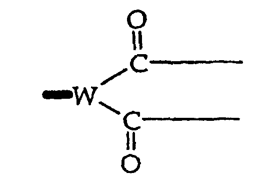 mit mindestens einer mit einem OH verbundenen freien Valenzen eines Carbonyls, oder noch besser sind diese zwei freien Valenzen beide mit dem gleichen Sauerstoffatom verbunden,
. β.e. 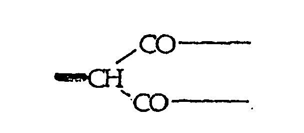 mit den beiden freien Carbonylvalenzen, die jeweils mit einem linearen oder verzweigten C₁-C₆-Alkoxyl verbunden sind,
. γe. 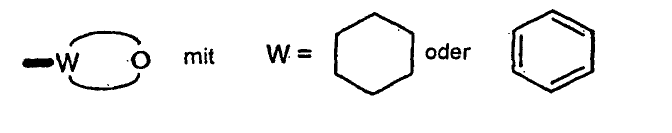
. δe. 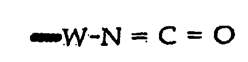 oder 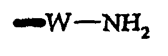
. ε.e. 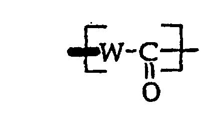 wobei die freie Carbonylvalenz mit einem linearen oder verzweigten C₁-C₆-Alkoxyl verbunden ist, oder noch besser mit einem OH,
. ηe. 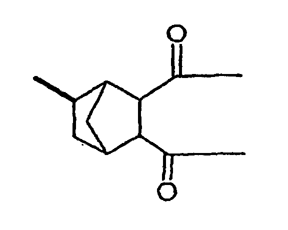 mit mindestens einer der freien Carbonylvalenzen, die mit einem OH an einem linearen oder verzweigten C₁-C₆-Alkoxyl verbunden ist, oder besser noch sind diese zwei freien Valenzen beide mit dem gleichen Sauerstoffatom verbunden;
. θe. 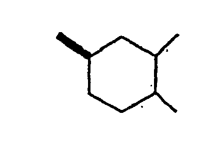
. die eine und/oder die andere der verschiedenen freien Valenzen der Valenz ― mit Z₃-Rf verbunden ist, und im Fall, dass nur eine dieser Zwei Valenzen mit -Z₃-Rf verbunden ist, die andere mit einem OH oder einem linearen oder verzweigten C₁-C₆-Alkoxyl verbunden ist;
. λe. 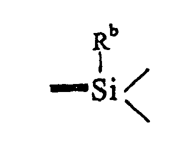
. R^{b} = H oder ein lineares oder verzweigtes C₁-C₆ Niederalkyl; Methyl ist bevorzugt,
* Z₁, Z₂ sind identisch oder verschieden von ihren Analoga, die im darüber beschriebenen **Gf** vorkommen,
* W ist wie oben für **Gf** beschrieben;
Δ E₂ = Amin; E₃ = Alkoxyl; E₆ = Hydroxy; E, = Trialkoxysilyl; E₈ = Amid; E₉ = Ester, E₁₀ = Phenol, E₁₁ = Arylalkoxy; E₁₂ = Aryloxy, E₁₃ = Etherhydroxy.

2. POS gemäß Anspruch 1, **dadurch gekennzeichnet, dass** sie der folgenden mittleren Formel entsprechen (I.1): 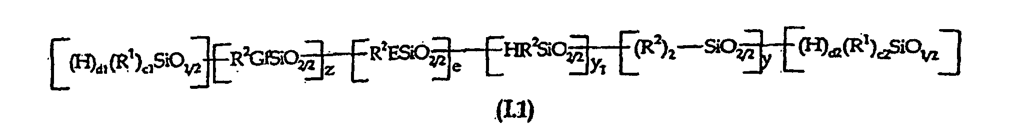 in der:
• **Gf** der Definition gemäß Anspruch 1 entspricht, mit h = g = 1 oder h = 1 und g = 0,
• E = E₁ bis E₁₃,
• R¹, R² sind wie im Anspruch 1 beschrieben, bevorzugt Methyl, Propyl oder Butyl,
• c₁ und d₁ = 3 und bevorzugt c₁ = 2, d₁ = 1;
• c₂ + d₂ = 3 und bevorzugt c₂ = 2, d₂ = 1;
• 1 ≤ z ≤ 90, bevorzugt 1 ≤ z ≤ 50,
• 1 ≤ e ≤ 100, bevorzugt 1 ≤ e ≤ 60,
• 0 ≤ y₁ ≤ 10, bevorzugt 0 ≤ y₁ ≤ 5,
• 0 ≤ y ≤ 50, bevorzugt 0 ≤ y ≤ 25.

3. POS gemäß Anspruch 2, **dadurch gekennzeichnet, dass** sie der folgenden Formel **(I1.1)** entsprechen: 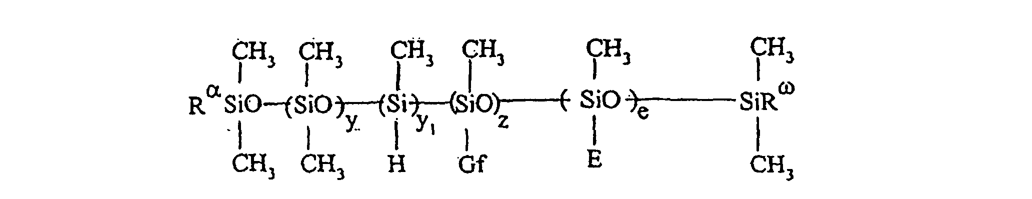 wobei Gf und E wie in Anspruch 1 definiert sind, y, y₁, z und e wie in Anspruch 2 definiert sind und R^{α}, R^{ω} identisch oder verschieden sind, und H oder ein C₁-C₆-Alkyl darstellen.

4. POS gemäß Anspruch 1, **dadurch gekennzeichnet, dass** sie der folgenden Formel **(I.1.2)** entsprechen: 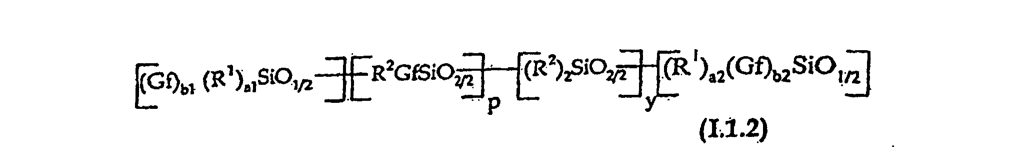 in der:
+ Gf wie in Anspruch 1 definiert ist
+ R¹ identisch mit oder verschieden von seinen Analoga des gleichen Exponenten = R¹ wie in Patentanspruch 1 definiert,
oder aber einer Funktion (E) entspricht, wie sie im Patentanspruch 1 beschrieben wurde, bevorzugt einem epoxyfunktionalen Radikal;
+ R² identisch oder verschieden von seinen Analoga des gleichen Exponenten ist und der gleichen Definition entspricht, die in Anspruch 1 gegeben wurde;
+ a₁ + b₁ = a₂ + b₂ = 3;
+ a₁, a₂ = 2 oder 3; b₁, b₂ = 0 oder 1;
+ + 10 ≤ y ≤ 100, bevorzugt 0 ≤ y ≤ 10;
+ 0 ≤ p ≤ 50, bevorzugt 0 ≤ p ≤ 5;
+ wenn p = 0, dann 5 ≤ y ≤ 100 und b₁ und/oder b₂ ≠ 0;
→ die Formel in der R¹ = CH₃, b₁ = 1 und b₂ = 0, 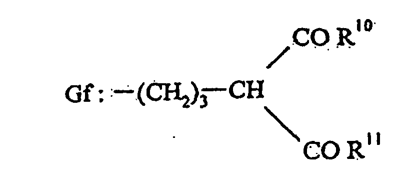 mit R¹⁰, R¹¹ = oder ≠ und OH, C₁-C₆-Alkoxyl oder Z₃Rf gemäß Anspruch 1 darstellen, wobei mindestens eines der Radikale R¹⁰, R¹¹ = Z₃Rf, p = 0 und y = 0 oder 1 ist,
→ und die Formel, in der R¹ = CH₃, b₁ = b₂ = 0 ist, 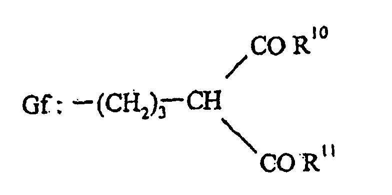 y = 0 und p = 1 bis 10, bevorzugt 1;
→ sind besonders bevorzugt.

5. POS gemäß einem der Ansprüche 1 bis 4, **dadurch gekennzeichnet, dass** sie mindestens eine Sorte (**I**) und/oder (**II**), die zumindest durch einen perforierten Rest substituiert sind, die aus der Untergruppe der folgenden Radikale ausgewählt sind:
→ (i) 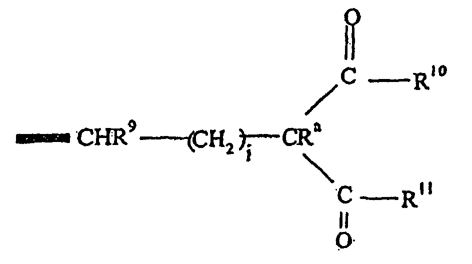 mit
o R^{a}, R⁹ unabhängig = H oder lineares oder verzweigtes C₁-C₆ Niederalkyl, bevorzugt CH₃;
o R¹⁰, R¹¹ unabhängig = OH, lineares oder verzweigtes C₁-C₆-Alkoxyl, oder Z₃-Rf; mindestens eines der Radikale R¹⁰, R¹¹ stellt -Z₃Rf dar;
o i = 0 bis 10, bevorzugt 0 bis 3, und noch mehr bevorzugt ist i = 1;
→ (ii) 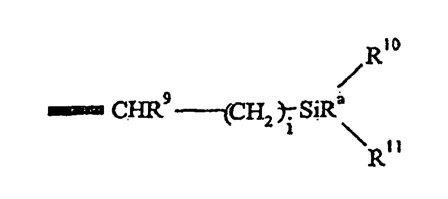 mit R⁹, R^{a}, R¹⁰, R¹¹ und i wie oben definiert;
→ (iii) 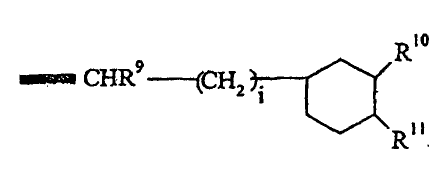 mit R⁹, R¹⁰, R¹¹ und i wie oben definiert; der Hexylring kann gegebenenfalls substituiert sein.
→ und die Gemische der obengenannten Radikale.

6. POS gemäß Anspruch 5, **dadurch gekennzeichnet, dass** sie mindestens eine Art (I) und/oder (II) umfassen, substituiert durch:
o mindestens einen perfluorierten **Gf**-Rest, der der Formel (**i**), (**ii**) oder (**iii**) gemäß Anspruch 5, entspricht,
die Radikale R¹⁰ und R¹¹ der jeweiligen Formel, entsprechend Z₃Rf, bevorzugt 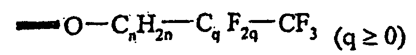 oder 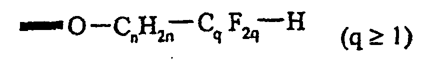
o und gegebenenfalls durch mindestens einen **Gf** (**i**), (**ii**) oder (**iii**) Rest, in dem eines der Radikale R¹⁰, R¹¹, Z₃Rf ist,
und das andere dieser Radikale R¹⁰, R¹¹ anders ist als Z₃Rf und bevorzugt OH, einem linearen oder verzweigten C₁-C₆-Alkoxyl entspricht.

7. POS gemäß einem der Ansprüche 1 bis 6, **dadurch gekennzeichnet, dass** sie mindestens eine Art (**I**) und/oder (**II**) umfassen, die mindestens durch einen Rest **E** substituiert ist, der ausgewählt ist aus der Untergruppe der Radikale **E** (**i**_{**e**}), (**ii**_{**e**}) und (**iii**_{**e**}) entsprechend den Radikalen **Gf** (**i**), (**ii**) und beziehungsweise (**iii**) gemäß Anspruch 5, abgesehen von dem Unterschied, dass R¹⁰, R¹¹ = oder ≠ sind und nur OH, einem linearen oder verzweigten C₁-C₆-Alkoxyl entsprechen.

8. POS gemäß einem der Ansprüche 1 bis 7, **dadurch gekennzeichnet, dass** sie unter anderem umfassen:
• Siloxylmotive: 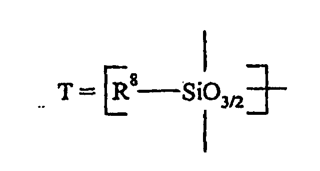 mit den voneinander verschiedenen oder identischen Motiven der Radikale R⁸ ,die der gleichen Definition entsprechen, wie R¹, R², **Gf** oder **E**, die oben gegeben wurde,
• und gegebenenfalls den Motiven:

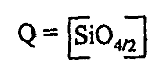

9. Verfahren zur Herstellung von (per)fluoriertem POS gemäß einem der Ansprüche 1 bis 8, **dadurch gekennzeichnet, dass** es im wesentlichen daraus besteht:
A) mindestens ein Polyalkylhydrogensiloxanöl, - bevorzugt Polymethylhydrogensiloxan-,
B) mit mindestens einem (per)fluoriertem Vorläuferolefin von **Gf** und mit der Formel (**Gfp**) : Z₁ₚRF,
in der:
• Z₁ₚ = olefinischer Vorläufer von Z₁,
• Rf wie in Anspruch 1 definiert
C) und/oder mit mindestens einem (per)fluoriertem Olefin der Formel: Z₁ₚZ₂P, in der:
• Z₁ₚ = olefinischer Vorläufer von Z₁,
• Z₂ₚ = olefinischer Vorläufer von Z₂,
D) in Gegenwart einer wirksamen Menge eines metallischen Katalysators zur Hydrosylierung, bevorzugt auf Grundlage von Platin umzusetzen; wobei das Umsetzungsprodukt A + C in Gegenwart eines Reaktionsteilnehmers vom Typ Z₃ₚ Rf gebracht wird, wobei Z₃ₚ = der Vorläufer von Z₃ ist, und Rf wie oben definiert ist,
derart, dass man die Übertragungen Gf = -Z₁Rf und/oder = -Z₁Z₂Z₃Rf erhält;
E) und dann mit einem Reaktionsteilnehmer Ep, der aus einem olefinischen Vorläufer von E gebildet wird, wobei Ep in der Lage ist durch ≡SiH von POS in Gegenwart von D hydrosyliert zu werden.

10. Verfahren gemäß Anspruch 9, **dadurch gekennzeichnet, dass**
• der Vorläufer Ep vom Typ Z₁ₚZ₂ₚ ist, wobei Z₁ₚ der olefinische Vorläufer von Z₁ und Z₂ₚ der Vorläufer von Z₂ ist; Z₁, Z₂, Z₁ₚ, Z_{2P} identisch oder unterschiedlich von ihren in **Gf** auftretenden Analoga sind, die oben beschrieben wurden,
• und dadurch, dass man die Radikale Z₁Z_{2P}, die auf POS übertragen wurden, mit mindestens einem reaktiven Bestandteil, der eine Gruppe trägt, die mindestens eine E-Funktion hat, zusammenbringt, um Übertragungen: -Z₁Z₂E zu produzieren.

11. Verfahren gemäß Anspruch 9 oder 10, **dadurch gekennzeichnet, dass**
• mindestens ein Teil der Vorläufer Z₂ₚ der Z₂, die auf das Öl A) übertragen wurden, Säureanhydride sind,
• dadurch, dass man mindestens einen Teil dieser Anhydridfunktionen einer Hydrolyse unterwirft, um
• dadurch freie Carboxylendungen zu erzeugen, und
• dadurch dass man mindestens einen Teil der Carboxylendungen verestert:
* entweder mit Hilfe der Reaktionsteilnehmer vom Typ Z₃ₚ-Rf, wobei Z₃ₚ ein Vorläufer von Z₃ ist, und Z₃ und Rf wie im Anspruch 1 definiert sind,
* oder mit Hilfe mindestens eines reaktiven Bestandteils, der eine Gruppe trägt, die mindestens eine E-Funktion aufweist.

12. Verfahren zur Herstellung von (per)fluorierten zyklischen oder linearen POS, gemäß einem der Ansprüche 1 bis 8, **dadurch gekennzeichnet, dass** es im wesentlichen daraus besteht umzusetzen:
A) mindestens ein Polyalkylhydrogensiloxan - bevorzugt Polymethylhydrogenosiloxan - ,
F) mit mindestens einem (per)fluoriertem Vorläuferolefin von **Gf** und mit der Formel (**Gf**ₚ): 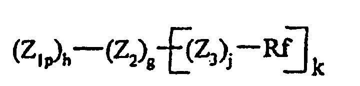 in der:
• Z₁ₚ der olefinische Vorläufer des Radikals Z₁ wie oben in Anspruch 1 definiert ist,
• Z₂, Z₃, Rf, h, g, j und k sind ebenfalls in Anspruch 1 definiert, unter der Bedingung, dass falls h = 0, dann g =1 und Z₂ wird ein olefinischer Vorläufer Z₂ₚ;
G) und/oder mindestens einen olefinischen Vorläufer Eₚ von **E**;
D) in Gegenwart einer wirksamen Menge eines metallischen Katalysators zur Hydrosylierung, bevorzugt auf Grundlage von Platin.

13. Verfahren gemäß Anspruch 12, **dadurch gekennzeichnet, dass** der Vorläufer **Gf**_{**p**} von **Gf** mindestens einer der folgenden Formeln entspricht:
**(i**_{**p**}**)** 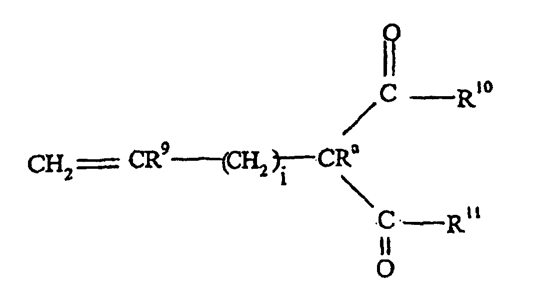
o mit R^{a}, R⁹ unabhängig = H oder ein verzweigtes oder lineares C₁-C₆-Alkyl, bevorzugt CH₃;
o R¹⁰, R¹¹ unabhängig = OH, lineares oder verzweigtes C₁-C₆-Alkoxyl oder Z₃-Rf;
o i = 0 bis 10, bevorzugt 0 bis 3, und noch mehr bevorzugt ist i = 1;
**(ii**_{**p**}**)** 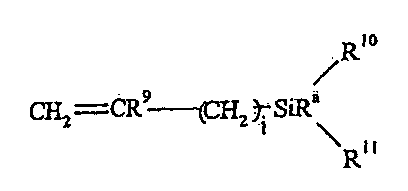 mit R⁹, R^{a}, R¹⁰, R¹¹ und i wie oben definiert;
**(iii**_{**p**}**)** 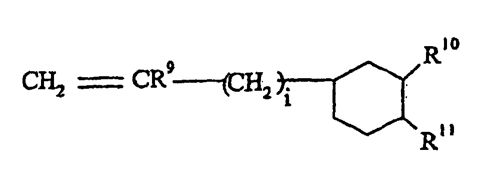 mit R⁹, R¹⁰, R¹¹ und i wie oben definiert; der Hexylring kann gegebenenfalls substituiert sein.

14. Verfahren gemäß Anspruch 13, **dadurch gekennzeichnet, dass** die Vorläufer **Gf**_{**p**} der Übertragungen **Gf** ein oder zwei perfluorierte Gruppen R¹⁰, R¹¹ aufweisen (R¹⁰ und/oder R¹¹ = Z₃Rf) und erhalten werden durch die Umsetzung nach einem Transesterifizierungsverfahren:
→ von mindestens einem mobilen Hydrogenbestandteil, der durch das hydrogenierte Radikal Z₃Rf gebildet wird, d.h.: H-Z₃Rf, gemäß Anspruch 1; bevorzugt ein Alkohol oder ein Thiol;
→ mit Ausgangsprodukten, die aus Verbindungen der Formel **(i**_{**p**}**) (ii**_{**p**}**)** oder **(iii**_{**p**}**)** wie in Anspruch 11 definiert gebildet sind, und in denen mindestens eines der Radikale R¹⁰, R¹¹ ein lineares oder verzweigtes C₁-C₆-Alkoxyl ist.

15. Verfahren gemäß einem der Ansprüche 9 bis 14, **dadurch gekennzeichnet, dass** der olefinische Vorläufer Ep der Übertragung E mindestens einer der Formeln (**iep**), (**iiep**) und (**iiiep**), bzw. den Formeln (**ip**), (**iip**) und (**iiip**) entspricht, die in dem Anspruch 13 für Gfp angegeben wurden, außer mit dem Unterschied, dass R¹⁰, R¹¹ = oder ≠ sind und nur OH, verzweigtem oder linearem C₁-C₆-Alkoxyl entsprechen.

16. Reaktionszwischenprodukt (Synthon), das dafür geeignet ist, insbesondere in dem Verfahren gemäß den Ansprüchen 12, 13, 14 oder 15 eingesetzt werden kann, **dadurch gekennzeichnet, dass** es mindestens einer der folgenden Formeln entspricht :
**(i**_{**p**}**)** 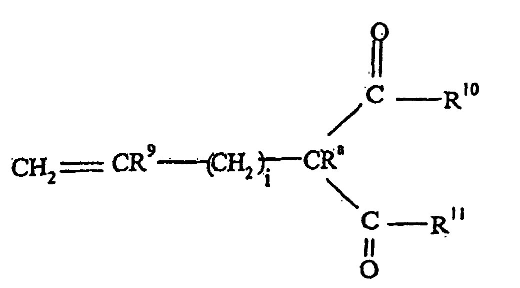 mit
o R^{a}, R⁹ unabhängig = H oder lineares oder verzweigtes C₁-C₆-Niederalkyl, bevorzugt CH₃;
o mindestens eines der Radikale R¹⁰, R¹¹ entspricht einem linearen oder verzweigten C₁-C₆-Alkoxyl, dem Methoxyl und Ethoxyl und dem Propyl;
**(ii**_{**p**}**)** 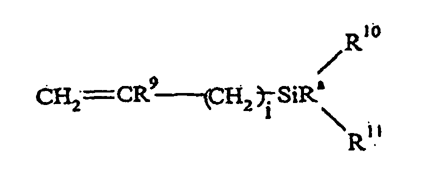 mit R⁹, R^{a}, R¹⁰, R¹¹ und i wie oben definiert;
**(iii**_{**p**}**)** 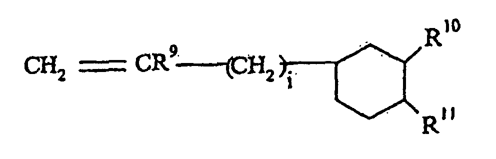 mit R⁹, R¹⁰, R¹¹ wie oben definiert; der Hexylring kann gegebenenfalls substituiert sein.

17. Wässrige Emulsion, **dadurch gekennzeichnet, dass** sie enthält:
- mindestens ein POS gemäß einem der Ansprüche 1 bis 8 oder erhalten durch das Verfahren gemäß einem der Ansprüche 9 bis 15;
- Wasser;
- und mindestens ein Tensid.

18. Verwendung eines POS gemäß einem der Ansprüche 1 bis 8 oder erhalten durch das Verfahren gemäß einem der Ansprüche 9 bis 15 für:
- ein Antischaummittel,
- ein Schmiermittel,
- ein Antihaftmittel,
- ein Oberflächenspannungssenker,
- einem Fäulnisschutzmittel,
- einem oleophoben und/oder hydrophoben Mittel,
- einem Ausgangsmaterial zur Herstellung von Elastomeren oder Schichten, die gegenüber chemischen Aggressionen uns Lösungsmitteln resistent sind.

19. Antifäulniszusammensetzung, **dadurch gekennzeichnet, dass** sie umfasst:
- mindestens eine POS gemäß einem der Ansprüche 1 bis 8 oder erhalten durch das Verfahren gemäß einem der Ansprüche 9 bis 15;
- und/oder mindestens einer Emulsion gemäß Anspruch 7,
- wobei das oder die obengenannten POS, das verwendet wird, bevorzugt POS sind, die Träger sind von:
* bifiden **Gf**-Übertragungen, die durch perfluorierte Radikale bifunktionalisiert sind, wie in Anspruch 5 definiert,
* andere E-Übertragungen, die andere Funktionen als die bi- oder monoperfluorierten Funktionen funktionalisiert sind, wie in Anspruch 7 definiert,
* und schließlich bifiden **Gf**-Übertragungen, die durch perfluorierte Radikale monofunktionalisiert sind, wobei auch diese in Anspruch 5 definiert sind.
